(19)

Europäisches Patentamt
European Patent Office
Office européen des brevets

(11) **EP 3 778 498 A1**

(12) **EUROPEAN PATENT APPLICATION**
published in accordance with Art. 153(4) EPC

(43) Date of publication:
**17.02.2021 Bulletin 2021/07**

(21) Application number: **19774762.9**

(22) Date of filing: **28.03.2019**

(51) Int Cl.:
*C02F 3/06* (2006.01)      *B01D 53/22* (2006.01)
*B01D 63/08* (2006.01)      *B01D 69/02* (2006.01)
*B01D 69/06* (2006.01)      *B01D 71/54* (2006.01)
*B01D 71/70* (2006.01)      *B32B 5/18* (2006.01)
*C02F 3/10* (2006.01)

(86) International application number:
**PCT/JP2019/013528**

(87) International publication number:
**WO 2019/189552 (03.10.2019 Gazette 2019/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.03.2018   JP 2018061863**
**05.09.2018   JP 2018166367**
**12.09.2018   JP 2018170486**
**18.09.2018   JP 2018173811**
**27.09.2018   JP 2018182561**

(71) Applicant: **SEKISUI CHEMICAL CO., LTD.**
**Osaka-shi**
**Osaka**
**530-8565 (JP)**

(72) Inventors:
• **ISHII, Yoshikazu**
**Kyoto-shi, Kyoto 601-8105 (JP)**
• **SATOU, Aoi**
**Kyoto-shi, Kyoto 601-8105 (JP)**
• **MATSUZAKA, Katsuo**
**Kyoto-shi, Kyoto 601-8105 (JP)**

(74) Representative: **Ter Meer Steinmeister & Partner Patentanwälte mbB**
**Nymphenburger Straße 4**
**80335 München (DE)**

(54) **SHEET LAMINATE, METHOD FOR MANUFACTURING GAS SUPPLY BODY, GAS SUPPLY BODY, SUPPLY BODY UNIT, AND WASTEWATER TREATMENT DEVICE**

(57)      Provided is a sheet laminate that enables the purification performance of a wastewater treatment apparatus to be maintained.

A sheet laminate 21 is used in a wastewater treatment apparatus for purifying wastewater using action of microorganisms in the wastewater. The sheet laminate 21 comprises a base material 211 and a gas-permeable non-porous layer 212, the base material 211 being a microporous membrane.

Fig. 4

## Description

Technical Field

The present invention relates to a sheet laminate for use in a wastewater treatment apparatus for purifying wastewater using action of microorganisms contained in the wastewater, a method for producing a bag for a gas supply body disposed in the wastewater treatment apparatus by using the sheet laminate, a gas supply body for water treatment, the gas supply body comprising the sheet laminate, a supply body unit comprising one or more of the gas supply bodies, and a wastewater treatment apparatus comprising the supply body unit.

Background Art

In recent years, wastewater treatment apparatuses have been developed that use the action of aerobic microorganisms to decompose organic matter in water to purify wastewater. For example, such a wastewater treatment apparatus uses a gas-permeable membrane that is permeable to gas and impermeable to liquid to supply oxygen to aerobic microorganisms contained in wastewater. Patent Literature (PTL) 1 and PTL 2 disclose examples of the gas-permeable membrane.

PTL 1 discloses a gas-permeable membrane formed only of a silicone resin and a gas-permeable membrane in which the surface of a fabric is coated with a silicone resin.

PTL 2 discloses a single-layer microporous membrane formed of a silicone-based material. The single-layer microporous membrane has fine pores with a diameter of less than about 0.5 micrometers.

Citation List

Patent Literature

PTL 1: JP3743771B
PTL 2: JP4680504B

Summary of Invention

Technical Problem

However, in the gas-permeable membrane formed only of a silicone resin disclosed in PTL 1, it is difficult to ensure the strength to withstand the tensile stress generated by water pressure. In the gas-permeable membrane in which the surface of a fabric is coated with a silicone resin, although the above problem can be avoided, defects are caused on the resin coating film by the unevenness of the fabric, making it difficult to maintain waterproofing. Moreover, thickening the resin coating film to maintain waterproofing impairs air permeability.

The single-layer microporous membrane disclosed in PTL 2 cannot maintain waterproofing because the pores of the single-layer microporous membrane become hydrophilic with long-term use.

The present invention has been accomplished to solve the above problems. An object of the present invention is to provide a sheet laminate for use in a wastewater treatment apparatus for purifying wastewater using the action of microorganisms contained in the wastewater or retained on the surface of the laminate, the sheet laminate enabling the purification performance of the wastewater treatment apparatus to be maintained. Another object of the present invention is to provide a method for producing a bag for a gas supply body disposed in a wastewater treatment apparatus by using the sheet laminate, a gas supply body for water treatment, the gas supply body comprising the sheet laminate, a supply body unit comprising one or more of the gas supply bodies, and a wastewater treatment apparatus comprising the supply body unit.

Solution to Problem

To achieve the above objects, the present invention includes the main subjects described in the following items.

Item 1. A sheet laminate for use in a wastewater treatment apparatus for purifying wastewater using action of microorganisms in the wastewater, the sheet laminate comprising:

a base material; and
a gas-permeable non-porous layer,
the base material being a microporous membrane.

Item 2. The sheet laminate according to Item 1, further comprising a microbial support layer.
Item 3. The sheet laminate according to Item 2, wherein
the gas-permeable non-porous layer has adhesiveness,
the microbial support layer, the gas-permeable non-porous layer, and the base material are laminated in this order from a side that comes into contact with wastewater, and
the microbial support layer is formed on a surface of the gas-permeable non-porous layer having adhesiveness that comes into contact with wastewater.
Item 4. The sheet laminate according to Item 2 or 3, wherein the sheet laminate has a microbial adhesion index MA of 0.08 or more, the microbial adhesion index MA being calculated from the following equation (1):

$$\text{Equation (1): } MA = W \times Q^{2.8} \times 10^{-6},$$

where W is the basis weight ($g/m^2$) of the microbial support layer, and Q is oxygen permeability ($g/(m^2 \cdot d)$).
Item 5. The sheet laminate according to any one of Items 2 to 4, wherein the thickness of a biofilm is 1 mm or more and 5 mm or less when measured under the following biofilm evaluation conditions:
Biofilm Evaluation Conditions

(1) a sealed cubic evaluation vessel having an internal dimension of 7 cm and the sheet laminate positioned at one of its vertical side surfaces is filled with organic matter-containing water;
(2) the organic matter-containing water has the following composition: soluble starch: 0.8 g/L, peptone: 0.084 g/L, yeast extract: 0.4 g/L, urea: 0.052 g/L, $CaCl_2$: 0.055 g/L, $KH_2PO_4$: 0.017 g/L, $MgSO_4 \cdot 7H_2O$: 0.001 g/L, KCl: 0.07 g/L, $NaHCO_3$: 0.029 g/L, solvent: tap water;
(3) 5 g of paddy soil, which is soil containing microorganisms responsible for decomposition of organic matter, is added, the evaluation vessel is placed in a constant-temperature chamber maintained at $30 \pm 2°C$, and all the liquid in the evaluation vessel is discharged every 3.5 days under the condition of continuous stirring with a stirrer;
(4) after an operation of replacing the organic matter-containing water is continued for 28 days, the evaluation vessel is filled with the organic matter-containing water (point in time Ta), and the sheet laminate after 3 days (point in time Tb) is taken out, wherein the mass of paddy soil is defined as the mass after an aqueous dispersion of paddy soil is centrifuged and the supernatant is discarded.

Item 6. The sheet laminate according to any one of Items 1 to 5, wherein the gas-permeable non-porous layer has a basis weight of 10 $g/m^2$ or more.
Item 7. The sheet laminate according to any one of Items 1 to 6, wherein the gas-permeable non-porous layer is formed from one or more members selected from the group consisting of urethane resins and silicone resins.
Item 8. The sheet laminate according to any one of Items 1 to 7,
wherein

the sheet laminate is for supplying oxygen into a liquid by allowing oxygen supplied to the inside to permeate to the outside with the laminate immersed in the liquid so that its outermost layer is in contact with the liquid, and
the oxygen supply performance to the liquid calculated by a method shown in the following oxygen supply test is 25 $g/m^2$ or more:

Oxygen Supply Test
an oxygen concentration measurement test is performed by pouring ion-exchanged water containing the following (a) into a sealed cubic vessel having a side length of 7 cm, with one of its vertical side surfaces being composed of the sheet laminate, and then continuously measuring the oxygen concentration in the sealed vessel while stirring the ion-exchanged water by rotation of a stirring bar for a stirrer, and the oxygen supply performance is calculated based on time-series data on the oxygen concentration measured in the oxygen concentration measurement test;

(a) sodium sulfite added at a concentration of 100 mg/L, and anhydrous cobalt(II) chloride added at a concentration of 4 mg/L or more.

Item 9. The sheet laminate according to any one of Items 1 to 8, wherein

the sheet laminate is for supplying oxygen into a liquid by allowing oxygen supplied to the inside to permeate to the outside with the laminate immersed in the liquid so that its outermost layer is in contact with the liquid, and the short-term withstanding pressure in the sheet laminate is 0.2 MPa or more.

Item 10. The sheet laminate according to any one of Items 1 to 9, wherein

the sheet laminate is for supplying oxygen into wastewater, and
the number of through holes in a plate material through which water passes is 50 or less under the following water permeation measurement conditions:

Water Permeation Measurement Conditions
a water pressure application test is performed by applying a water pressure of 0.02 MPa or more and 1 MPa or less to the sheet laminate for 50 days in a state in which the sheet laminate faces a plate material with 813 through holes each having a diameter of 3 mm formed in a grid pattern with a pitch of 4 mm, and the number of through holes through which water passes is measured.

Item 11. A method for producing a bag for a gas supply body disposed in a wastewater treatment apparatus by using the sheet laminate according to any one of Items 1 to 10, the method comprising heat-sealing the base material or base materials of one or more of the sheet laminates to produce a bag, thereby obtaining the bag, the base material or base materials being formed from a thermoplastic resin.

Item 12. A gas supply body for water treatment, comprising a gas delivery layer and the sheet laminate according to any one of Items 1 to 10, which comprises one or more gas-permeable non-porous layers.

Item 13. The gas supply body according to Item 12, wherein the leakage parameter X expressed by the following equation (2) is 1.9 or more when the gas supply body is immersed to an effective sheet height H (m),

$$X = E / (P \times A) \qquad \text{Equation (2)}$$

E: elasticity parameter (N/10 mm) of gas-permeable water-impermeable layer,
P: water pressure (kPa) applied to sheet, which is expressed by relationship $P = 10 \times H$, where H (m) is effective sheet height,
A: diameter (mm) of vent holes on surface of gas delivery layer.

Item 14. A supply body unit comprising one or more gas supply bodies according to Item 12 or 13.

Item 15. A wastewater treatment apparatus comprising the supply body unit according to Item 14.

Advantageous Effects of Invention

According to the present invention, a sheet laminate comprising a base material that is a microporous membrane and a gas-permeable non-porous layer enables the purification performance of a wastewater treatment apparatus to be maintained.

Brief Description of Drawings

Fig. 1 is a vertical cross-sectional view showing a wastewater treatment apparatus according to Embodiment 1 of the present invention.
Fig. 2 is a horizontal cross-sectional view showing the wastewater treatment apparatus according to Embodiment 1 of the present invention.
Fig. 3 is a vertical cross-sectional view showing the wastewater treatment apparatus according to Embodiment 1 of the present invention, orthogonal to the cross section of Fig. 1.
Fig. 4 is a vertical cross-sectional view showing a gas supply body disposed in the wastewater treatment apparatus.

Fig. 5 is a perspective view showing a gas delivery layer constituting the gas supply body of Fig. 4.

Fig. 6 is a schematic diagram showing microbial aggregates formed on the surface of a sheet laminate of a gas supply body immersed in wastewater in a wastewater treatment tank of the wastewater treatment apparatus of Fig. 1, and decomposition of at least one organic substance or nitrogen source by microorganisms.

Fig. 7 is a flowchart showing the flow of a method for producing the gas supply body of Fig. 4.

Fig. 8 is a schematic diagram showing the process of forming a gas-permeable water-impermeable layer constituting the gas supply body of Fig. 4 into a bag.

Fig. 9 is a schematic diagram showing the process of inserting a hollow plate-shaped component (corrugated cardboard material) through the opening of the bag-shaped gas-permeable water-impermeable layer of Fig. 8.

Fig. 10 is a cross-sectional view showing the configuration of a gas supply body according to Embodiment 2 of the present invention.

Fig. 11 is an enlarged view of portion A of Fig. 10.

Fig. 12 is an exploded perspective view showing the configuration of a gas delivery layer included in the gas supply body according to the present invention.

Fig. 13 is a perspective view showing a gas delivery layer included in the gas supply body according to the present invention.

Fig. 14 is a vertical cross-sectional view showing a gas supply body according to Embodiment 3.

Fig. 15 shows photographs of sheet laminates of Examples and Comparative Examples after biofilm formation evaluation.

Fig. 16 is a graph showing changes over time in the organic matter removal rate of each of the Examples and the Comparative Examples.

Fig. 17 is a plan view of a measuring device used in the water pressure measurement test of Embodiment 5.

Fig. 18 is a side view of the measuring device used in the water pressure measurement test of Embodiment 5.

Fig. 19 is a cross-sectional view showing an assembled state of the measuring device used in the water pressure measurement test of Embodiment 5.

Fig. 20 is a cross-sectional view showing a disassembled state of the measuring device used in the water pressure measurement test of Embodiment 5.

Fig. 21 is a photograph of a plate material provided in the measuring device according to Embodiment 5.

Fig. 22 is a cross-sectional view showing another example of an assembled state of the measuring device used in the water pressure measurement test of Embodiment 5.

Fig. 23 is a photograph showing the state of the plate material and sponge when the measurement process is performed in Embodiment 5.

Fig. 24 is a schematic view showing a gas supply body according to Embodiment 6.

Description of Embodiments

Embodiment 1

According to Embodiment 1 of the present invention, a sheet laminate, a gas supply body comprising the sheet laminate, and a wastewater treatment apparatus in which the gas supply bodies are disposed are described below with reference to drawings.

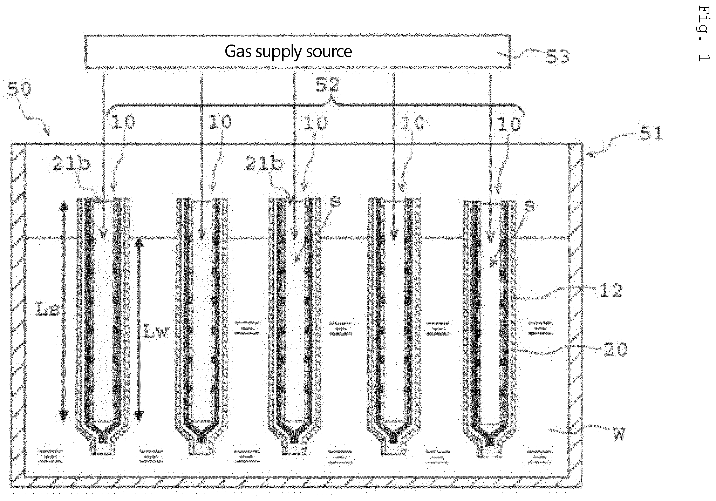

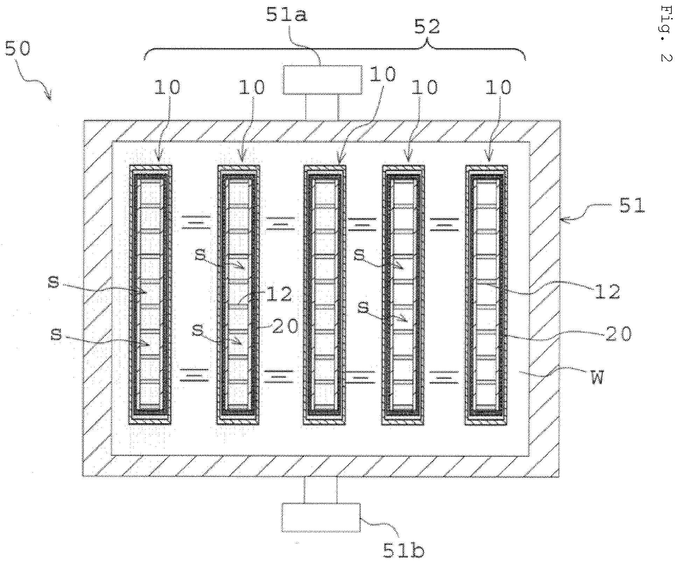

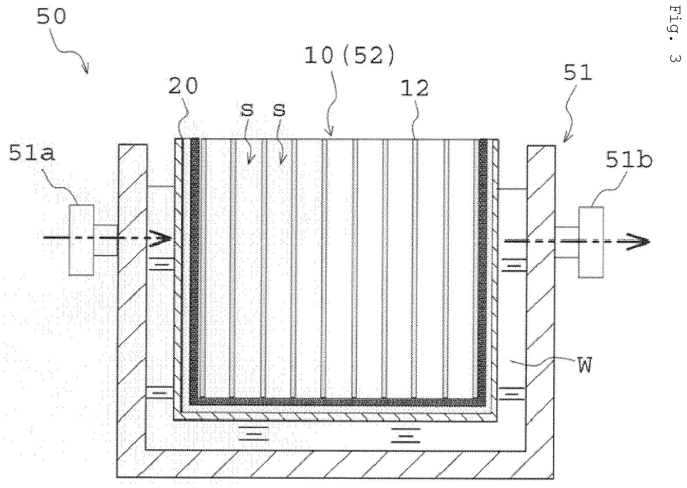

Fig. 1 is a vertical cross-sectional view showing a wastewater treatment apparatus 50 according to Embodiment 1 of the present invention. Fig. 2 is a horizontal cross-sectional view showing the wastewater treatment apparatus 50. Fig. 3 is a vertical cross-sectional view showing the wastewater treatment apparatus 50, orthogonal to the cross section of Fig. 1.

Wastewater Treatment Apparatus 50

The wastewater treatment apparatus 50 of this embodiment uses action of aerobic microorganisms contained in wastewater W to decompose at least one organic substance or nitrogen source in the wastewater W to purify the wastewater W. As shown in Figs. 1 to 3, the wastewater treatment apparatus 50 comprises a wastewater treatment tank 51, a supply body unit 52, and a gas supply source 53 (see Fig. 1).

Wastewater Treatment Tank 51

As shown in Figs. 1 to 3, the wastewater treatment tank 51 is a container with a bottom in which wastewater W is stored, and an inlet 51a and an outlet 51b are provided on the opposing side surfaces of the tank.

In this embodiment, the inlet 51a and the outlet 51b are always open. The wastewater W is continuously or intermittently supplied from the inlet 51a to the outlet 51b disposed at a position facing the inlet 51a (arrows in Fig. 3 showing the flow of the wastewater W).

The volume of the wastewater treatment tank 51 is not particularly limited, and may be, for example, 1 $m^3$ or more and 10,000 $m^3$ or less.

Supply Body Unit 52

As shown in Fig. 1, the supply body unit 52 comprises gas supply bodies 10 and is disposed inside the wastewater treatment tank 51. In the illustrated example, the supply body unit 52 is composed of multiple gas supply bodies 10 arranged in parallel. The supply body unit 52 is disposed so that each gas supply body 10 is immersed in the wastewater W except for the upper end portion when in use.

Gas Supply Body 10

Each gas supply body 10 that constitutes the supply body unit 52 serves as a structure that supplies gas supplied from an opening 21b to the wastewater W while being immersed in the wastewater W in the wastewater treatment tank 51. The gas supplied to the wastewater W via the gas supply body 10 preferably contains oxygen to promote activation of aerobic microorganisms in the wastewater W. Specifically, the gas may be air or pure oxygen. In the illustrated examples, the gas from the gas supply source 53 is supplied to the openings 21b. An air supply device or the like can be used as the gas supply source 53. From the viewpoint of reducing manufacturing costs, the air in the atmosphere may be directly introduced into the gas supply bodies 10 from the openings 21b without using the gas supply source 53.

As shown in Fig. 2 and Fig. 3, each gas supply body 10 is a plate-shaped component and is disposed so that its surface extends in the vertical direction (depth direction) and the lateral direction (horizontal direction). In this manner, the contact area with the wastewater W is efficiently provided. Further, the gas supply bodies 10 are disposed so that the side surfaces of each gas supply body 10 are parallel to a straight line connecting the inlet 51a and the outlet 51b; thus, the wastewater W supplied from the inlet 51a into the wastewater treatment tank 51 flows smoothly toward the outlet 51b. The number of gas supply bodies 10 that constitute the supply body unit 52 can be one, and is not necessarily multiple.

The distance between the gas supply bodies 10 is preferably 5 mm or more and 200 mm or less when it is defined as "a distance between the outer surfaces of two adjacent gas supply bodies 10 excluding the thickness of the gas supply body 10." If the distance between the gas supply bodies 10 is less than 5 mm, there is a risk of clogging due to microorganisms growing on a sheet laminate 21. If the distance between the gas supply bodies 10 exceeds 200 mm, the contact efficiency with wastewater may worsen, possibly making it difficult to improve wastewater treatment performance. To reliably avoid these problems, the distance between the gas supply bodies 10 is more preferably 15 mm or more and 50 mm or less.

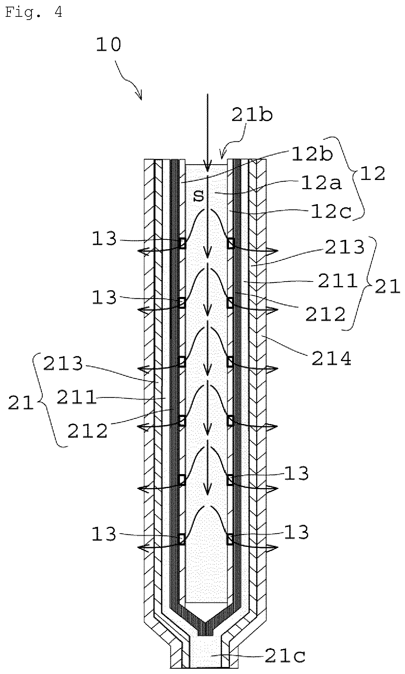

Fig. 4 is a vertical cross-sectional view of the gas supply body 10. As shown in Fig. 4, the gas supply body 10 comprises a gas delivery layer 12 and sheet laminates 21. The gas delivery layer 12 is disposed inside a bag composed of the sheet laminates 21. The bag is obtained by stacking two sheet laminates 21, 21, and bonding together the end portions at three sides of the sheet laminates 21, 21. The bag has an opening 21b at the upper end portion (the end portion of the gas delivery layer 12 on the side at which gas is supplied) (see Fig. 4). The gas delivery layer 12 is inserted into the bag from the opening 21b, whereby the outer periphery of the gas delivery layer 12 is covered with the sheet laminate 21. The position or shape of the opening 21b is not limited. For example, an opening may be formed at part of each end portion (including the upper side, bottom side, and lateral side (vertical line) of the bag).

Gas Delivery Layer 12

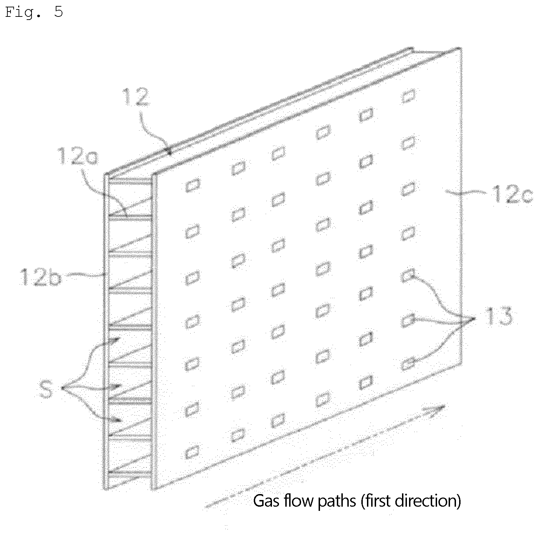

Fig. 5 is a perspective view showing a gas delivery layer 12. The gas delivery layer 12 is a hollow plate-shaped component and is made of paper, a resin, or a metal. The gas delivery layer 12 is a structure having gas flow paths S for delivering gas supplied from the first end side along the first direction. The gas from the gas supply source 53 (Fig. 1) or air near the opening 21b is supplied to the upper end portion of the gas delivery layer 12 (the end portion of the gas supply layer 12 on the side at which gas is supplied) via the opening 21b (Fig. 4). The gas delivery layer 12 includes gas flow paths S that deliver the gas supplied to the upper end portion in the first direction (see the double-dashed chain line in Fig. 5), and discharges the gas from gas passage holes 13 on the side surfaces.

More specifically, as shown in Fig. 5, the gas delivery layer 12 comprises a plurality of core materials 12a, a face liner 12b, and a back liner 12c. The front and back surfaces of the gas delivery layer 12 are composed of the face liner 12b and the back liner 12c, which are plate-shaped components.

Each of the plurality of core materials 12a extends in the first direction and is arranged at a predetermined interval in a direction orthogonal to the first direction. The plurality of core materials 12a are sandwiched between the face liner 12b and the back liner 12c, whereby a plurality of the gas flow paths S divided by the core materials 12a are provided in the space between the face liner 12b and the back liner 12c.

Further, each core material 12a functions as a support component that supports the space between the face liner 12b and the back liner 12c so as not to reduce space when pressure is applied from the side of the face liner 12b and/or the side of the back liner 12c. When the gas supply bodies 10 are immersed in the wastewater W as shown in Figs. 1 to 3, the core materials 12a maintain the space between the face liner 12b and the back liner 12c so that the cross section of each gas flow path S is not reduced by water pressure. In this manner, a sufficient amount of gas is delivered in the gas delivery layer 12 (gas flow paths S).

The face liner 12b and the back liner 12c both have a plurality of the gas passage holes 13. The gas passage holes 13 are through holes formed in the face liner 12b and the back liner 12c. The gas passage holes 13 connect the gas flow paths S and the sheet laminates 21 to allow the gas flowing through the gas flow paths S to be supplied to a liquid via the sheet laminate 21.

For example, the gas passage holes 13 are formed when the gas delivery layer 12 is produced. Alternatively, after the gas delivery layer 12 is produced, the gas passage holes 13 may be formed by subjecting the face liner 12b and the back liner 12c to processing. It is also possible to use a porous sheet as the face liner and the back liner. As long as sufficient performance for supplying gas is obtained, a porous sheet may be used as the gas delivery layer.

Examples of the material of each component constituting the gas delivery layer 12 include paper, ceramic, aluminum, iron, plastic (polyolefin resin, polystyrene resin, polyester resin, polyvinyl chloride resin, acrylic resin, urethane resin, epoxy resin, polyamide resin, methyl cellulose resin, ethyl cellulose resin, polyvinyl alcohol resin, vinyl acetate resin, phenol resin, fluorine resin, and polyvinyl butyral resin), and the like.

From the viewpoint of excellent strength, the material of the gas delivery layer 12 is preferably paper, aluminum, iron, polyolefin resin, polystyrene resin, vinyl chloride resin, or polyester resin.

From the viewpoint of reducing the material cost, the material of the gas delivery layer 12 is preferably, for example, paper, a resin, such as polyolefin, polystyrene, vinyl chloride, or polyester, or a metal, such as aluminum. The material cost for the gas delivery layer 12 can otherwise be reduced by forming the gas delivery layer 12 by using corrugated cardboard so that the gas flow paths S extend in the first direction (see the double-dashed chain line in Fig. 5).

The gas-permeable holes of the gas delivery layer 12 can have various shapes, such as circular and polygonal (including a honeycomb structure). The shape of the holes is not particularly limited and is preferably polygonal. More specifically, the shape is preferably rectangular or square.

To maintain the activity of aerobic microorganisms, it is preferable to maintain the oxygen concentration inside the gas delivery layer 12. For example, the oxygen concentration can be maintained at a constant level by supplying a predetermined amount of pure oxygen. Examples of the method for supplying pure oxygen include air supply using power.

The length in the vertical direction of each gas flow path S of the gas delivery layer 12 (the depth direction when immersed) may be, for example, 0.2 m or more, and preferably 0.8 m or more. The length may also be 3.7 m or more. The length may be, for example, 6 m or less, and preferably 4 m or less. The length of each gas flow path S in the lateral direction orthogonal to the vertical direction may be, for example, 0.2 m or more and preferably 0.4 m or more. For example, the length may be 3.6 m or less and preferably 1.8 m or less.

The vertical length of each gas flow path S is preferably equal to or more than the above lower limit to easily maintain the gas flow path S and to easily ventilate the gas flow path S to thus improve the ability to treat wastewater. The vertical length of each gas flow path S is preferably equal to or less than the above upper limit to further improve wastewater treatment performance based on ventilation of the gas flow paths S and to achieve easy installation.

The lateral length of each gas flow path S is preferably equal to or more than the above lower limit to efficiently provide an area for coming into contact with the wastewater W and to improve the wastewater treatment efficiency. Further, the lateral length of each gas flow path S is preferably equal to or less than the above upper limit to easily maintain the strength of the entire gas supply body 10 and to achieve easy installation of the supply body unit 52.

The ratio of the water contact length Lw for coming into contact with the wastewater W to the length Ls of the gas flow path S may be, for example, 80% or more and 95% or less (see Fig. 1 for the lengths Ls and Lw). The ratio of the water contact length Lw to the length Ls is preferably equal to or more than the above lower limit to allow a sufficient amount of oxygen to be supplied from the gas flow paths S and to improve the efficiency of wastewater treatment. The ratio of the water contact length Lw to the length Ls is preferably equal to or less than the above upper limit to prevent the wastewater W from entering the gas flow paths S.

Alternatively, to prevent the wastewater W from entering the gas flow paths S, the water contact length Lw may be set so that the water surface of the wastewater W is 2 cm or more away from the opening 21b of each gas supply body 10 (sheet laminate 21).

Sheet Laminate 21

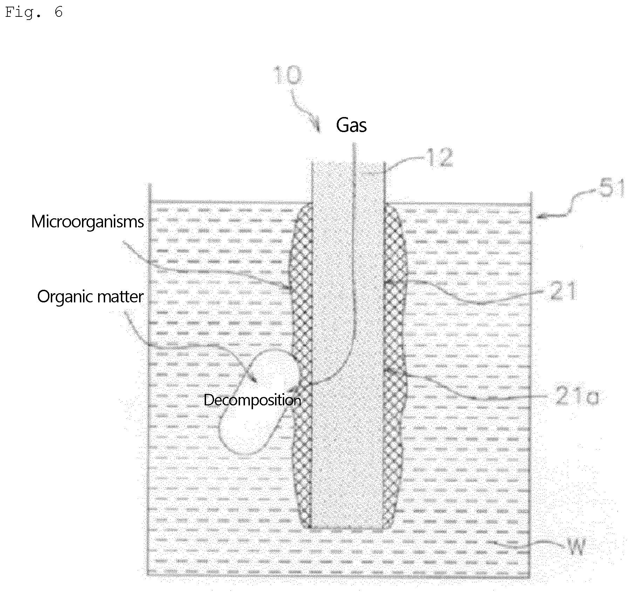

In a state in which the sheet laminate 21 is immersed in a liquid (wastewater) so that the outermost layer is in contact with the liquid (wastewater), oxygen supplied to the inside of the sheet laminate 21 (on the gas delivery layer 12 side) is allowed to permeate to the outside to thus supply oxygen to the liquid (wastewater). In a state in which the gas supply bodies 10 are immersed in the wastewater treatment tank 51, the sheet laminate 21 has the characteristic that air is allowed to permeate from the inside (the gas delivery layer 12) to the outside (the wastewater W) while the wastewater is not allowed to permeate from the outside (the wastewater W) to the inside (the gas delivery layer 12). This allows aerobic microorganisms in the wastewater W to gather on a surface 21a of the sheet laminate 21 to which air (oxygen) is continuously supplied, as shown in Fig. 6. Accordingly, microorganisms adhere to the surface 21a of the sheet laminate 21 to thus form a biofilm 214. Then, fine solid organic matter or nitrogen compounds dissolved or dispersed in the wastewater W are decomposed by the action of microorganisms contained in the wastewater W or retained on the surface 21a to purify the wastewater.

More specifically, as shown in Fig. 4, the sheet laminate 21 comprises a base material 211, a gas-permeable non-porous layer 212, and a microbial support layer 213. In the illustrated example, the sheet laminate 21 is laminated with the microbial support layer 213, the base material 211, and the gas-permeable non-porous layer 212, in this order. The base material 211 is covered with the gas-permeable non-porous layer 212, while the microbial support layer 213 serves as the outermost layer that comes into contact with the wastewater W. Unlike in the illustrated example, the sheet laminate 21 may be laminated with the base material 211, the gas-permeable non-porous layer 212, and the microbial support layer 213, in this order. (Contrary to the illustrated example, the base material 211 may be positioned inside the gas-permeable non-porous layer 212). In this configuration as well, the base material 211 can be covered with the gas-permeable non-porous layer 212, and the microbial support layer 213 can serve as the outermost layer that comes into contact with the wastewater W.

Base Material 211

The base material 211 is a microporous membrane formed of a thermoplastic resin. The microporous membrane has a large number of fine through holes. Examples of the material of the base material 211 include polyolefin; polystyrene; polysulfone; polyether sulfone; polyaryl sulfone; polymethylpentene; polytetrafluoroethylene; fluorine resins, such as polyvinylidene fluoride; polybutadiene; silicone-based polymers, such as poly(dimethylsiloxane); copolymers obtained from the materials of these polymers; and other polymers.

The production method for the base material 211, which is a microporous membrane, is not particularly limited. For example, the base material 211 can be produced by a phase separation method, a stretching-opening method, a dissolution-recrystallization method, a powder sintering method, a foaming method, or solvent extraction. The base material 211 may also be a self-assembled honeycomb microporous membrane.

The base material 211 preferably has a thickness of 10 $\mu$m to 500 $\mu$m, and more preferably 50 $\mu$m to 200 $\mu$m. The thickness of the base material 211 is a value measured in accordance with the measurement method disclosed in the "6.1 Thickness" section in "Test methods for nonwovens" of JIS 1913: 2010.

The base material 211 preferably has a pore size of 0.01 $\mu$m to 50 $\mu$m from the viewpoint of preventing defects in the gas-permeable non-porous layer, and more preferably 0.1 $\mu$m to 30 $\mu$m from the viewpoint of maintaining a high degree of strength and gas permeability. The pore size is determined by observing the surface with a scanning electron microscope (SEM) and using the resulting observed images according to the following method. The observation can be performed at any magnification as long as the pore size of the object to be observed can be appropriately calculated.

Method for Determining Pore Size

The images obtained by SEM observation are binarized, and the pore size is calculated based on image analysis. In calculation, each pore shape is approximated to an ellipse, and the length of the major axis of each ellipse is taken as the pore size. Then, the average value is evaluated.

Alternatively, the pore size of the base material 211 is defined as an average pore size determined based on pore size distribution measurement by the capillary condensation method (permporometry). In permporometry, the relation is determined between the volume flow rate of permeated gas and the differential pressure between atmospheric pressure and measurement pressure, based on the volume flow rate of permeated gas measured while gradually increasing the pressure of gas applied to the sample. To determine the pore size, a wet curve measured on a wet sample obtained by immersing the sample in a wetting liquid having a known surface tension, and a dry curve measured on a dried sample are obtained. By gradually increasing the pressure within a predetermined pressure range, it is possible to obtain information on the through-pore size in the sample. The average pore size is obtained by determining the point X at which the wet curve intersects with a curve with a half slope of the dry curve (half-dry curve), and substituting this into the equation d=2860×γ/DP. In this equation, d represents an average pore size (mm), γ represents the surface tension (dynes/cm) of a wetting liquid, and DP represents the differential pressure (Pa) between atmospheric pressure and gas pressure at point X. The measurement can be performed by using a permporometer (CFP-1500-AEC) produced by Porous Materials. For example, the measurement can be performed under the following test conditions; i.e., test temperature: room temperature (20°C±5°C), wetting liquid: Galwick (surface tension: 15.7 dynes/cm), pressurized gas: compressed air, diameter of sample used: 33 mm, maximum supply pressure: 250 psi, and differential pressure increase rate: 4 psi/min. A wet sample in which the sample is sufficiently wet can be prepared by placing a wetting liquid in which the sample is immersed in a desiccator, followed by deaeration.

Gas-permeable Non-porous Layer 212

The gas-permeable non-porous layer 212 is gas permeable and has pores with a pore size smaller than that of the pores of the base material or with a pore size that is undetectable. The pore size of the gas-permeable non-porous layer 212 can be measured by the same method as the pore size of the base material 211.

Examples of the gas that permeates the gas-permeable non-porous layer 212 include oxygen, carbon dioxide, nitrogen, hydrogen, alcohol, such as methanol and ethanol, organic solvents, and mixed gases thereof. From the viewpoint of effectively growing and activating microorganisms, the gas is preferably oxygen or a mixed gas containing oxygen. The gas permeability can be measured by the method specified in JIS K 7126.

The gas-permeable non-porous layer 212 may comprise a thermoplastic resin or a thermosetting resin. The thermosetting resin may be a resin that is cured by heating or a resin that is cured by irradiation with UV rays. The resin may also be a resin that is cured by organic peroxide crosslinking, addition reaction crosslinking, or condensation crosslinking.

The material of the gas-permeable non-porous layer 212 may include thermosetting polymers selected from polyolefin, polystyrene, polysulfone, polyethersulfone polytetrafluoroethylene, acrylic resin, polyurethane resin, and copolymers obtained from the materials of these polymers. It is also possible to use a silicone-based silicone resin, such as poly(dimethylsiloxane) with a siloxane skeleton (Si-O-Si)n (n = an integer). Among these, it is particularly preferable to use urethane resin or silicone resin.

The polyurethane resin may be Asaflex 825 (produced by Asahi Kasei Corporation), Pellethane 2363-80A, Pellethane 2363-80AE, Pellethane 2363-90A, and Pellethane 2363-90AE (all produced by The Dow Chemical Company), and HI-MUREN Y-237NS (produced by Dainichiseika Color & Chemicals Mfg. Co., Ltd.).

The formulations and compositions of silicone-based resin and silicone polymer, and the formulations and compositions of silicone-based resin compositions for obtaining these, are not particularly limited. The monomer used for the silicone-based resin composition may contain one functional group, two functional groups, three functional groups, or four functional groups. These monomers may be used alone, or in a combination of two or more. The monomer may also be halogenated alkylsilane, unsaturated group-containing silane, aminosilane, mercaptosilane, epoxysilane, or the like. Examples of usable monomers include those represented by the following chemical formulas: $HSiCl_3$, $SiCl_4$, $MeSiHCl_2$, $Me_3SiCl$, $MeSiCl_3$, $Me_2SiCl_2$, $Me_2HSiCl$, $PhSiCl_3$, $Ph_2SiCl_2$, $MePhSiCl_2$, $Ph_2MeSiCl$, $CH_2=CHSiCl_3$, $Me(CH_2=CH)SiCl_2$, $Me_2(CH_2=CH)SiCl$, $(CF_3CH_2CH_2)MeSiCl_2$, $(CF_3CH_2CH_2)SiCl_3$, and $CH_{18}H_{37}SiCl_3$ (in the chemical formulas, "=" represents a double bond, "Me" represents a methyl group, and "Ph" represents a phenyl group). These monomers may be used alone, or in a combination of two or more. Examples of other usable organic groups include alkyl groups, such as propyl, isopropyl, butyl, isobutyl, tert-butyl, hexyl, octyl, and decyl; aryl groups, such as phenyl, tolyl, xylyl, and naphthyl; cycloalkyl groups, such as cyclopentyl and cyclohexyl; aralkyl groups, such as benzyl, 2-phenylethyl, and 3-phenylpropyl; and the like. Among these, methyl, phenyl, or a combination of these is preferable. A component comprising methyl, phenyl, or a combination of methyl and phenyl is easily synthesized and has excellent chemical stability. When a polyorganosiloxane with particularly excellent solvent resistance is used, methyl, phenyl, or a combination of methyl and phenyl is preferably used in combination with 3,3,3-trifluoropropyl. Further, the silicone-based resin composition may comprise organoalkoxysilane. Examples of organoalkoxysilane include compounds represented by the following chemical formulas, which may be used alone, or in a combination of two or more: $Me_3SiOCH_3$, $Me_2Si(OCH_3)_2$, $MeSi(OCH_3)_3$, $Si(OCH_3)_4$, $Me(C_2H_5)Si(OCH_3)_2$, $C_2H_5Si(OCH_3)_3$, $C_{10}H_{21}Si(OCH_3)_3$, $PhSi(OCH_3)_3$, $Ph_2Si(OCH_3)_2$, $MeSiOC_2H_5$, $Me_2Si(OC_2H_5)_2$, $Si(OC_2H_5)_4$, $C_2H_5Si(OC_2H_5)_3$, $PhSi(OC_2H_5)_3$, and $Ph_2Si(OC_2H_5)_2$.

Further, the silicone-based resin composition may further comprise organosilanol. Examples of organosilanol include compounds represented by the following chemical formulas, which may be used alone, or in a combination of two or more: $Me_3SiOH$, $Me_2Si(OH)_2$, $MePhSi(OH)_2$, $(C_2H_5)_3SiOH$, $Ph_2Si(OH)_2$, and $Ph_3SiOH$.

In a reaction method for obtaining a silicone polymer used for silicone-based resin, for example, a process such as hydrolysis of chlorosilane or ring-opening polymerization of cyclic dimethylsiloxane oligomers may be performed. Examples of usable polymers include dimethyl group-containing polymers, methylvinyl group-containing polymers, methylphenylvinyl group-containing polymers, methylfluoroalkyl group-containing polymers, and the like.

A method for curing a silicone polymer, that is, a method for obtaining a silicone-based resin by reaction (vulcanization) is not particularly limited. Heat vulcanization or room temperature vulcanization may be applicable. For use in the reaction, a millable silicone-based resin composition or a liquid rubber silicone-based resin composition may be used. The polymer used for the millable silicone-based resin composition preferably has a polymerization degree of about 4000 to 10000. Those of one component or two components may be used. Examples of the reactions include dehydration condensation reaction of silanol groups (Si-OH), condensation reaction of a silanol group and a hydrolyzable group, reaction of methylsilyl (Si-CH$_3$) or vinylsilyl (Si-CH=CH$_2$) with organic peroxide, addition reaction of vinylsilyl and hydrosilyl (Si-H), reaction by UV rays, reaction by an electron beam, and the like.

Dehydration Condensation Reaction of Silanol Groups

A catalyst, such as zinc octylate, iron octylate, an organic acid salt of cobalt, tin, or the like, or an amine-based catalyst, may be used. The reaction may be allowed to proceed by heating.

Condensation Reaction of Silanol Group and Hydrolyzable Group

As a catalyst, it is possible to add an acid, an alkali, an organic tin compound, an organic titanium compound, or the like. The hydrolyzable group may be alkoxy, acetoxy, oxime, aminoxy, propenoxy, or the like.

Reaction of Methylsilyl or Vinylsilyl with Organic Peroxide

As a peroxide curing agent that accelerates reactions, it is possible to add an organic peroxide, an acyl-based organic peroxide, an alkyl-based organic peroxide, or the like. Examples of usable acyl-based organic peroxides include p-methylbenzoyl peroxide and the like. Examples of usable alkyl-based organic peroxides include 2,5-dimethyl-2,5 bis(t-butylperoxy)hexane, dicumyl peroxide, and the like. The reaction temperature is, for example, 120°C or higher. Secondary vulcanization (post cure) may also be performed. The amount of the peroxide curing agent added is preferably 0.1 to 10 mass% based on the solids content of the resin.

Addition Reaction of Alkenyl and Hydrosilyl

For example, a vinyl group is preferably used as an alkenyl group. The reaction may be performed at an ordinary temperature or with heating. The reaction may be performed in an open system or a closed system. In the process of obtaining a composition used for the addition reaction of alkenyl and hydrosilyl, it is possible to add an additive for removing organic compounds containing nitrogen, phosphorus, sulfur, etc., ionic compounds of metals, such as tin and lead, compounds containing an unsaturated group, such as acetylene, alcohol, water, and carboxylic acid. Alternatively, it is possible to perform a step of removing these substances.

In the addition reaction of alkenyl and hydrosilyl, vinyl group-containing polysiloxane or hydrogen polysiloxane is preferably used.

The vinyl group-containing polysiloxane is preferably a linear polysiloxane having a viscosity of 1 to 100000 mPa•s at 23°C. This polysiloxane contains one or more vinyl groups in one molecule. Specific examples of the vinyl group-containing polysiloxane include dimethylsiloxane-methylvinylsiloxane copolymers capped with trimethylsiloxy groups at both molecular chain ends, methylvinylpolysiloxane capped with trimethylsiloxy groups at both molecular chain ends, dimethylsiloxane-methylvinylsiloxane-methylphenylsiloxane copolymers capped with trimethylsiloxy groups at both molecular chain ends, dimethylpolysiloxane capped with dimethylvinylsiloxy groups at both molecular chain ends, methylvinylpolysiloxane capped with dimethylvinylsiloxy groups at both molecular chain ends, dimethylsiloxane-methylvinylsiloxane copolymers capped with dimethylvinylsiloxy groups at both molecular chain ends, dimethylsiloxane-methylvinylsiloxane-methylphenylsiloxane copolymers capped with dimethylvinylsiloxy groups at both molecular chain ends, dimethylpolysiloxane capped with trivinylsiloxy groups at both molecular chain ends, and the like. These polysiloxanes may be used alone, or in a combination of two or more.

The hydrogen polysiloxane is preferably a linear polysiloxane having a viscosity of 1 to 100000 mPa•s at 23°C. A hydrogen polysiloxane contains at least one hydrogen atom bound to silicon in one molecule. Specific examples of hydrogen polysiloxanes having a viscosity of 1 to 100000 mPa•s at 23°C include dimethylpolysiloxane capped with dimethylhydrogensiloxy groups at both molecular chain ends, dimethylpolysiloxane capped with diphenylhydrogensiloxy groups at both molecular chain ends, methylphenylpolysiloxane capped with dimethylhydrogensiloxy groups at both molecular chain ends, diphenylpolysiloxane capped with dimethylhydrogensiloxy groups at both molecular chain ends, methylphenylsiloxane-dimethylsiloxane copolymers capped with dimethylhydrogensiloxy groups at both molecular chain ends, diphenylsiloxane-dimethylsiloxane copolymers capped with dimethylhydrogensiloxy groups at both molecular chain ends, and mixtures of two or more of these.

In the resin composition used in the addition reaction of alkenyl and hydrosilyl, the molar ratio of hydrogen bound to silicon to alkenyl is preferably 0.01 to 20 mol, and more preferably 1 to 2 mol.

Examples of reaction catalysts include platinum group metals, such as platinum, palladium, and rhodium; chloroplatinic acid; alcohol-modified chloroplatinic acid; platinum compounds, such as coordination compounds of chloroplatinic acid with olefins, vinylsiloxane, or acetylene compounds; platinum group metal compounds, such as tetrakis(triphenylphosphine)palladium and chlorotris(triphenylphosphine)rhodium; and the like. Since compatibility with silicone oil is required, a platinum compound obtained by modifying chloroplatinic acid with silicone is preferably used. The amount of the catalyst when used is preferably 0.01 ppm to 10000 ppm, and more preferably 0.1 ppm to 1000 ppm, based on the solids content.

The total amount of hydrosilyl is usually 0.01 to 20 mol, and preferably 0.1 to 10 mol, per mole of alkenyl bound to silicon in the entire silicone-based resin composition. If the total amount is less than the lower limit of this range, there is a tendency that the obtained silicone-based resin composition is not easily sufficiently cured. If the total amount exceeds the upper limit of this range, the mechanical properties and heat resistance of the obtained cured silicone-based resin composition tend to be easily deteriorated.

A reaction control agent is added to prevent a silicone-based resin from thickening or gelling before curing when the silicone-based resin is added or used in a process of, for example, applying to the base material. The reaction control agent may be a low-molecular-weight polysiloxane having a plurality of alkenyl groups, an acetylene alcohol-based compound, or the like.

Reaction by UV Rays

A UV-ray-curable silicone-based resin may be those of radical reaction type (acrylic type, mercapto type), radical reaction/condensation reaction combined type (mercapto/isopropenoxy type, acrylic/alkoxy type), and addition reaction type using a UV-ray active platinum catalyst.

For the radical reaction type (acrylic type), radical polymerization reaction of an organic group having an acrylic group bound to siloxane is performed in the presence of a photosensitizer.

For the radical reaction type (mercapto type), a radical addition reaction of an organic group having a mercapto group bound to siloxane with vinyl group-containing polysiloxane is performed in the presence of a photosensitizer.

Examples of catalysts used with those of the addition reaction type using a UV-ray active platinum catalyst include a (methylcyclopentadienyl)trimethyl platinum complex, a bisacetylacetonatoplatinum(II) complex, and the like. Further, curing is preferably performed with a light source of mainly 365 nm.

A main functional group used in the photocuring reaction may be an acrylic group or an epoxy group. A photoinitiator may be used as a composition used for the reaction by UV rays.

Method for Imparting Adhesiveness (Adhesion) to Silicone-based Resin

To impart adhesiveness (adhesion) to the silicone-based resin, for example, a method for adding a silicone polymer that imparts adhesiveness is preferably used. The silicone polymer that imparts adhesiveness is preferably an MQ resin. The MQ resin is a polymer with a three-dimensional structure synthesized from a monomer with one functional group (unit M) and a monomer with four functional groups (unit Q). The molecular weight of the polymer with a three-dimensional structure is preferably 10 to 100000, and more preferably 100 to 10000. It is preferable to use a methyl group as the organic group of each functional group monomer. When the silicone-based resin is of the addition reaction type, however, an alkenyl group is preferably used. The content of the MQ resin in the silicone-based resin is preferably 10 to 99 mass%, and more preferably 20 to 80 mass%, on a solids content basis, from the viewpoint of achieving both strength and adhesiveness of the silicone-based resin. In the present invention, it is also possible to appropriately add a monomer with two functional groups (unit D) or a monomer with three functional groups (unit T) to obtain a silicone polymer that imparts adhesiveness, and it is also possible to add monomers or oligomers having other functional groups.

The MQ resin preferably has a structure in which the ends of the condensate of units Q are sealed with units M. The molar ratio of units M to units Q is preferably 0.4 to 1.2, and more preferably 0.6 to 0.9 from the viewpoint of achieving both adhesiveness and strength of the silicone-based resin.

An additive may be added in the process of obtaining the silicone polymer or the silicone-based resin from a silicone monomer. Examples of the additive include a reinforcing agent (e.g., a silica filler, such as dry silica and wet silica), a dispersant, an adhesion aid (e.g., a silane coupling agent), an adhesion promoter (e.g., an organic metal compound), a reaction control agent, an extender (e.g., crystalline silica, calcium carbonate, and talc), a heat resistance improver (e.g., iron oxide, cerium oxide, and titanium oxide), a flame retardant (e.g., titanium oxide and carbon), a heat-conductive filler, a conductive agent, a surface treatment agent, a pigment, and a dye; and metal oxides, hydroxides, carbonates, and fatty acid salts of rare earths, titanium, zircon, manganese, iron, cobalt, nickel, etc.

The silica filler may be, for example, a known silica fine powder. The silica fine powder may be hydrophilic or hydrophobic. Examples of hydrophilic silica fine powders include wet silica, such as precipitated silica, and dry silica, such as silica xerogel and fumed silica. Examples of hydrophobic silica fine powders include silica fine powders obtained by hydrophobizing the surface of hydrophilic silica fine powders. Examples of hydrophobizing agents include organosilazanes, such as hexamethyldisilazane; halogenated silanes, such as methyltrichlorosilane, dimethyldichlorosilane, and trimethylchlorosilane; organoalkoxysilanes in which the halogen of the halogenated silane is substituted with alkoxy such as methoxy or ethoxy; and the like. Examples of hydrophobic treatment methods include a method in which a hydrophilic silica fine powder is heat-treated with a hydrophobizing agent at 150 to 200°C, particularly 150 to 180°C for about 2 to 4 hours. The hydrophobic silica fine powder thus obtained by hydrophobizing the surface of hydrophilic silica fine powder in advance may be added to the adhesive agent of the present invention. Alternatively, the hydrophilic silica fine powder and a hydrophobizing agent may be incorporated together in the adhesive agent of the present invention so that the surface of the silica fine powder is hydrophobized in the process of preparing the adhesive agent of the present invention.

Specific examples of silica fillers include hydrophilic silica fine powders, such as AEROSIL (registered trademark) 50, 130, 200, and 300 (product name, produced by Nippon Aerosil Co., Ltd.), CAB-O-SIL (registered trademark) MS-5 and MS-7 (product name, produced by Cabot Co.), Reolosil QS-102 and 103 (product name, produced by Tokuyama Corporation), and Nipsil LP (product name, produced by Nippon Silica); hydrophobic silica fine powders, such as AEROSIL (registered trademark) R-812, R-812S, R-972, and R-974 (product name, produced by Degussa), Reolosil MT-10 (product name, produced by Tokuyama Corporation), and Nipsil SS series (product name, produced by Nippon Silica).

When a silica fine powder is used, the amount is usually 1 to 50 mass% on a solids content basis. If the amount is less than 1 mass%, the strength-imparting effect of the silica filler is likely to be insufficient. If the amount exceeds 50 mass%, the resulting silicone resin composition is likely to have significantly reduced fluidity, resulting in poor workability.

The adhesion promoter may be, for example, an organic titanium compound represented by an organic acid salt of titanium. The adhesion promoter can also be used as a catalyst for further accelerating the curing of the silicone-based resin composition and further improving its adhesion. The adhesion promoters may be used alone, or in a combination of two or more.

Examples of adhesion promoters include titanium chelate compounds, alkoxy titanium, and combinations thereof. Specific examples of titanium chelate compounds include diisopropoxybis(acetylacetonato)titanium, diisopropoxybis(ethylacetoacetato)titanium, dibutoxybis(methylacetoacetato)titanium, and the like. Specific examples of alkoxy titanium include tetraethyl titanate, tetrapropyl titanate, tetrabutyl titanate, and the like. The alkoxy in alkoxy titanium may be linear or branched.

The amount of the adhesion promoter is preferably 0.01 to 10 mass%, and more preferably 0.1 to 5 mass%, on a solids content basis. If the amount is less than the lower limit of this range, the adhesion may not be easily improved. If the amount exceeds the upper limit of this range, the surface of the obtained adhesive agent can be cured too fast.

A silane coupling agent is a compound that has, in one molecule, alkoxy bound to silicon, and a reactive group that is chemically bound to an adherend such as a metal or various synthetic resins. It is also possible to use a compound that has alkenyl or hydrogen instead of the alkoxy bound to silicon. The reactive group that is chemically bound to an adherend may be an epoxy group or acrylic group.

When a silicone-based resin is applied, a primer may be applied to a material for application before the application of the silicone-based resin. The primer may be a silicone-based resin of condensation curing type, addition curing type, or the like. The primer is preferably applied in an amount of 0.1 to 1.2 g/m$^2$ .

Examples of silicone-based resins include SYLGARD 186, DOWSIL 3-6512, SYLGARD 527, DOWSIL X3-6211, SYLGARD 3-6636, DOWSIL SE 1880, DOWSIL SE960, DOWSIL 781 Acetoxy Silicone, Dow Corning SE9187, DOWSIL Q1-4010, SYLGARD 1-4128, DOWSIL 3140 RTV Coating, DOWSIL HC2100, SIL-OFF Q2-7785, Sila Seal 3FW, Sila Seal DC738RTV, DC3145, and DC3140 (all produced by Dow Corning Toray Co., Ltd.), ELASTOSIL RT707W, ELASTOSIL EL4300, ELASTOSIL M4400, ELASTOSIL M8012, SILRES BS CREME C, SILRES BS 1001, SILRES BS 290, ELASTSIL 912, ELASTSIL E43N, ELASTOSIL N9111, ELASTOSIL N199, SEMICOSIL 987GR, ELASTOSIL RT772, ELASTOSIL RT745, ELASTOSIL LR3003/05, ELASTOSIL LR3343/40, ELASTOSIL LR3370/40, ELASTOSIL LR3374/50BR, ELASTOSIL EL1301, ELASTOSIL EL 4406, ELASTOSIL EL3530, ELASTOSIL EL 7152, ELASTOSIL R401/100H, SILPURAN 21xx series (produced by Wacker Asahi Kasei Silicone Co., Ltd.), KE-3423, KE-347, KE-3479, KE-1830, KE-1820, KE-1056, KE-1800T, KE-66, KE-1031, KE-12, KE-1300T, SD4584PSA, KS-847T, KF-2005, KNS-3002, KR-100, KR-101-10, KR-130, KR-3600, KR-3704, KR-3700, KR-3701, X-40-3237, X-40-3291-1, X-40-3240, Sealant 45, Sealant Master 300, Sealant 72, KE-42, Sealant 70, KE-931-U, KE-9511-U, KE-541-U, KE-153-U, KE -361-U, KE-1950-10, KEG-2000-40, KE-2019-40, KE-2090-50, and KE-2096-60 (Shin-Etsu Chemical Co., Ltd.), and the like. A catalyst may further be added to the silicone-based resin. The catalyst may be zinc octylate, iron octylate, an organic acid salt of cobalt, tin, etc., or an amine-based catalyst. It is also possible to use an organic tin compound, an organic titanium compound, and a platinum compound. The catalyst may be, for example, CAT-PL-50T (produced by Shin-Etsu Chemical Co., Ltd.) or NC-25 (produced by Dow Corning Toray Co., Ltd.). During application, a solvent, such as toluene, xylene, or an alcohol may be added. Examples of usable primers include Primer AQ-1, Primer C, Primer MT, Primer T, Primer D, Primer A-10, Primer R-3, and Primer A-20 (produced by Shin-Etsu Chemical Co., Ltd.); and the like.

The method for forming the gas-permeable non-porous layer is not particularly limited. The gas-permeable non-porous layer can be produced by lamination on a porous base material by using a reverse roll coater, forward rotation roll coater, gravure coater, knife coater, rod coater, slot orifice coater, air doctor coater, kiss coater, blade coater, cast coater, spray coater, spin coater, extrusion coater, hot melt coater, etc. The gas-permeable non-porous layer can also be produced by a method such as powder coating and electrodeposition coating. The coating may also be performed by immersing the base material in a raw material liquid of the gas-permeable non-porous layer. The base material may be in the form of a sheet or hollow fibers. In a step before the application, a pretreatment, such as primer coating and corona treatment, may be performed.

The gas-permeable non-porous layer 212 preferably has a basis weight of 10 $g/m^2$ or more and 500 $g/m^2$ or less, and more preferably 20 $g/m^2$ or more and 200 $g/m^2$ or less. The basis weight of the gas-permeable non-porous layer 212 is calculated as D $(g/m^2)$ by using relationship equation (1) below, in which E is subtracted from F, wherein E represents a basis weight E $(g/m^2)$ of the base material before the gas-permeable non-porous layer 212 is laminated, and F represents a basis weight F $(g/m^2)$ of the base material and the gas-permeable non-porous layer 212 after the gas-permeable non-porous layer is laminated on the base material.

$$\text{Equation (1)}$$

$$D = F - E$$

The basis weight of the gas-permeable non-porous layer 212 or the base material is a value measured in accordance with the "6.2 Mass per Unit Area" section in "Test methods for nonwovens" of JIS 1913: 2010.

The gas-permeable non-porous layer 212 preferably has a thickness of 10 $\mu$m or more and 500 $\mu$m or less, and more preferably 20 $\mu$m or more and 200 $\mu$m or less. The thickness of the gas-permeable non-porous layer 212 is a value measured in accordance with the measurement method disclosed in the "6.1 Thickness" section in "Test methods for nonwovens" of JIS 1913: 2010.

Microbial Support Layer 213

The microbial support layer 213 retains microorganisms on its surface or inside, has a space inside in which microorganisms can grow, and allows organic matter in water to pass through. Examples of the material of the microbial support layer 213 include mesh, woven fabric, non-woven fabric, a foam body, or a porous sheet, such as a microporous membrane. Examples of the material

of the porous sheet include polyolefin resin, polystyrene resin, polyester resin, polyvinyl chloride resin, acrylic resin, urethane resin, epoxy resin, polyamide resin, methyl cellulose resin, ethyl cellulose resin, polyvinyl alcohol resin, vinyl acetate resin, phenol resin, fluorine resin, and polyvinyl butyral resin, polyimide, polyphenylene sulfide, para- and meta-aramid, polyarylate, carbon fiber, glass fiber, aluminum fiber, steel fiber, ceramic, and the like. From the viewpoint of microbial adhesion and processability, polyolefin resin, polyester resin, polyamide resin, acrylic resin, polyurethane resin, and carbon fiber are preferable.

The microbial support layer 213 preferably has a basis weight of 2 $g/m^2$ or more and 500 $g/m^2$ or less, and more preferably 10 $g/m^2$ or more and 200 $g/m^2$ or less. The basis weight of the microbial support layer 213 is a value measured in accordance with the "6.2 Mass per Unit Area" section in "Test methods for nonwovens" of JIS 1913: 2010. When the basis weight of the microbial support layer 213 is 2 $g/m^2$ or more, the surface of the microbial support layer 213 becomes uneven, which is effective in terms of easily retaining microorganisms on the microbial support layer 213. When the basis weight of the microbial support layer 213 is 500 $g/m^2$ or less, the microbial support layer 213 has a space inside in which microorganisms can grow, which is effective in terms of easily retaining microorganisms and easily suppling oxygen to microorganisms.

The microbial support layer 213 preferably has a thickness of 5 $\mu$m or more and 2000 $\mu$m or less, and more preferably 20 $\mu$m or more and 500 $\mu$m or less. The thickness of the microbial support layer 213 is a value measured in accordance with the measurement method disclosed in the "6.1 Thickness" section in "Test methods for nonwovens" of JIS 1913: 2010.

The microbial support layer 213 may be formed as a result of surface treatment of the base material 211. In this manner, the surface roughness of the base material 211 is increased, and the membrane potential of the base material 211 is increased, thus improving the microbial adhesion. For example, the surface treatment can be performed by graft polymerization of glycidyl methacrylate, followed by further reaction of diethylamine or sodium sulfite. Alternatively, the surface treatment can be performed by graft polymerization of glycidyl methacrylate, followed by further reaction of ammonia or ethylamine.

Method for Producing Gas Supply Body 10

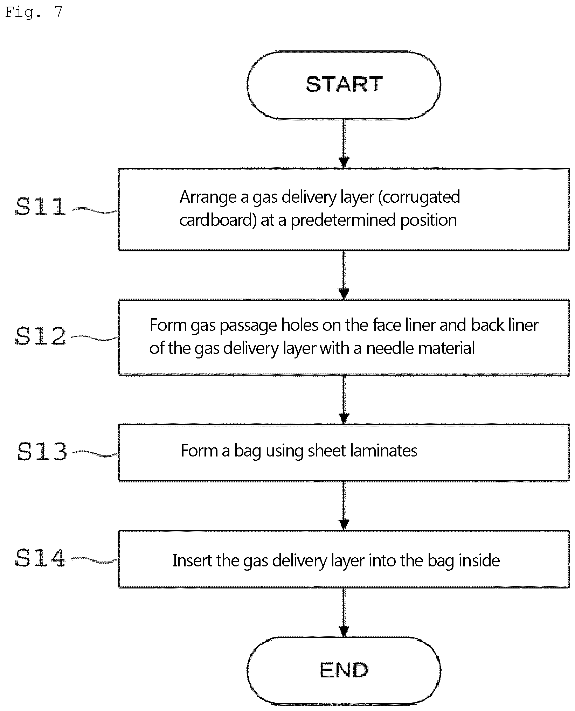

The production method for the gas supply body 10 of this embodiment is performed according to the flowchart shown in Fig. 7. The production method for the gas supply body 10 is described below with reference to Fig. 7.

First, in step S11 of Fig. 7, corrugated cardboard and other components constituting the gas delivery layer 12 are disposed at predetermined positions (placement step).

Next, in step S12 of Fig. 7, multiple through holes are formed as gas passage holes 13 in the face liner 12b and back liner 12c of the gas delivery layer 12 by using a needle material (hole-forming step).

The needle material may be, for example, a roll having multiple needles attached to its surface (needle material), or a needle material to which a single needle is attached and with which gas passage holes 13 can be manually formed. The gas passage holes can be easily formed as required by using these needle materials even when the gas delivery layer is covered with a plate material or the like. When the roll mentioned above is used, the gas passage holes 13 can be formed on the gas delivery layer 12 by allowing the gas delivery layer 12 to pass through between the roll and a flat surface. The flat surface is, for example, the surface of a flat plate or the surface of another roll to which no needle is attached.

The gas passage holes 13 may also be formed by pressing a plate with needles arranged on the surface against the surface of the gas delivery layer 12. Alternatively, the gas passage holes 13 may be formed by using a knife, such as a utility knife.

Next, in step S13 of Fig. 7, two substantially rectangular sheet laminates 21, 21 are stacked, and the peripheral edges of the base materials 211, 211 of the sheet laminates 21, 21 are bonded by heat sealing to thus form a bag of the sheet laminates 21, 21 (see Fig. 4 for the base material 211) .

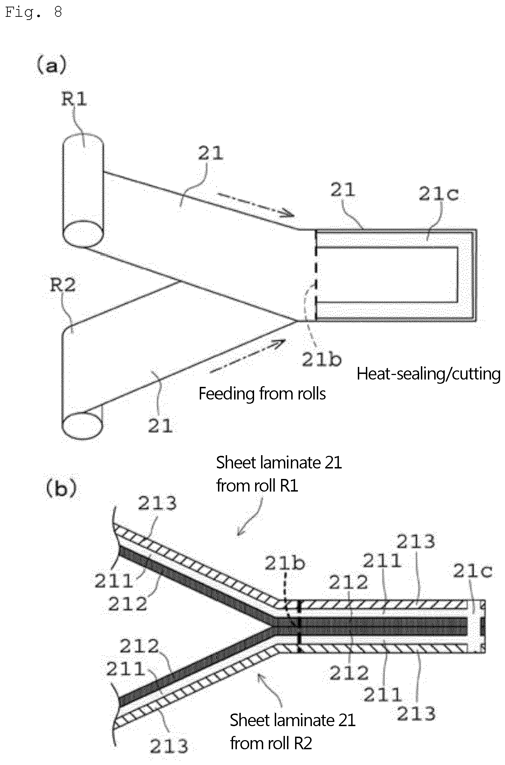

More specifically, as shown in Fig. 8, the sheet laminates 21, 21 fed from two rolls R1 and R2 are stacked, and in this state, three circumferential sides of the base materials 211, 211 of the sheet laminates 21, 21 are bonded by heat welding to form a heat-welded portion 21c. Then, the sheet laminates 21, 21 are cut at a portion for serving as an opening 21b in a state in which the three sides are sealed with the heat-welded portion 21c. (Fig. 8 (a) is a perspective view of the sheet laminates 21, 21, and Fig. 8 (b) is a cross-sectional view of the sheet laminates 21, 21).

The method for forming a bag using the sheet laminate 21 is not limited to the above. For example, the bag may also be formed by bonding only one opening of the sheet laminate 21 that is in a cylindrical shape. Alternatively, a single sheet of the sheet laminate 21 may be folded in half, and the left and right end portions may be heat welded to form a bag. Alternatively, a bag formed of the sheet laminate 21 may be obtained by inflation molding or the like. Alternatively, the sheet laminate 21 that is in the form of hollow fibers may be obtained by continuous molding. For example, the sheet laminate 21 may be obtained by continuously immersing the base material in the raw material liquid of the gas-permeable non-porous layer 212, optionally followed by fixing by heat treatment or cooling, or the sheet laminate 21 may be obtained by continuously placing the raw material liquid of the gas-permeable non-porous layer 212 onto a hollow base material using a mold, optionally followed by fixing by heat treatment, cooling, etc.

The temperature for heat sealing is preferably higher than or equal to the melting point and lower than or equal to the thermal decomposition temperature of the base material 211 formed of a thermoplastic resin.

The method for bonding the sheet laminate 21 is not limited to the above heat sealing, and the sheet laminate 21 may be bonded, for example, with double-sided tape or an adhesive agent. The materials for the adhesive agent preferably have at least one property selected from water resistance, waterproofing, chemical resistance, and microbial decomposition resistance.

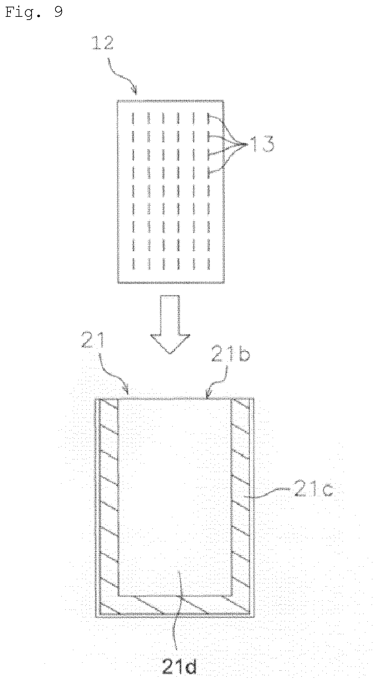

Next, in step S14 of Fig. 7, as shown in Fig. 9, the gas delivery layer 12 having the gas passage holes 13 is inserted into the bag inside 21d from the opening 21b of the bag formed of the sheet laminate 21 (covering step).

The gas delivery layer 12 is inserted from the opening 21b in the direction of the gas flow paths S formed with the core materials 12a and the like.

According to the wastewater treatment apparatus 50 of this embodiment, the gas from the gas supply source 53 is supplied to the upper end portion 21b of the gas delivery layer 12. The gas supplied to the upper end portion 21b flows through the gas flow paths S and passes through the gas passage holes 13. The gas passed through the gas passage holes 13 is supplied to the wastewater W through the sheet laminate 21. Accordingly, oxygen is supplied to the microorganisms in the wastewater W, activating the microorganisms. Due to the activity of the microorganisms, the wastewater can be purified by efficiently decomposing the organic matter or nitrogen source in the wastewater W.

The sheet laminate 21 of this embodiment, comprising the gas-permeable non-porous layer 212 and the base material 211, which is a microporous membrane, can maintain purification performance of the wastewater treatment apparatus 50.

That is, the base material 211, which is a highly smooth microporous membrane, can be covered with the gas-permeable non-porous layer 212 without causing defects in the gas-permeable non-porous layer 212. For this reason, waterproofing is obtained even when the gas-permeable non-porous layer 212 covering the base material 211 is thin. Therefore, the waterproofing of the sheet laminate 21 can be improved without impairing the air permeability of the sheet laminate 21. Further, the pores of the base material 211 (microporous membrane) can be prevented from becoming hydrophilic by covering the base material 211 with the gas-permeable non-porous layer 212. Therefore, the sheet laminate 21 can maintain waterproofing for a long period of time. In this manner, when the gas delivery layer 12 is covered with the sheet laminate 21 of this embodiment, gas can be supplied from the gas delivery layer 12 side to the wastewater W by allowing gas to permeate through the sheet laminate 21 without allowing a liquid to permeate to the gas delivery layer 12 side. Therefore, the purification performance of the wastewater treatment apparatus 50 is maintained. Further, according to this embodiment, the state in which the gas delivery layer 12 is covered with the sheet laminate 21 can be easily achieved by inserting the gas delivery layer 12 into the bag formed of the sheet laminate 21.

Furthermore, according to the sheet laminate 21 of this embodiment, the presence of the microbial support layer 213 can improve the purification performance of the wastewater treatment apparatus 50.

Specifically, the presence of the microbial support layer 213 in the sheet laminate 21 allows microorganisms to adhere to the microbial support layer 213. Since a sufficient amount of gas can thus be continuously supplied to the microorganisms, the microorganisms are reliably activated continuously. This makes it possible to improve the purification performance of the wastewater treatment apparatus 50.

Furthermore, according to this embodiment, the sheet laminate 21 is laminated with the microbial support layer 213, the base material 211, and the gas-permeable non-porous layer 212, in this order. Therefore, the microbial support layer 213 can be used as the outermost layer of the sheet laminate 21, which comes into contact with the wastewater W. Therefore, microorganisms are reliably allowed to adhere to the microbial support layer 213, thus making it possible to reliably activate microorganisms. Therefore, the purification performance of the wastewater treatment apparatus 50 is reliably improved. In particular, when microorganisms contained in the wastewater W are aerobic microorganisms, the aerobic microorganisms gather in the sheet laminate 21 due to gas supplied to the wastewater W through the sheet laminate 21. Since many microorganisms adhere to the microbial support layer 213, the purification performance of the wastewater treatment apparatus 50 is significantly improved.

The sheet laminate 21 preferably has an oxygen supply rate Q ($gO_2/m^2$/day) of 25 $g/m^2$/day or more, more preferably 26 $g/m^2$/day or more, and still more preferably 27 $g/m^2$/day or more. The oxygen supply rate Q is obtained by the method described below in the "Oxygen Supply Test" section. The upper limit of the oxygen supply rate Q is preferably, for example, 60 $g/m^2$/day.

Oxygen Supply Performance Test

Ion-exchanged water is poured into a sealed cubic vessel having a side length of 7 cm, with one of its vertical side surfaces being composed of a membrane. Subsequently, in an environment of 23 to 27°C, the oxygen concentration in the sealed vessel is continuously measured while stirring the ion-exchanged water by rotation of a stirring bar for a stirrer. The ion-exchanged water is obtained by adding sodium sulfite at a concentration of 100 mg/L, and cobalt chloride at a concentration of 1.5 mg/L or more. The stirrer may be an HE-20GB produced by Koike Precision Instruments. The rotation speed is set to level 7 in the high range. The oxygen supply performance is evaluated in an environment of 23 to 27°C. From time-series data on the measured oxygen concentration, an approximate straight line is obtained based on the correlation between the common logarithm of the oxygen deficiency $Y=\log_{10}(Cs-C)$ and time t (h), and a slope Z of Y of the approximate straight line with respect to time t is obtained. Cs represents a saturated oxygen concentration of the liquid phase at a measurement temperature T, and C represents a measured oxygen concentration of the liquid phase at measurement time t. From the slope Z, the oxygen supply rate Q ($gO^2/m^2$ /day) is calculated according to the following equation (2).

```
Equation (2)
Q = -2.303 × 24 × 0.00884 × V × Z (1.028)^((20-T)/S)
```

V: Liquid volume used for measurement (L)
S: Effective area of membrane used for measurement ($m^2$)
T: Average value of liquid temperature during measurement (°C)

Other embodiments of the present invention are described below. In the following embodiments in which materials are not particularly specified, the same materials as those used in Embodiment 1 can be used. The gas supply bodies shown in the following embodiments can also be unitized, and the supply body unit into which the gas supply bodies are unitized can be disposed in the wastewater treatment apparatus.

Embodiment 2

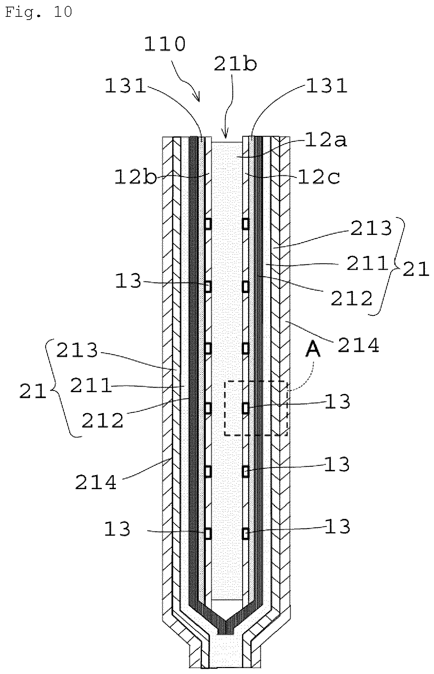

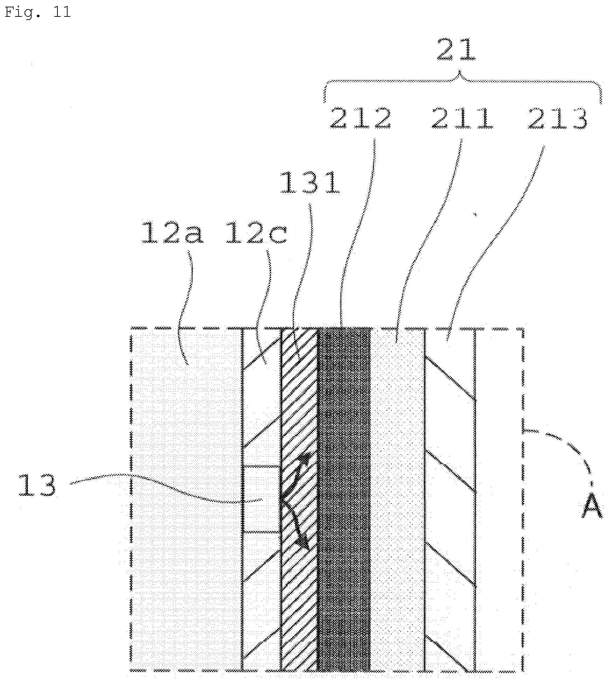

The gas supply body 110 according to Embodiment 2 of the present invention is described below with reference to Figs. 10 and 11.

The gas supply body 110 according to this embodiment is different from the gas supply body 10 (Fig. 4) according to Embodiment 1 in that a porous sheet 131 is disposed between the gas delivery layer 12 and the sheet laminate 21.

As the porous sheet 131, for example, a mesh sheet, a woven fabric, a non-woven fabric, or a microporous membrane can be used.

Examples of the material of the porous sheet 131 include polyolefin resin, polystyrene resin, polyester resin, polyvinyl chloride resin, acrylic resin, urethane resin, epoxy resin, polyamide resin, methyl cellulose resin, ethyl cellulose resin, polyvinyl alcohol resin, vinyl acetate resin, phenolic resin, fluorine resin, polyvinyl butyral resin, and the like.

The porous sheet 131 is particularly preferably formed from paper, polyolefin resin, polystyrene resin, vinyl chloride resin, or polyester resin, in terms of gas permeability.

When the porous sheet 131 is laminated, the portion to be bonded may be only the outer peripheral portion, or the entire surface of the porous sheet 131 may be bonded to the sheet laminate 21 and the gas delivery layer 12 as long as gas can be supplied to the sheet laminate 21.

The use of the porous sheet 131 interposed between the sheet laminate 21 and the gas delivery layer 12 allows gas to move in the planar direction of the gas delivery layer 12 in the porous sheet 131, as shown in Fig. 11. Thus, as compared with the configuration in which the porous sheet 131 is not interposed, gas delivered from the gas passage holes 13 of the gas delivery layer 12 can be supplied to the sheet laminate 21 over an extended range to the planar direction of the gas delivery layer 12 (the planar direction of the liners 12b and 12c).

Thus, gas can be supplied into wastewater W from a larger area, rather than locally, of the sheet laminate 21 in contact with wastewater W, compared with the configuration in which the porous sheet 131 is not interposed.

Moreover, disposing the porous sheet 131 so that it is sandwiched between the gas delivery layer 12 and the sheet laminate 21 prevents the movement of gas from being blocked by close contact of the gas delivery layer 12 with the sheet laminate 21.

Further, since the non-woven fabric forming the porous sheet 131 has many fine air holes, the presence of the porous sheet 131 is also expected to have an effect of preventing sealing.

For example, protrusions and depressions may be formed on the surface of the sheet laminate 21 opposite to the surface that comes into contact with wastewater W. Even with this configuration, the same effect as when the porous sheet is disposed can be achieved.

Items That Can Be Changed in Embodiments 1 and 2

In Embodiments 1 and 2, an example using the planar gas supply body 10 is described. However, the present invention is not limited to this example. For example, the gas supply body 10 may be wound or may be a cylindrical gas supply body.

In Embodiments 1 and 2, an example in which the gas supply body 10 is formed by inserting the gas delivery layer 12 from the opening 21b of the bag formed of the sheet laminate 21 is described. However, the present invention is not limited to this example. For example, the sheet laminate may be laminated and bonded to the surface of the gas delivery layer. Regarding the portion to be bonded, only the outer peripheral portion of the sheet laminate may be bonded, or the sheet laminate and the gas delivery layer may be bonded together over the entire surface as long as gas can be supplied to the sheet laminate.

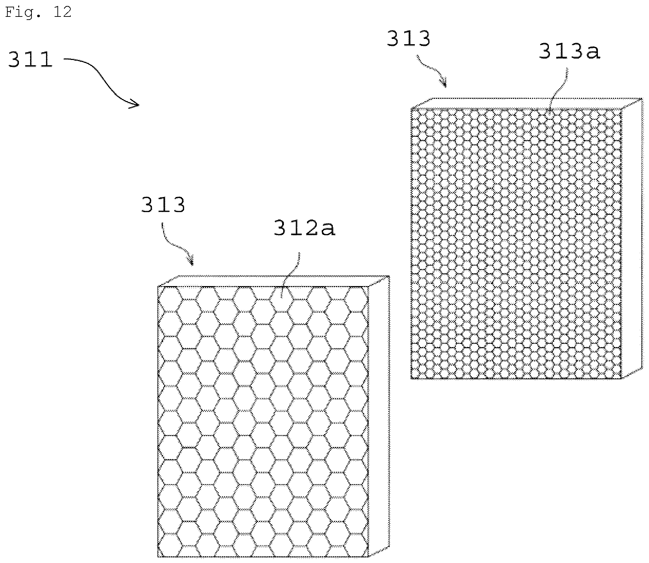

The component forming the gas delivery layer is not limited to the hollow plate-shaped component shown in Embodiments 1 and 2 and may be changed as shown in Fig. 12. The gas delivery layer 311 shown in Fig. 12 is formed by combining a first structure 312 having a honeycomb structure and a second structure 313 having a honeycomb structure with cells (gas passage holes 313a) having a size different from that of the cells (gas passage holes 312a) of the first structure 312.

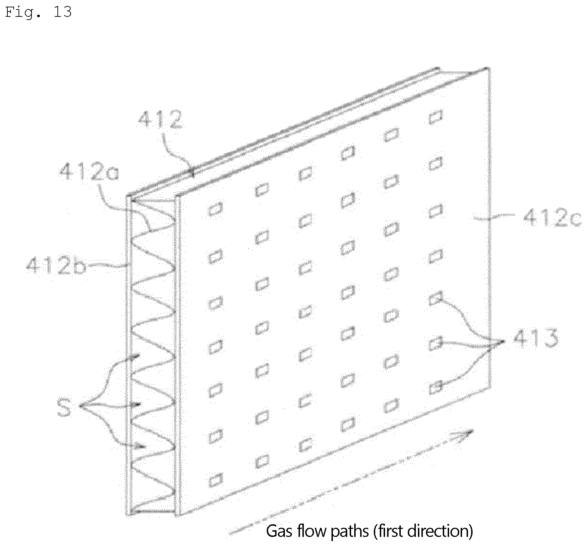

In Embodiments 1 and 2, an example using the gas delivery layer 12 including the core materials 12a, the face liner 12b, and the back liner 12c is described. However, the present invention is not limited to this example. For example, as shown in Fig. 13, a hollow plate-shaped component 412 in which a core material 412a that is corrugated in cross section is disposed along gas flow paths S between a face liner 412b and a back liner 412c, both of which have multiple gas passage holes 413 formed in them, may be used as the gas delivery layer.

The present inventors produced the sheet laminates of the Examples of the present invention and the sheet laminates of the Comparative Examples, and tests were performed to investigate the leak pressure, oxygen supply performance, treatment performance, and long-term leak performance of the sheet laminates of the Examples and Comparative Examples. Table 1 shows the results. The tests are described below.

Table 1

| No. | Microbial support layer | Base material | Resin of gas-permeable non-porous layer | Basis weight of gas-permeable non-porous layer | Thickness of gas-permeable non-porous layer | Laminating order | Leak pressure | Oxygen supply performance | Long-term leak results | Purification treatment performance (organic matter removal percentage) |
|---|---|---|---|---|---|---|---|---|---|---|
| | | | | g/m² | μm | | MPa | (m²·d) | | % |
| Example 1 | PO non-woven fabric | PO microporous membrane | Silicone | 20 | 18 | A *2 | >0.4 | 38 | ○ No leakage | ○ 84 |
| Example 2 | PO non-woven fabric | PO microporous membrane | Urethane | 10 | 7 | A | >0.4 | 25 | ○ No leakage | ○ 90 |
| Example 3 | PO non-woven fabric | PO microporous membrane | Silicone | 40 | 37 | A | >0.4 | 38 | ○ No leakage | ○ 94 |
| Example 4 | PO non-woven fabric | PO microporous membrane | Silicone | 80 | 72 | A | >0.4 | 34 | ○ No leakage | ○ 91 |
| Example 5 | PO non-woven fabric | PO microporous membrane | Silicone | 40 | 36 | A | >0.4 | 39 | ○ No leakage | ○ 95 |
| Example 6 | PO non-woven fabric | PO microporous membrane | Silicone | 80 | 71 | A | >0.4 | 35 | ○ No leakage | ○ 93 |
| Example 7 | PO non-woven fabric | PO microporous membrane | Silicone | 40 | 36 | A | >0.4 | 37 | ○ No leakage | ○ 92 |
| Example 8 | PO non-woven fabric | PO microporous membrane | Silicone | 40 | 36 | A | >0.4 | 36 | ○ No leakage | ○ 91 |

Headers: Specs (spanning Microbial support layer through Laminating order); Surrogate indicator (spanning Leak pressure, Oxygen supply performance); Target indicator (spanning Long-term leak results, Purification treatment performance).

| No. | Specs | | | | | | Surrogate indicator | | Target indicator | |
|---|---|---|---|---|---|---|---|---|---|---|
| | Microbial support layer | Base material | Resin of gas-permeable non-porous layer | Basis weight of gas-permeable non-porous layer | Thickness of gas-permeable non-porous layer | Laminating order | Leak pressure | Oxygen supply performance | Long-term leak results | Purification treatment performance (organic matter removal percentage) |
| | | | | g/m² | μm | | MPa | (m²·d) | | % |
| Example 9 | PO non-woven fabric | PO microporous membrane | Silicone | 100 | 90 A | | >0.4 | 30 | ○ No leakage | ○ 78 |
| Example 10 | PO non-woven fabric | PO microporous membrane | Silicone | 100 | 71 A | | >0.4 | 30 | ○ No leakage | ○ 79 |
| Example 11 | PO non-woven fabric | PO microporous membrane | Silicone | 8 | 8 A | | 0.20 | 32 | ○ No leakage | ○ 92 |
| Example 12 | PO non-woven fabric | PO microporous membrane | Silicone | 20 | 17 A | | >0.4 | 37 | ○ No leakage | ○ 82 |
| Example 13 | PO non-woven fabric | PO microporous membrane | Silicone | 100 | 93 A | | >0.4 | 29 | ○ No leakage | ○ 77 |
| Example 14 | PO non-woven fabric | PO microporous membrane | Silicone | 20 | 18 A | | >0.4 | 35 | ○ No leakage | ○ 80 |
| Example 15 | PO non-woven fabric | PO microporous membrane | Urethane | 10 | 7 B *3 | | >0.4 | 6 | ○ No leakage | × 49 |
| Example 16 | None | PO microporous membrane | Silicone | 20 | 17 A | | >0.4 | 30 | ○ No leakage | × 40 |

EP 3 778 498 A1

18

| No. | Specs | | | | | | Surrogate indicator | | Target indicator | |
|---|---|---|---|---|---|---|---|---|---|---|
| | Microbial support layer | Base material | Resin of gas-permeable non-porous layer | Basis weight of gas-permeable non-porous layer | Thickness of gas-permeable non-porous layer | Laminating order | Leak pressure | Oxygen supply performance | Long-term leak results | Purification treatment performance (organic matter removal percentage) |
| | | | | g/m² | μm | | MPa | (m²·d) | | % |
| Comparative Example 1 | PO non-woven fabric | PO microporous membrane | None | 0 | 0 A | | 0.16 | 33 | × There was leakage. | - *4 |
| Comparative Example 2 | None | PET-based non-woven fabric | Silicone | 20 | 18 A | | 0.05 | - | × There was leakage. | *4 |
| *1: PO = polyolefin *2: (A) in the order of the microbial support layer, the base material, and the gas-permeable non-porous layer *3: (B) in the order of the base material, the gas-permeable resin layer, and the microbial support layer *4: "-" indicates that measurement could not be performed because of water leakage of the sheet laminate. | | | | | | | | | | |

EP 3 778 498 A1

Example 1

The sheet laminate of Example 1 comprises the microbial support layer 213, the base material 211, and the gas-permeable non-porous layer 212, in this order. As the base material 211, a microporous membrane contained in Cellpore NW07H produced by Sekisui Chemical Co., Ltd., was used, and as the microbial support layer 213, a polyolefin non-woven fabric contained in Cellpore NW07H was used (Cellpore NW07H has a three-layer structure composed of a non-woven fabric, a microporous membrane, and a non-woven fabric, of which one non-woven fabric was used as the microbial support layer 213, and the polyolefin microporous membrane was used as the base material 211). The base material 211 had a thickness of 90 $\mu$m. The microbial support layer 213 had a basis weight of 10 g/m$^2$ and a thickness of 25 $\mu$m.

In Example 1, the gas-permeable non-porous layer 212 was laminated on the base material 211 by applying a mixture of a methyl vinyl silicone resin, a crosslinking agent, a platinum-based catalyst, etc. to the base material 211 by using a bar coater and allowing the mixture to stand in an atmosphere at 70°C for 1 hour. As the silicone resin, NC1910 produced by Wacker Asahi Kasei Silicone Co., Ltd., was used, and the basis weight of the silicone resin after curing was 20 g/m$^2$.

Example 2

The sheet laminate of Example 2 was obtained in the same manner as in Example 1, except that in order to form the gas-permeable non-porous layer 212, a urethane resin (HI-MUREN Y-237NS produced by Dainichiseika Color & Chemicals Mfg. Co., Ltd.) was used in place of the silicone resin, and the basis weight of the resin was 10 g/m$^2$.

Example 3

The sheet laminate of Example 3 was obtained in the same manner as in Example 1, except that the basis weight of the resin forming the gas-permeable non-porous layer 212 was 40 g/m$^2$.

Example 4

The sheet laminate of Example 4 was obtained in the same manner as in Example 1, except that the basis weight of the resin forming the gas-permeable non-porous layer 212 was 80 g/m$^2$.

Example 5

The sheet laminate of Example 5 was obtained in the same manner as in Example 3, except that Microporous Film (thickness: 40 $\mu$m) produced by 3M was used as the base material 211.

Example 6

The sheet laminate of Example 6 was obtained in the same manner as in Example 4, except that EXEPOL E BSPBX-4 (film thickness: 23 $\mu$m) produced by Mitsubishi Plastics, Inc., was used as the base material 211.

Example 7

The sheet laminate of Example 7 was obtained in the same manner as in Example 3, except that ELEVES SO203WDO (basis weight: 20 g/m$^2$) produced by Unitika Ltd. was used as the microbial support layer 213.

Example 8

The sheet laminate of Example 8 was obtained in the same manner as in Example 3, except that ELEVES T0503WDO (basis weight: 50 g/m$^2$) produced by Unitika Ltd. was used as the microbial support layer 213.

Example 9

The sheet laminate of Example 9 was obtained in the same manner as in Example 1, except that the basis weight of the resin forming the gas-permeable non-porous layer 212 was 100 g/m$^2$.

Example 10

The sheet laminate of Example 10 was obtained in the same manner as in Example 5, except that ELEVES T0703WDO (basis weight: 70 g/m$^2$) produced by Unitika Ltd. was used as the microbial support layer 213.

Example 11

The sheet laminate of Example 11 was obtained in the same manner as in Example 1, except that the basis weight of the resin forming the gas-permeable non-porous layer 212 was 8 g/m$^2$.

Example 12

The sheet laminate of Example 12 was obtained in the same manner as in Example 1, except that the gas-permeable non-porous layer 212 was continuously prepared with a reverse roll coater and a heating device associated with it.

Example 13

The sheet laminate of Example 13 was obtained in the same manner as in Example 5, except that the gas-permeable non-porous layer 212 was continuously prepared with a slit coater and a heating device associated with it.

Example 14

The sheet laminate of Example 14 was obtained in the same manner as in Example 1, except that an ultraviolet curable silicone resin mixture was applied to the base material 211 using a reverse roll coater and then cured by ultraviolet irradiation.

Example 15

In Example 15, only a microporous membrane of Cellpore NW07H, which is a moisture-permeable film produced by Sekisui Film Co., Ltd., was used as the base material 211, and a resin layer was laminated on the microporous membrane in the same manner as in Example 2. A polyolefin non-woven fabric contained in Cellpore NW07H was laminated on the resin layer and allowed to stand in an atmosphere at 70°C for 1 hour, thereby obtaining the sheet laminate of Example 10 comprising the base material 211, the gas-permeable resin layer, and the microbial support layer 213, in this order.

Example 16

The sheet laminate of Example 16 was obtained in the same manner as in Example 1, except that the microbial support layer 213 was not used.

Comparative Example 1

The sheet laminate of Comparative Example 1 was obtained in the same manner as in Example 1, except that the gas-permeable non-porous layer was not used.

Comparative Example 2

In Comparative Example 2, MARIX 82607WSO produced by Unitika Ltd., which is a polyester non-woven fabric, was used as the base material 211, and a resin layer was laminated on the non-woven fabric in the same manner as in Example 1. The basis weight of the resin of the gas-permeable non-porous layer was 20 g/m$^2$ .

Leak Pressure

In a test for examining the leak pressure, the leak pressure was measured mainly by a partially modified method of JIS K 6404-7:1999, A21: high water pressure, small sample method (dynamic pressure method). The leak pressure refers to the pressure gauge value at which water first appears through a test piece. The following are the differences from the high water pressure, small sample method (dynamic pressure method).

A support non-woven fabric (MARIX 82607WSO produced by Unitika Ltd.) was overlaid on the surface of a sheet laminate (test piece) opposite to the surface to which water pressure was applied. The water used for the test was ion-exchanged water containing red food coloring to make it easier to confirm water that appeared through the test piece. The rate at which the water pressure was increased was 0.1 MPa per minute.

Oxygen Supply Performance

In a test for examining the oxygen supply performance, the oxygen supply rate Q ($gO_2/(m^2 \cdot d)$) was determined by the method shown in the oxygen supply performance test of Embodiment 1.

Purification Treatment Performance

In a purification treatment performance test, organic matter-containing water having the following features (1), (2), and (3) is poured into a sealed cubic vessel having a side length of 7 cm, with one of its vertical side surfaces being composed of a sheet laminate, and the sealed vessel is placed in a constant-temperature chamber whose temperature is set to $30 \pm 2°C$:

(1) soluble starch is added at a concentration of 0.8 g/L, peptone is added at a concentration of 0.084 g/L, yeast extract is added at a concentration of 0.4 g/L, urea is added at a concentration of 0.052 g/L, $CaCl_2$ is added at a concentration of 0.055 g/L, $KH_2PO_4$ is added at a concentration of 0.017 g/L, $MgSO_4 \cdot 7H_2O$ is added at a concentration of 0.001 g/L, KCl is added at a concentration of 0.07 g/L, and $NaHCO_3$ is added at a concentration of 0.029 g/L;
(2) tap water is used as a solvent;
(3) 5 g of soil microorganisms are added as microorganisms that decompose organic matter.

An operation of replacing the organic matter-containing water in the sealed vessel every time the organic matter-containing water is continuously stirred by the rotation of a stirrer for 3.5 days is continuously performed for 28 days and 56 days (that is, an operation of stirring organic matter-containing water for 3.5 days, discharging the organic matter-containing water in the sealed vessel, and then introducing organic matter-containing water into the sealed vessel is repeated for 28 days and 56 days). Thereafter, the sealed vessel is filled with the organic matter-containing water, and the CODCr concentration is measured. The organic matter removal percentage R is determined from the following equation (3) using the CODCr concentration A (mg/L) at the time of filling the sealed vessel with the organic matter-containing water (28 days and 56 days after the start of the operation) and the CODCr concentration B (mg/L) 3 days after the sealed vessel is filled with the organic matter-containing water (31 days and 59 days after the start of the operation).
Equation 3

$$R = (1 - B/A) \times 100 \qquad (3)$$

Long-term Leak Performance

The long-term leak performance was evaluated by visually observing the surface on the air side of a sheet laminate disposed in a wastewater treatment apparatus or confirming the presence or absence of water leakage using cobalt chloride paper.
In the sheet laminate of Comparative Example 1, which has no gas-permeable non-porous layer, the leak pressure was 0.16 MPa. The performance of a wastewater treatment apparatus using the sheet laminate of Comparative Example 1 was evaluated. Water leakage to the air side of the sheet was observed after 2 months; thus, the long-term leak performance was poor. Moreover, because of water leakage, the purification treatment performance of the sheet laminate of Comparative Example 1 could not be measured.
In the sheet laminate of Comparative Example 2, in which the base material was composed of a PET/PE-based non-woven fabric, the leak pressure was 0.05 MPa. Also in a wastewater treatment apparatus using the sheet laminate of Comparative Example 2, water leakage to the air side of the sheet was observed after 2 months; thus, the long-term leak performance was poor. Moreover, because of water leakage, the purification treatment performance of the sheet laminate of Comparative Example 2 could not be measured.
In contrast, in each of the sheet laminates of Examples 1 to 16, in which the base material is composed of a microporous membrane, the leak pressure was 0.2 MPa or more, which was higher than those of Comparative Examples 1 and 2. Wastewater treatment apparatuses individually using each of the sheet laminates of Examples 1 to 16 showed good long-term leak performance, with no water leakage to the air side of the sheets over a long period of time. These results confirmed that providing a base material composed of a microporous membrane in a sheet laminate enhances waterproofing.

A comparison of the sheet laminates of Examples 1, 3 to 14, and 16, in which the resin of the gas-permeable non-porous layer is silicone, with the sheet laminates of Example 2 and 15, in which the resin of the gas-permeable non-porous layer is urethane, showed that the oxygen supply performance of each of the sheet laminates of Examples 1, 3 to 14, and 16 was higher than that of each of the sheet laminates of Example 2 and 15. This result confirmed that using silicone as the resin of the gas-permeable non-porous layer enhances the oxygen supply performance of the sheet laminate.

A comparison of the sheet laminates of Examples 1 to 15, which have a microbial support layer, with the sheet laminate of Example 16, which has no microbial support layer, showed that the organic matter removal percentage of each of the sheet laminates of Examples 1 to 15 was higher than that of Example 16. This result confirmed that providing a microbial support layer in a sheet laminate enhances the purification performance of a wastewater treatment apparatus.

Embodiment 3

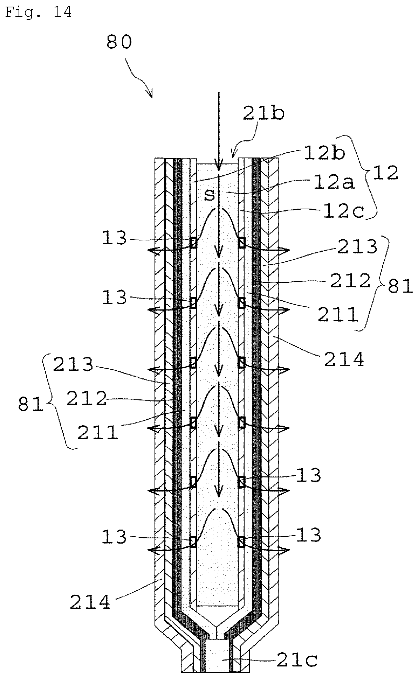

Next, Embodiment 3 of the present invention is described. Fig. 14 is a vertical cross-sectional view of a gas supply body 80 according to Embodiment 3.

The gas supply body 80 according to Embodiment 3 comprises a gas delivery layer 12 shown in Fig. 5 and a sheet laminate 81. The gas delivery layer 12 is disposed inside a bag composed of the sheet laminate 81. The gas delivery layer 12 may be replaced with a gas delivery layer 311 shown in Fig. 12 or a hollow plate-shaped component 412 shown in Fig. 13.

The sheet laminate 81 of Embodiment 3 comprises a gas-permeable non-porous layer 212 having adhesiveness. In this sheet laminate, a microbial support layer 213, the gas-permeable non-porous layer 212, and a base material 211 are laminated in this order from a side that comes into contact with wastewater. The microbial support layer 213 is formed on the surface of the gas-permeable non-porous layer 212 having adhesiveness that comes into contact with wastewater. Alternatively, the sheet laminate 81 may be laminated with the microbial support layer 213, the base material 211, and the gas-permeable non-porous layer 212, in this order from a side that comes into contact with wastewater, like the sheet laminate 21 shown in Fig. 4. In this case as well, the gas-permeable non-porous layer 212 has adhesiveness.

The gas-permeable non-porous layer 212, which has adhesiveness, facilitates colonization of a biofilm 214. Moreover, the gas-permeable non-porous layer 212, which has gas permeability, allows gas such as oxygen to be efficiently supplied to the biofilm 214, which is composed of microorganisms that require oxygen. The biofilm 214 is a microbial membrane composed of multiple microorganisms, and includes aerobic microorganisms and their products.

Since the sheet laminate 81 of Embodiment 3 can support microorganisms while having gas permeability, the distance from the gas delivery layer 12 to the outermost layer can be shortened. As a result, a sufficient amount of oxygen can be supplied to the biofilm 214, preventing the biofilm 214 from peeling off.

The meaning of the phrase "the gas-permeable non-porous layer 212 has adhesiveness" is that the gas-permeable non-porous layer 212 is sticky when touched with fingers. More specifically, the ball number is preferably 1 or more, and more preferably 2 or more at an inclination angle of 30° in an inclined-ball tack test method of a testing method of a sheet using pressure-sensitive adhesive tape according to JIS Z0237-14. The upper limit of the ball number obtained by the inclined-ball tack test method is not particularly limited and is preferably, for example, 32 or less, and more preferably 10 or less. When the gas-permeable non-porous layer 212 has adhesiveness within this range, the biofilm 214 is prevented from peeling off, and the wastewater treatment performance is improved or stabilized.

Examples of an embodiment in which the gas-permeable non-porous layer 212 is provided include an embodiment in which the layer is formed by applying a resin composition for film formation (for formation of a film for water treatment). The application method is not particularly limited, and known methods can be widely used. Examples include a reverse roll coater, a forward rotation roll coater, a gravure coater, a knife coater, a rod coater, a slot orifice coater, an air doctor coater, a kiss coater, a blade coater, a cast coater, a spray coater, a spin coater, an extrusion coater, a hot melt coater, bar coating, die coating, and the like. Further, the gas-permeable non-porous layer 212 may also be obtained by coating the base material 211 described below by immersing the base material 211 in a resin composition for film formation of a resin composition. In a step before the application, a pretreatment, such as primer coating and corona treatment, may be performed. Furthermore, the gas-permeable non-porous layer 212 may be formed by using only a resin composition for film formation by extrusion molding, inflation molding, calendar molding, or the like. At this time, the sheet laminate 81 may be obtained by performing multi-layer molding with the base material 211 described below. Stretching may be performed after the molding.

The resin contained in the resin composition for film formation (for forming a film for water treatment) is not particularly limited, and well-known adhesive resins can be widely used. In particular, to improve the adhesiveness of the gas-permeable non-porous layer 212, it is preferable to use a resin that functions as an adhesive agent. Specific examples of the resin include resin that is a rubber-like substance, and acrylic-based resin containing an acrylic-based monomer as an essential element. It is also preferable to use urethane-based resin, polycarbonate-based resin, polyester-based resin, polyolefin-based resin, acrylic urethane-based resin, vinyl-based resin, silicone-based resin, or a resin composition that functions as an adhesive agent. Specific examples of the rubber-like substance include polybutadiene rubber, styrene-butadiene copolymer rubber, ethylene-propylene rubber, butadiene-acrylonitrile copolymer rubber, butyl rubber, acrylic rubber, styrene-isobutylene-butadiene copolymer rubber, isoprene-acrylic acid ester copolymer rubber, and the like. More specifically, the polyolefin-based resin may be a resin with a high oxygen permeability, such as polymethylpentene. These resins may be used alone, or in a combination of two or more to form a copolymer. In application, a solvent, such as toluene or xylene, may be mixed.

A resin having adhesiveness may be added to the resin composition for film formation to increase adhesiveness. The amount of the adhesive resin is preferably 5 to 70 mass%, and more preferably 10 to 65 mass%, based on 100 mass% of the resin composition for film formation, in order to improve the compatibility with the catalyst and solvent, and to easily adjust the viscosity.

It is also preferable to add a polymerization initiator to the resin composition for film formation to give the resin composition for film formation a property of being cured by thermal energy or light energy.

When curing is performed by thermal energy, it is preferable to use an organic peroxide polymerization initiator or a diazonium-based polymerization initiator as a thermal polymerization initiator. In this case, the content of the polymerization initiator is preferably 0.1 to 5.0 mass% based on 100 mass% of the resin composition for film formation.

When curing is performed by light energy, such as UV rays or visible rays, known photopolymerization initiators can be widely used as a polymerization initiator. Specific examples include benzoin, isopropyl benzoin ether, isobutyl benzoin ether, benzophenone, Michler's ketone, chlorothioxanthone, dodecylthioxanthone, dimethyl thioxanthone, diethyl thioxanthone, acetophenone diethyl ketal, benzyl dimethyl ketal, 1-hydroxycyclohexyl phenyl ketone, 2-hydroxy-2-methyl-1-phenylpropan-1-one, and the like, with benzyl dimethyl ketal, 1-hydroxycyclohexyl phenyl ketone, 2-hydroxy-2-methyl-1-phenylpropan-1-one, and the like being preferable. Additionally, onium salt initiators, tri(substituted)phenylsulfonium-based initiators, diazosulfone-based initiators, and iodonium-based initiators are preferably used as a cationic photopolymerization initiator. Further, organometallic initiators, such as alkyllithium initiators can be preferably used as an anionic photopolymerization initiator. These may be used alone, or in a combination of two or more.

The amount of the photopolymerization initiator, when used, is preferably 0.1 to 10.0 mass% based on 100 mass% of the resin composition for film formation. If the amount of the photopolymerization initiator used is less than the lower limit, curing is likely to become insufficient. On the other hand, if the amount exceeds the upper limit, the coating easily becomes uneven and is easily deteriorated.

The resin composition for film formation can be obtained by an appropriate method comprising, for example, kneading the materials mentioned above.

The resin composition for film formation preferably has a viscosity of 20 to 100000 cps/20°C, more preferably 20 to 80000 cps/20°C, and still more preferably 20 to 12000 cps/20°C. When the viscosity of the resin composition for film formation is within this range, the leveling property at the time of film formation is improved, which makes it easier to obtain a uniform film thickness.

As the resin composition for film formation, urethane-based resin and silicone-based resin are preferably used, from the viewpoint of achieving high oxygen permeability. A resin having adhesiveness may also be added to increase adhesiveness.

The urethane-based resin may be, for example, Asaflex 825 (produced by Asahi Kasei Corporation), Pellethane 2363-80A, Pellethane 2363-80AE, Pellethane 2363-90A, and Pellethane 2363-90AE (all produced by The Dow Chemical Company), and HI-MUREN Y-237NS (produced by Dainichiseika Color & Chemicals Mfg. Co., Ltd.) .

The formulations and compositions of silicone-based resin and silicone polymer, and the formulations and compositions of silicone-based resin compositions for obtaining these, are not particularly limited. The monomer used for the silicone-based resin composition may contain one functional group, two functional groups, three functional groups, or four functional groups. These monomers may be used alone, or in a combination of two or more. The monomer may also be halogenated alkylsilane, unsaturated group-containing silane, aminosilane, mercaptosilane, epoxysilane, or the like. Examples of usable monomers include those represented by the following chemical formulas: $HSiCl_3$, $SiCl_4$, $MeSiHCl_2$, $Me_3SiCl$, $MeSiCl_3$, $Me_2SiCl_2$, $Me_2HSiCl$, $PhSiCl_3$, $Ph_2SiCl_2$, $MePhSiCl_2$, $Ph_2MeSiCl$, $CH_2=CHSiCl_3$, $Me(CH_2=CH)SiCl_2$, $Me_2(CH_2=CH)SiCl$, $(CF_3CH_2CH_2)MeSiCl_2$, $(CF_3CH_2CH_2)SiCl_3$, and $CH_{18}H_{37}SiCl_3$ (in the chemical formulas, "=" represents a double bond, "Me" represents a methyl group, and "Ph" represents a phenyl group). These may be used alone, or in a combination of two or more. Examples of other usable organic groups include alkyl groups, such as propyl, isopropyl, butyl, isobutyl, tert-butyl, hexyl, octyl, and decyl; aryl groups, such as phenyl, tolyl, xylyl, and naphthyl; cycloalkyl groups, such as cyclopentyl and cyclohexyl; aralkyl groups, such as benzyl, 2-phenylethyl, and 3-phenylpropyl; and the like. Among these, methyl, phenyl, or a combination of these is preferable. A component comprising methyl, phenyl, or a combination of methyl and phenyl is easily synthesized and has excellent chemical stability. When a polyorganosiloxane with particularly excellent solvent resistance is used, methyl, phenyl, or a combination of methyl and phenyl is preferably used in combination with 3,3,3-trifluoropropyl.

Further, the silicone-based resin composition may comprise organoalkoxysilane. Examples of organoalkoxysilane include compounds represented by the following chemical formulas: $Me_3SiOCH_3$, $Me_2Si(OCH_3)_2$, $MeSi(OCH_3)_3$, $Si(OCH_3)_4$, $Me(C_2H_5)Si(OCH_3)_2$, $C_2H_5Si(OCH_3)_3$, $C_{10}H_{21}Si(OCH_3)_3$, $PhSi(OCH_3)_3$, $Ph_2Si(OCH_3)_2$, $MeSiOC_2H_5$, $Me_2Si(OC_2H_5)_2$, $Si(OC_2H_5)_4$, $C_2H_5Si(OC_2H_5)_3$, $PhSi(OC_2H_5)_3$, and $Ph_2Si(OC_2H_5)_2$. These may be used alone, or in a combination of two or more

Further, the silicone-based resin composition may further comprise organosilanol. Examples of organosilanol include compounds represented by the following chemical formulas: $Me_3SiOH$, $Me_2Si(OH)_2$, $MePhSi(OH)_2$, $(C_2H_5)_3SiOH$, $Ph_2Si(OH)_2$, and $Ph_3SiOH$. These may be used alone, or in a combination of two or more

To obtain a silicone polymer used for the silicone-based resin, for example, a reaction such as hydrolysis of chlorosilane or ring-opening polymerization of cyclic dimethylsiloxane oligomers is preferably used. The polymer used at this time is, for example, at least one member selected from the group consisting of dimethyl group-containing polymers, methylvinyl group-containing polymers, methylphenylvinyl group-containing polymers, methylfluoroalkyl group-containing polymers, and the like.

A method for curing a silicone polymer, that is, a method for obtaining a silicone-based resin by reaction (vulcanization) is not particularly limited. Examples include heat vulcanization and room-temperature vulcanization. For use in the reaction, a millable silicone-based resin composition or a liquid rubber silicone-based resin composition may be used. The polymer used for the millable silicone-based resin composition preferably has a polymerization degree of about 4000 to 10000. Those of one component or two components may be used. Examples of the reactions include dehydration condensation reaction of silanol groups (Si-OH), condensation reaction of a silanol group and a hydrolyzable group, reaction of methylsilyl (Si-CH$_3$) or vinylsilyl (Si-CH=CH$_2$) with organic peroxide, addition reaction of vinylsilyl and hydrosilyl (Si-H), reaction by UV rays, reaction by an electron beam, and the like.

Dehydration Condensation Reaction of Silanol Groups

As a catalyst, at least one member selected from the group consisting of zinc octylate, iron octylate, organic acid salts of cobalt, tin, etc., and amine-based catalysts may be used. The reaction may be allowed to proceed by heating.

Condensation Reaction of Silanol Group and Hydrolyzable Group

As a catalyst, it is possible to add an acid, an alkali, an organic tin compound, an organic titanium compound, or the like. The hydrolyzable group may be alkoxy, acetoxy, oxime, aminoxy, propenoxy, or the like.

Reaction of Methylsilyl or Vinylsilyl with Organic Peroxide

As a peroxide curing agent that accelerates reactions, it is possible to add an organic peroxide, an acyl-based organic peroxide, an alkyl-based organic peroxide, or the like. Examples of usable acyl-based organic peroxides include p-methylbenzoyl peroxide and the like. Examples of usable alkyl-based organic peroxides include 2,5-dimethyl-2,5 bis(t-butylperoxy)hexane, dicumyl peroxide, and the like. The reaction temperature is, for example, 120°C or higher. Secondary vulcanization (post cure) may also be performed. The amount of the peroxide curing agent added is preferably 0.1 to 10 mass% based on the solids content of the resin.

Addition Reaction of Alkenyl and Hydrosilyl

For example, a vinyl group is preferably used as an alkenyl group. The reaction may be performed at an ordinary temperature or with heating. The reaction may be performed in an open system or a closed system. In the process of obtaining a composition used for the addition reaction of alkenyl and hydrosilyl, it is possible to add an additive for removing organic compounds containing nitrogen, phosphorus, sulfur, etc., ionic compounds of metals, such as tin and lead, compounds containing an unsaturated group, such as acetylene, alcohol, water, and carboxylic acid. Alternatively, it is possible to perform a step of removing these substances. In the addition reaction of alkenyl and hydrosilyl, vinyl group-containing polysiloxane or hydrogen polysiloxane is preferably used. The vinyl group-containing polysiloxane is preferably a linear polysiloxane having a viscosity of 1 to 100000 mPa·s at 23°C. This polysiloxane contains one or more vinyl groups in one molecule. Specific examples of the vinyl group-containing polysiloxane include dimethylsiloxane-methylvinylsiloxane copolymers capped with trimethylsiloxy groups at both molecular chain ends, methylvinylpolysiloxane capped with trimethylsiloxy groups at both molecular chain ends, dimethylsiloxane-methylvinylsiloxane-methylphenylsiloxane copolymers capped with trimethylsiloxy groups at both molecular chain ends, dimethylpolysiloxane capped with dimethylvinylsiloxy groups at both molecular chain ends, methylvinylpolysiloxane capped with dimethylvinylsiloxy groups at both molecular chain ends, dimethylsiloxane-methylvinylsiloxane copolymers capped with dimethylvinylsiloxy groups at both molecular chain ends, dimethylsiloxane-methylvinylsiloxane-methylphenylsiloxane copolymers capped with dimethylvinylsiloxy groups at both molecular chain ends, dimethylpolysiloxane capped with trivinylsiloxy groups at both molecular chain ends, and the like. These polysiloxanes may be used alone, or in a combination of two or more.

The hydrogen polysiloxane is preferably a linear polysiloxane having a viscosity of 1 to 100000 mPa•s at 23°C. A hydrogen polysiloxane contains at least one hydrogen atom bound to silicon in one molecule. Specific examples of hydrogen polysiloxanes having a viscosity of 1 to 100000 mPa•s at 23°C include dimethylpolysiloxane capped with dimethylhydrogensiloxy groups at both molecular chain ends, dimethylpolysiloxane capped with diphenylhydrogensiloxy groups at both molecular chain ends, methylphenylpolysiloxane capped with dimethylhydrogensiloxy groups at both molecular chain ends, diphenylpolysiloxane capped with dimethylhydrogensiloxy groups at both molecular chain ends, methylphenylsiloxane-dimethylsiloxane copolymers capped with dimethylhydrogensiloxy groups at both molecular chain ends, diphenylsiloxane-dimethylsiloxane copolymers capped with dimethylhydrogensiloxy groups at both molecular chain ends, and mixtures of two or more of these.

In the resin composition used in the addition reaction of alkenyl and hydrosilyl, the molar ratio of hydrogen bound to silicon to alkenyl is preferably 0.01 to 20 mol, and more preferably 1 to 2 mol.

Examples of reaction catalysts include platinum group metals, such as platinum, palladium, and rhodium; chloroplatinic acid; alcohol-modified chloroplatinic acid; platinum compounds, such as coordination compounds of chloroplatinic acid with olefins, vinylsiloxane, or acetylene compounds; platinum group metal compounds, such as tetrakis(triphenylphosphine)palladium and chlorotris(triphenylphosphine)rhodium; and the like. Since compatibility with silicone oil is required, a platinum compound obtained by modifying chloroplatinic acid with silicone is preferably used. The amount of the catalyst when used is preferably 0.01 ppm to 10000 ppm, and more preferably 0.1 ppm to 1000 ppm, based on the solids content.

The total amount of hydrosilyl is usually 0.01 to 20 mol, and preferably 0.1 to 10 mol, per mole of alkenyl bound to silicon in the entire silicone-based resin composition. If the total amount is less than the lower limit of this range, there is a tendency that the obtained silicone-based resin composition is not easily sufficiently cured. If the total amount exceeds the upper limit of this range, the mechanical properties and heat resistance of the obtained cured silicone-based resin composition tend to be easily deteriorated.

A reaction control agent is added to prevent a silicone-based resin from thickening or gelling before curing when the silicone-based resin is added or used in a process of, for example, applying to the base material. The reaction control agent may be a low-molecular-weight polysiloxane having a plurality of alkenyl groups, an acetylene alcohol-based compound, or the like.

Reaction by UV Rays

A UV-ray-curable silicone-based resin may be those of radical reaction type (acrylic type, mercapto type), radical reaction/condensation reaction combined type (mercapto/isopropenoxy type, acrylic/alkoxy type), and addition reaction type using a UV-ray active platinum catalyst.

For the radical reaction type (acrylic type), radical polymerization reaction of an organic group having an acrylic group bound to siloxane is performed in the presence of a photosensitizer.

For the radical reaction type (mercapto type), a radical addition reaction of an organic group having a mercapto group bound to siloxane with vinyl group-containing polysiloxane is performed in the presence of a photosensitizer. Examples of catalysts used with those of the addition reaction type using a UV-ray active platinum catalyst include a (methylcyclopentadienyl)trimethyl platinum complex, a bisacetylacetonatoplatinum(II) complex, and the like. Further, curing is preferably performed with a light source of mainly 365 nm. A main functional group used in the photocuring reaction may be an acrylic group or an epoxy group. A photoinitiator may be used as a composition used for the reaction by UV rays.

Method for Imparting Adhesiveness to Silicone-based Resin

To impart adhesiveness to the silicone-based resin, for example, a method for adding a silicone polymer that imparts adhesiveness is preferably used. The silicone polymer that imparts adhesiveness is preferably an MQ resin. The MQ resin is a polymer with a three-dimensional structure synthesized from a monomer with one functional group (unit M) and a monomer with four functional groups (unit Q). The molecular weight of the polymer with a three-dimensional structure is preferably 10 to 100000, and more preferably 100 to 10000. It is preferable to use a methyl group as the organic group of each functional group monomer. When the silicone-based resin is of the addition reaction type, however, an alkenyl group is preferably used. The content of the MQ resin in the silicone-based resin is preferably 10 to 99 mass%, and more preferably 20 to 80 mass%, on a solids content basis, from the viewpoint of achieving both strength and adhesiveness of the silicone-based resin. In the present invention, it is also possible to appropriately add a monomer with two functional groups (unit D) or a monomer with three functional groups (unit T) to obtain a silicone polymer that imparts adhesiveness, and it is also possible to add monomers or oligomers having other functional groups.

The MQ resin preferably has a structure in which the ends of the condensate of units Q are sealed with units M. The molar ratio of units M to units Q is preferably 0.4 to 1.2, and more preferably 0.6 to 0.9 from the viewpoint of achieving both adhesiveness and strength of the silicone-based resin.

An additive may be added in the process of obtaining the silicone polymer or the silicone-based resin from a silicone monomer. Examples of the additive include a reinforcing agent (e.g., a silica filler, such as dry silica and wet silica), a dispersant, an adhesion aid (e.g., a silane coupling agent), an adhesion promoter (e.g., an organic metal compound), a reaction control agent, an extender (e.g., crystalline silica, calcium carbonate, and talc), a heat resistance improver (e.g., iron oxide, cerium oxide, and titanium oxide), a flame retardant (e.g., titanium oxide and carbon), a heat-conductive filler, a conductive agent, a surface treatment agent, a pigment, and a dye; and metal oxides, hydroxides, carbonates, and fatty acid salts of rare earths, titanium, zircon, manganese, iron, cobalt, nickel, etc.

The silica filler may be, for example, a known silica fine powder. The silica fine powder may be hydrophilic or hydrophobic. Examples of hydrophilic silica fine powders include wet silica, such as precipitated silica, and dry silica, such as silica xerogel and fumed silica. Examples of hydrophobic silica fine powders include silica fine powders obtained by hydrophobizing the surface of hydrophilic silica fine powders. Examples of hydrophobizing agents include organosilazanes, such as hexamethyldisilazane; halogenated silanes, such as methyltrichlorosilane, dimethyldichlorosilane, and trimethylchlorosilane; organoalkoxysilanes in which the halogen of the halogenated silane is substituted with alkoxy such as methoxy or ethoxy; and the like. Examples of hydrophobic treatment methods include a method in which a hydrophilic silica fine powder is heat-treated with a hydrophobizing agent at 150 to 200°C, particularly 150 to 180°C for about 2 to 4 hours. The hydrophobic silica fine powder thus obtained by hydrophobizing the surface of hydrophilic silica fine powder in advance may be added to the resin composition for film formation. Alternatively, the hydrophilic silica fine powder and a hydrophobizing agent may be incorporated together in the resin composition for film formation so that the surface of the silica fine powder is hydrophobized in the process of preparing the resin composition for film formation.

Specific examples of silica fillers include hydrophilic silica fine powders, such as AEROSIL (registered trademark) 50, 130, 200, and 300 (product name, produced by Nippon Aerosil Co., Ltd.), CAB-O-SIL (registered trademark) MS-5 and MS-7 (product name, produced by Cabot Co.), Reolosil QS-102 and 103 (product name, produced by Tokuyama Corporation), and Nipsil LP (product name, produced by Nippon Silica); hydrophobic silica fine powders, such as AEROSIL (registered trademark) R-812, R-812S, R-972, and R-974 (product name, produced by Degussa), Reolosil MT-10 (product name, produced by Tokuyama Corporation), and Nipsil SS series (product name, produced by Nippon Silica).

When a silica fine powder is used, the amount is usually 1 to 50 mass% on a solids content basis. When the amount is 1 mass% or more, the strength-imparting effect of the silica filler is sufficiently obtained. When the amount is 50 mass% or less, the resulting silicone resin composition has sufficient fluidity, resulting in excellent workability.

The adhesion promoter may be, for example, an organic titanium compound represented by an organic acid salt of titanium. The adhesion promoter can also be used as a catalyst for further accelerating the curing of the silicone-based resin composition and further improving its adhesion. The adhesion promoters may be used alone, or in a combination of two or more.

Examples of adhesion promoters include titanium chelate compounds, alkoxy titanium, and combinations thereof. Specific examples of titanium chelate compounds include diisopropoxybis(acetylacetonato)titanium, diisopropoxybis(ethylacetoacetato)titanium, dibutoxybis(methylacetoacetato)titanium, and the like. Specific examples of alkoxy titanium include tetraethyl titanate, tetrapropyl titanate, tetrabutyl titanate, and the like. The alkoxy in alkoxy titanium may be linear or branched.

The amount of the adhesion promoter is preferably 0.01 to 10 mass%, and more preferably 0.1 to 5 mass%, on a solids content basis. When the amount is equal to or more than the lower limit of this range, the adhesion is easily improved. When the amount is equal to or less than the upper limit of this range, the surface of the obtained resin composition for film formation is prevented from being cured too fast.

A silane coupling agent is a compound that has, in one molecule, alkoxy bound to silicon, and a reactive group that is chemically bound to an adherend such as a metal or various synthetic resins. It is also possible to use a compound that has alkenyl or hydrogen instead of the alkoxy bound to silicon. The reactive group that is chemically bound to an adherend may be an epoxy group or acrylic group.

When a silicone-based resin is applied, a primer may be applied to a material for application before the application of the silicone-based resin. The primer may be a silicone-based resin of condensation curing type, addition curing type, or the like. The primer is preferably applied in an amount of 0.1 to 1.2 g/m$^2$.

Examples of silicone-based resins include SYLGARD 186, DOWSIL 3-6512, SYLGARD 527, DOWSIL X3-6211, SYLGARD 3-6636, DOWSIL SE 1880, DOWSIL SE960, DOWSIL 781 Acetoxy Silicone, Dow Corning SE9187, DOWSIL Q1-4010, SYLGARD 1-4128, DOWSIL 3140 RTV Coating, DOWSIL HC2100, SIL-OFF Q2-7785, Sila Seal 3FW, Sila Seal DC738RTV, DC3145, and DC3140 (all produced by Dow Corning Toray Co., Ltd.), ELASTOSIL RT707W, ELASTOSIL EL4300, ELASTOSIL M4400, ELASTOSIL M8012, SILRES BS CREME C, SILRES BS 1001, SILRES BS 290, ELASTSIL 912, ELASTSIL E43N, ELASTOSIL N9111, ELASTOSIL N199, SEMICOSIL 987GR, ELASTOSIL RT772, ELASTOSIL RT745, ELASTOSIL LR3003/05, ELASTOSIL LR3343/40, ELASTOSIL LR3370/40, ELASTOSIL LR3374/50BR, ELASTOSIL EL1301, ELASTOSIL EL 4406, ELASTOSIL EL3530, ELASTOSIL EL 7152, ELASTOSIL R401/100H, SILPURAN 21xx series (produced by Wacker Asahi Kasei Silicone Co., Ltd.), KE-3423, KE-347, KE-3479, KE-1830, KE-1820, KE-1056, KE-1800T, KE-66, KE-1031, KE-12, KE-1300T, SD4584PSA, KS-847T, KF-2005, KNS-3002, KR-100, KR-101-10, KR-130, KR-3600, KR-3704, KR-3700, KR-3701, X-40-3237, X-40-3291-1, X-40-3240, Sealant 45, Sealant Master 300, Sealant 72, KE-42, Sealant 70, KE-931-U, KE-9511-U, KE-541-U, KE-153-U, KE -361-U, KE-1950-10, KEG-2000-40, KE-2019-40, KE-2090-50, and KE-2096-60 (Shin-Etsu Chemical Co., Ltd.), and the like. A catalyst may further be added to the silicone-based resin. The catalyst may be zinc octylate, iron octylate, an organic acid salt of cobalt, tin, etc., or an amine-based catalyst. It is also possible to use an organic tin compound, an organic titanium compound, and a platinum compound. The catalyst may be, for example, CAT-PL-50T (produced by Shin-Etsu Chemical Co., Ltd.) or NC-25 (produced by Dow Corning Toray Co., Ltd.). During application, a solvent, such as toluene, xylene, or an alcohol may be added. Examples of usable primers include Primer AQ-1, Primer C, Primer MT, Primer T, Primer D, Primer A-10, Primer R-3, and Primer A-20 (produced by Shin-Etsu Chemical Co., Ltd.); and the like.

The formed gas-permeable non-porous layer 212 (a film for water treatment) preferably has a thickness of 5 to 100 $\mu$m, and more preferably 10 to 90 $\mu$m, in consideration of achieving both oxygen permeability and waterproofing.

The gas-permeable non-porous layer 212 with a thickness of 5 $\mu$m or more causes less risk of breakage of the gas-permeable non-porous layer 212 even when high water pressure is applied to the gas-permeable non-porous layer 212. Further, when the thickness of the gas-permeable non-porous layer 212 is 100 $\mu$m or less, the oxygen permeability can be sufficiently maintained, and as a result, sufficient wastewater treatment performance is obtained. In the present specification, the thickness of the gas-permeable non-porous layer 212 is defined as a value measured in accordance with the measurement method disclosed in the "6.1 Thickness" section in "Test methods for nonwovens" of JIS 1913: 2010.

Base Material

The sheet laminate 81 may be produced using a resin composition for film formation by immersion, multi-layer extrusion, application, or lamination with respect to a base material 211. The base material 211 is not particularly limited as long as it can permeate oxygen etc., and known materials can be widely used. Specifically, it is preferable to use at least one member selected from the group consisting of a microporous membrane, a porous sheet, and a non-porous membrane with high oxygen permeability. If the base material 211 does not have gas permeability, sufficient oxygen cannot be sent to the biofilm 214, and the biofilm 214 thus cannot be stably formed.

Embodiment 3 of the present invention is described below based on Examples; however, the present invention is not limited to these.

Example 17

As a base material, a base material (1) (thickness: 150 $\mu$m) was prepared by thermal lamination of a polyethylene or polyester non-woven fabric. This polyethylene or polyester non-woven fabric is used as a reinforcing layer on one side of the microporous membrane in Cellpore NW07H produced by Sumikasekisui Film Co., Ltd. Next, a resin composition for film formation (2) was obtained by uniformly mixing 70 parts by mass of undiluted solution of an addition curable silicone adhesive agent having a solids content concentration of 60 mass% (product name: SD-4560, produced by Dow Corning Toray Co., Ltd.) with 30 parts by mass of undiluted solution of an addition curable silicone adhesive agent having a solids content of 40 mass% (product name: SD-4587L, produced by Dow Corning Toray Co., Ltd.), 54 parts by mass of toluene as a diluting solvent, and 0.3 parts by mass of a platinum catalyst (product name: NC-25, produced by Dow Corning Toray Co., Ltd.) as a curing catalyst. After (2) was applied to the surface of (1) on which the non-woven fabric was not laminated, the resulting product was allowed to stand for curing for 30 minutes in an atmosphere of 130°C to obtain a film with a thickness of 180 $\mu$m. After curing, ELEVES II (30 g/m$^2$) (produced by Unitika Ltd.) as a non-woven fabric was laminated on the film to obtain a sheet laminate of Example 17.

Example 18

A sheet laminate was obtained in the same manner as in Example 17, except that ELEVES II was not laminated.

Comparative Example 3

A silicone sheet having no adhesiveness (ultra-thin silicone sheet, product number: 3-3066-01, thickness: 0.1 mm, produced by AS ONE Corporation) was used as a sheet laminate.

Comparative Example 4

To apply to the film surface of the base material (1) used in Example 17 (the surface on which the non-woven fabric was not laminated), a mixture was obtained by adding 1 part by mass of a curing agent (PL-50T, produced by Shin-Etsu Chemical Co., Ltd.) to 99 parts by mass of a curable silicone resin (KS-847H, produced by Shin-Etsu Chemical Co., Ltd.). The mixture was adjusted to 2 mass% using a toluene/MEK mixed solvent (mixing ratio: 1:1), and was applied with a bar coater. Thereafter, the resulting product was heated and dried at 140°C for 1 minute, thus obtaining a sheet laminate having a total thickness of 180 $\mu$m.

Based on the above formulations, resin compositions for film formation of each Example and each Comparative Example were obtained.

Table 2

| | Base material (1) | Resin composition for film formation (2) | Adhesive component | Non-woven fabric | Thickness of resin composition for film formation (2) $\mu$m |
|---|---|---|---|---|---|
| Ex. 17 | ○ | ○ | ○ | ○ | 30 |
| Ex. 18 | ○ | ○ | ○ | × | 30 |
| Comp. Ex. 3 | × | ○ (ultra-thin silicone sheet, produced by AS ONE Corporation) | × | × | 100 |
| Comp. Ex. 4 | ○ | ○ | × | × | 30 |
| ○: used, ×: not used | | | | | |

Table 3

| No. | Structure (*2) | | | | | Evaluation | | | | | | | |
|---|---|---|---|---|---|---|---|---|---|---|---|---|---|
| | Resin application | Adhesion component | Non-woven fabric | Silicone resin thickness (μm) | Silicone resin type | Long-term pressure resistance (100 days later >0.4 Mpa) | OTR *3 (>20 g/m2·d) | Ball tack *1 (>1) | Day | BF adhesion (No peeling off) | Treatment status | Judgement | Note |
| Target | | | | | | >0.4 | >20 g/m2·d | >1 | | | >80% | | Non-woven fabric, an adhesive component, and a resin were required. |
| Ex.17 | ○ | ○ | ○ | 30 | | >0.4 ○ | 30 | 3 | 8 | ○ | 91 % ○ | ○ | |
| | | | | | | | | | 30 | ○ | 87% ○ | | |
| | | | | | | | | | 70 | ○ | 83% ○ | | |
| Ex. 18 | ○ | ○ | × | 30 | | >0.4 ○ | 32 | 3 | 8 | ○ | 92% ○ | ○ | Although non-woven fabric was not necessarily required, a resin and an adhesive component were required. |
| | | | | | | | | | 30 | ○ | 89% ○ | | |
| | | | | | | | | | 70 | ○ | 82% ○ | | |

(continued)

| No. | Structure (*2) | | | | | | | | Evaluation | | | |
|---|---|---|---|---|---|---|---|---|---|---|---|---|
| | Resin application | Adhesion component | Non-woven fabric | Silicone resin thickness (µm) | Silicone resin type | Long-term pressure resistance 100 days later >0.4 Mpa | OTR *3 >20 g/m²·d | Ball tack *1 >1 | BF adhesion Day / No peeling off | Treatment status >80% | Judgement | Note |
| Target | ○ | × | × | | | ○ >0.4 | 30 | 0 | | | × | |
| Comp. Ex. 3 | ○ | × | × | 100 | Unknown (Si rubber sheet produced by Kenis Limited) | ○ >0.4 | 30 | 0 | 8  △ | ○ 85% | × | Without adhesiveness, non-woven fabric was peeled off, and the biofilm did not adhere well. |
| | | | | | | | | | 30  △ | △ 78% | | BF was peeled off during water exchange. |
| | | | | | | | | | 70  △ | △ 78% | | Biofilm thickness was uneven. |

(continued)

| No. | Structure (*2) | | | | | Evaluation | | | | | | | | |
| --- | --- | --- | --- | --- | --- | --- | --- | --- | --- | --- | --- | --- | --- | --- |
| | Resin application | Adhesion component | Non-woven fabric | Silicone resin thickness (μm) | Silicone resin type | Long-term pressure resistance | OTR *3 | Ball tack *1 | Day | BF adhesion | | Treatment status | | Judgement | Note |
| Target | | | | | | 100 days later >0.4 Mpa | >20 g/m²•d | >1 | | No peeling off | | >80% | | | |
| Comp. Ex. 4 | ○ | × | × | 30 | | ○ | >0.4 | 30 | 0 | 8 | Δ | | ○ | 86% | × | Without adhesiveness, non-woven fabric was peeled off, and the biofilm did not adhere well. |
| | | | | | | | | | | 30 | Δ | | Δ | 77% | | BF was peeled off during water exchange. It is assumed that treatment was completed by treating the peeled-off biofilm. |
| | | | | | | | | | | 70 | Δ | | ○ | 85% | | BF was peeled off during water exchange. It is assumed that treatment was completed by treating the peeled-off biofilm. |

In each Example and each Comparative Example, peeling off of the biofilm was evaluated.

Wastewater Treatment Performance Test

A sealed cubic evaluation vessel having an internal dimension of 7 cm and a sheet laminate positioned at one of its vertical side surfaces was used. For the surface of the evaluation vessel facing the sheet laminate, a transparent PVC material with a thickness of 1 mm was used. For the other surfaces, a PVC material with a thickness of 10 mm was used. On the air side of the sheet laminate, a polypropylene mesh (Crown net, 24 mesh, produced by Dio Chemicals, Ltd.) was laminated to prevent deformation of the sheet laminate due to water pressure. The evaluation vessel was filled with organic matter-containing water having the following composition, and 5 g of paddy soil, which is soil containing microorganisms responsible for decomposition of organic matter, was added. The mass of paddy soil was defined as the mass after an aqueous dispersion of paddy soil was centrifuged and the supernatant was discarded. The evaluation vessel was placed in a constant-temperature chamber maintained at $30 \pm 2°C$, and allowed to stand under the condition of continuous stirring with a stirrer. For the stirrer, a CB-4 controller for a B-1 magnetic stirrer and a B-1 magnetic stirrer produced by AS ONE Corporation were used, and the controller level was set to 4. The power supply frequency was 60 Hz. As the stirring bar, one stirring bar produced by AS ONE Corporation (made of PTFE resin) with a length of 30 mm and a diameter of 8 mm was used. The power supply frequency was 60 Hz. An operation of removing the evaluation vessel from the constant-temperature chamber every 3.5 days to discharge all the liquid in the evaluation vessel and replace the organic matter-containing water was continued for 70 days. (That is, an operation of stirring organic matter-containing water for 3.5 days, discharging the organic matter-containing water from the evaluation vessel, and then introducing organic matter-containing water into the evaluation vessel was repeated.) Thereafter, the evaluation vessel was filled with the organic matter-containing water, and the CODCr concentration was measured. The organic matter removal percentage R is calculated from the following equation (4), in which A represents a CODCr concentration A before treatment (mg/L), and B represents a CODCr concentration B after 3.5 days (mg/L).

$$\text{Equation 4}$$
$$R=(1-B/A)\times 100$$

A discharge port with an inner diameter of 2 cm was provided in the upper portion of the evaluation vessel, making it possible to discharge the liquid by turning the evaluation vessel upside down in the vertical direction. The sheet laminate was defined as having stable treatment performance when the organic matter removal percentage R determined based on the wastewater treatment performance test was 80% or more on days 30 and 70.) (In Table 3, the "Treatment status" column shows the organic matter removal percentage R on days 8, 30, and 70. Here, $\bigcirc$ indicates that the organic matter removal percentage R was 80% or more, and $\Delta$ indicates that the organic matter removal percentage R was 79% or lower.)

Composition of Organic Matter-containing Water

Soluble starch: 0.8 g/L, peptone: 0.084 g/L, yeast extract: 0.4 g/L, urea: 0.052 g/L, $CaCl_2$: 0.055 g/L, $KH_2PO_4$: 0.017 g/L, $MgSO_4 \cdot 7H_2O$: 0.001 g/L, KCl: 0.07 g/L, $NaHCO_3$: 0.029 g/L As a solvent, tap water from the Kyoto laboratories of Sekisui Chemical Co., Ltd., was used.

Evaluation of Biofilm Retention

Every time the wastewater was exchanged, the biofilm retention was evaluated using discharged water obtained by turning the evaluation vessel upside down in the vertical direction in the wastewater treatment performance test. The biofilm retention was evaluated using the suspended substance concentration SC (mg/L) of the discharged water. The suspended substance concentration SC was calculated using equation (5), wherein SW represents a suspended substance amount SW (mg) in the discharged water, and V represents a volume V (L) of the discharged water.

$$\text{Equation 5}$$
$$SC=SW/V$$

The suspended substance amount SW was obtained according to the method specified in Item 14.1 of Testing methods for industrial wastewater of JIS K 0102: 2013. The filter material used for the measurement was a glass filter produced by Advantec Toyo Kaisha, Ltd. (product number: G25; diameter: 47 mm). The biofilm retention was defined as low when the number of times at which the suspended substance concentration SC was 100 mg/L or more was 3 times or more during 70 days of the wastewater treatment performance test.

Evaluation

In Examples 17 and 18, the number of times at which the suspended substance concentration SC was 100 mg/L or more was less than 3 times during the entire measurement period of 70 days. This confirmed stable retention of the biofilm in Examples 17 and 18. In the wastewater treatment performance test as well, stable treatment was confirmed.

In the sheet laminates having no adhesiveness of Comparative Examples 3 and 4, the number of times at which the suspended substance concentration SC was 100 mg/L or more was 3 times or more during the entire measurement period of 70 days. Biofilm peeling was often confirmed, and the amount of microorganisms adhering to the surface was sparse and nonuniform. If sheet laminates such as those of Comparable Examples 3 and 4 were used in the wastewater treatment apparatus, there would be concern that peeling off of biofilms would occur, resulting in an increase in excess sludge, and that clumped biofilms would cause blockage due to clogging in the pipes or between membranes of the wastewater treatment apparatus. Accordingly, the application of the adhesive component on the surface is effective for stabilizing the biofilm on the sheet surface.

Table 4

| | Long-term pressure resistance | Oxygen supply rate (g/m$^2$/day) | Ball number | Peeling off of biofilm | |
|---|---|---|---|---|---|
| Ex. 17 | ○ | 30 | 3 | 8 days later | ○ |
| | | | | 30 days later | ○ |
| | | | | 70 days later | ○ |
| Ex. 18 | ○ | 32 | 3 | 8 days later | ○ |
| | | | | 30 days later | ○ |
| | | | | 70 days later | ○ |
| Comp. Ex. 3 | ○ | 30 | 0 | 8 days later | △ |
| | | | | 30 days later | △ |
| | | | | 70 days later | △ |
| Comp. Ex. 4 | ○ | 30 | 0 | 8 days later | △ |
| | | | | 30 days later | △ |
| | | | | 70 days later | △ |

Embodiment 4

Embodiment 4 of the present invention is described below.

Although not shown, in Embodiment 4, the gas supply body is provided with a gas delivery layer and a sheet laminate, and the gas delivery layer is placed in a bag formed of the sheet laminate. The gas delivery layer, for example, is shown in Figs. 5, 12, or 13.

As in the sheet laminate 21 shown in Fig. 4, in the sheet laminate of Embodiment 4, a microbial support layer 213, a base material 211, and a gas-permeable non-porous layer 212 are laminated in this order from the side that comes into contact with wastewater. Alternatively, as in the sheet laminate 81 shown in Fig. 14, in the sheet laminate of Embodiment 4, a microbial support layer 213, a gas-permeable non-porous layer 212, and a base material 211 are laminated in this order from the side that comes into contact with wastewater.

In Embodiment 4, in order to reduce the decrease in wastewater treatment functionality associated with use, the sheet laminate has a microbial adhesion index MA calculated according to the following equation (6) of 0.08 or more.

Equation (6)

$$MA = W \times Q^{2.8} \times 10^{-6}$$

W: Basis weight of microbial support layer (g/m$^2$); Q: Oxygen permeability (g/(m$^2$·d))

Microbial Support Layer

The microbial support layer can be formed into the above embodiment by a known method using materials shown in Embodiment 1. In particular, the microbial support layer is preferably formed as a result of surface treatment of a porous base material. By using such a method, the roughness and the zeta potential of the surface of the porous base material can be improved by the surface treatment, which consequentially improves microbial adhesion.

The surface treatment above may be performed by graft-polymerization of glycidyl methacrylate, followed by further reaction of diethylamine or sodium sulfite. Other than the above, it is also preferable to perform graft-polymerization of glycidyl methacrylate, followed by reaction of ammonia or ethylamine.

In forming the microbial support layer, a material that has polarity may be added to the porous base material. In the present specification, a resin that has polarity is defined as a resin having, in its composition, at least one functional group selected from the group consisting of hydroxy, aldehyde, carboxy, carbonyl, amino, nitro, sulfo, an ether bond, and an ester bond. The addition of a material that has polarity to the porous base material achieves such an effect that microorganisms easily adhere.

In the sheet laminate of Embodiment 4, the thickness of a biofilm measured under the following biofilm evaluation conditions is 1 mm or more and 5 mm or less. When the laminate of Embodiment 4 is used, and the measurement was performed under the following conditions, the thickness of the biofilm is 1 mm or more and 5 mm or less.

Biofilm Evaluation Conditions

(1) a sealed cubic evaluation vessel having an internal dimension of 7 cm and having the sheet laminate positioned at one of its vertical side surfaces is filled with organic matter-containing water;
(2) the organic matter-containing water has the following composition: soluble starch: 0.8 g/L, peptone: 0.084 g/L, yeast extract: 0.4 g/L, urea: 0.052g/L, CaCl$_2$: 0.055 g/L, KH$_2$PO$_4$: 0.017 g/L, MgSO$_4$•7H$_2$O: 0.001g/L, KCl: 0.07 g/L, NaHCO$_3$: 0.029 g/L, solvent: tap water;
(3) 5 g of paddy soil, which is soil containing microorganisms responsible for decomposition of organic matter, is added, the evaluation vessel is placed in a constant-temperature chamber maintained at 30±2°C, and all the liquid in the evaluation vessel is discharged every 3.5 days under the condition of continuous stirring with a stirrer;
(4) after an operation of replacing the organic matter-containing water is continued for 28 days, the evaluation vessel is filled with the organic matter-containing water (point in time Ta), and the sheet laminate after 3 days (point in time Tb) is taken out, wherein the mass of paddy soil is defined as the mass after an aqueous dispersion of paddy soil is centrifuged and the supernatant is discarded.

By forming a sheet laminate having a biofilm with a thickness of 1 mm or more and 5 mm or less when measured under the above biofilm evaluation conditions, the biofilm is not peeled off even when exposed to a high flow rate in the use of a membrane-aerated biofilm reactor (MABR), and maintains a suitable thickness. Further, since the suitable thickness of the biofilm is maintained, aeration is not required, which inhibits the occurrence of excess sludge due to the dropping of the biofilm, and reduction in treatment performance. Moreover, since brushing or the like for controlling the biofilm thickness is not required, damage of the film can be suppressed. Furthermore, the peeling of the biofilm caused by fluctuation in the flow volume and flow rate, deviation in the flow rate, and maintenance such as draining of the vessel can be prevented, and appropriate treatment can be performed.

Further, the sheet laminate of Embodiment 4 is preferably a sheet laminate that has an oxygen permeability of 10 g/(m$^2$·d) or more. Such a structure not only allows the thickness of the biofilm to be within the above range, but also allows treatment by aerobic microorganisms due to the spread of sufficient oxygen, and thus treatment is not changed to wastewater treatment by anaerobic microorganisms that do not require oxygen. Accordingly, generation of harmful gases such as hydrogen sulfide from wastewater in the wastewater treatment apparatus, and odor due to gas generation, can be reduced.

The sheet laminate more preferably has an oxygen permeability of 25 g/(m$^2$·d) or more. Setting the oxygen permeability to 25 g/(m$^2$·d) or more allows the vicinity of the microbial support layer to be aerobic, thus preventing an increase in the proportion of anaerobic microorganisms. Consequently, adhesion of the biofilm to the microbial support layer is maintained, and peeling of the biofilm is less likely to occur.

In a microorganism carrier that has no oxygen permeability, since the proportion of anaerobic microorganisms generally increases near the carrier, treatment changes to anaerobic treatment, and methane and hydrogen sulfide are discharged. Moreover, since aerobic microorganisms require oxygen, when oxygen does not reach the microorganisms, a phenomenon is observed in which the proportion of the aerobic microorganisms in the biofilm is reduced and the biofilm is more likely to peel off. Furthermore, oxygen can be supplied to wastewater by aeration or the like in order to enhance the treatment performance; however, when oxygen is supplied to wastewater using a sheet laminate that has low oxygen permeability, treatment performance may be reduced. Specifically, in the above case, the biofilm may become too thick, causing peeling of the biofilm, the biofilm may clog the flow, resulting in a short path, or the effective surface area of the sheet may be reduced, consequently reducing treatment performance.

Even more preferably, by setting the microbial adhesion index MA represented by the following equation (7) to 0.08 or more, the thickness of the biofilm can be set to 1 mm or more and 5 mm or less.

$$\text{Equation (7)}$$

$$MA = W \times Q^{2.8} \times 10^{-6}$$

W: Basis weight of microbial support layer ($g/m^2$); Q: Oxygen permeability ($g/(m^2 \cdot d)$)

In Embodiment 4, the oxygen permeability Q refers to the oxygen permeability of the sheet laminate, which is defined as a value obtained according to the oxygen supply test shown in Embodiment 1.

In Embodiment 4, the thickness of the biofilm is the thickness of the biofilm formed on the surface of the microbial support layer (excluding the thickness of the microbial support layer). For the portion to measure the thickness of, the thickness at the center of an inscribed circle in the area of the sheet laminate that is in contact with the organic matter-containing water is measured.

Embodiment 4 is explained in detail below based on Examples; however, the present invention is not limited to these.

Example 19

As shown in Table 5, a polypropylene microporous membrane (pore size: 33 $\mu$m or less; thickness: 120 $\mu$m) contained in Cellpore NW07H produced by Sekisui Chemical Co., Ltd., was used as a porous base material. As a microbial support layer, a non-woven fabric (Eleves II T0203WDO produced by Unitika Ltd.) having a basis weight of 20 $g/m^2$, a thickness of 120 $\mu$m, and a double structure in which the core was polyester and the sheath was polyethylene was used. By performing thermal lamination using a hot plate heated to 120°C, a sheet laminate was obtained.

Example 20

As a silicone resin composition used for forming a gas-permeable non-porous layer, a solution obtained by uniformly mixing 100 parts by mass of an addition-reaction-curable silicone resin (KR-3701) produced by Shin-Etsu Silicone, 0.5 parts by mass of a platinum catalyst (CAT-PL-50T) produced by Shin-Etsu Silicone, and 71 parts by mass of toluene was obtained. The silicone resin composition was applied to the surface opposite to the side of the microbial support layer on the porous base material with a bar coater, and then allowed to stand at 120°C for 10 minutes to thereby form a gas-permeable non-porous layer. The gas-permeable non-porous layer after the silicone resin compound was cured had a basis weight of 20 $g/m^2$ and a thickness of 18 $\mu$m.

Example 21

A sheet laminate was obtained in the same manner as in Example 20, except that the basis weight and the thickness of the gas-permeable non-porous layer were set to 100 $g/m^2$ and 90 $\mu$m, respectively.

Example 22

A sheet laminate was obtained in the same manner as in Example 20, except that the basis weight and the thickness of the gas-permeable non-porous layer were set to 40 $g/m^2$ and 36 $\mu$m, respectively, and a polyolefin non-woven fabric contained in Cellpore NW07H. (Cellpore NW07H has a three-layer structure composed of a nonwoven fabric, a microporous membrane, and a nonwoven fabric, of which one nonwoven fabric was used as the microbial support layer, and the polyolefin microporous membrane having a pore size of 33 $\mu$m or less and a thickness of 120 $\mu$m was used as the porous base material.) The microbial support layer had a basis weight of 10 $g/m^2$ and a thickness of 60 $\mu$m.

Example 23

A sheet laminate was obtained in the same manner as in Example 20, except that the basis weight and the thickness of the gas-permeable non-porous layer were 80 g/m$^2$ and 72 $\mu$m, respectively.

Example 24

A sheet laminate was obtained in the same manner as in Example 22, except that a microbial support layer having a basis weight of 70 g/m$^2$ and a thickness of 260 $\mu$m was formed by using a non-woven fabric (Eleves II T0703WDO produced by Unitika Ltd.) having a double structure in which the core was polyester and the sheath was polyethylene.

Example 25

A sheet laminate was obtained in the same manner as in Example 20, except that a gas-permeable non-porous layer having a basis weight of 10 g/m$^2$ and a thickness of 7 $\mu$m was formed by using a polyurethane resin (HI-MUREN Y-237NS produced by Dainichiseika Color & Chemicals Mfg. Co., Ltd.).

Example 26

A sheet laminate was obtained in the same manner as in Example 24, except that a base material, which was a polypropylene microporous membrane (Microporous Film produced by 3M, pore diameter: 0.3 $\mu$m or less; thickness: 40 $\mu$m) was used as a porous base material.

Example 27

A sheet laminate was obtained in the same manner as in Example 24, except that a base material, which was a polyolefin microporous membrane (EXEPOL E BSPBX-4 produced by Mitsubishi Plastics, Inc., 0.2 $\mu$m or less, thickness: 23 $\mu$m) was used as a porous base material.

Example 28

As a material serving both as a porous base material, which was a porous sheet, and a microbial support layer, a polyester resin non-woven fabric (VOLANS 7217P produced by Toyobo Co., Ltd., basis weight: 220 g/m$^2$; thickness: 0.9 mm) was prepared. In the same manner as in Example 22, the gas-permeable non-porous layer was laminated on the fabric.

Example 29

As a gas-permeable non-porous layer, a silicone sheet having a basis weight of 55 g/m$^2$ and a thickness of 50 $\mu$m (silicone rubber sheet, model 244-6012-01, produced by Hagitec Inc.) was used. As a microbial support layer, a non-woven fabric (Eleves II T0203WDO produced by Unitika Ltd.) having a basis weight of 20 g/m$^2$, a thickness of 120 $\mu$m, and a double structure in which the core was polyester and the sheath was polyethylene was used, thus obtaining a sheet laminate. A porous base material was not provided. The gas-permeable non-porous layer and the microbial support layer are laminated by adhering the outer peripheral portion with a silicone caulk (KE-441 produced by Shin-Etsu Silicone).

Example 30

As a gas-permeable non-porous layer, a silicone sheet having a basis weight of 110 g/m$^2$ and a thickness of 100 $\mu$m was used (silicone rubber sheet, model 244-6012-02, produced by Hagitec Inc.) As a microbial support layer, a non-woven fabric made from polypropylene and polyester resin (BT-030E produced by Unisel Co., Ltd., basis weight: 30 g/m$^2$; porosity: 73.4%, PP/PET=30/70) was used, thus obtaining a laminate sheet. A porous base material was not provided. The gas-permeable non-porous layer and the microbial support layer are laminated by adhering the outer peripheral portion with a silicone caulk (KE-441 produced by Shin-Etsu Silicone).

Comparative Example 5

As a gas-permeable non-porous layer, a polyethylene film having a basis weight of 5 g/m$^2$ and a thickness of

5 $\mu$m (HD roll standard bag produced by Askul Corporation, thickness: 0.005 mm) was used. As a microbial support layer, a non-woven fabric made from polypropylene and polyester resin (BT-060E produced by Unisel Co., Ltd., basis weight: 60 g/m$^2$; porosity: 67.7%, PP/PET= 30/70) was used, thus preparing a sheet laminate.

Comparative Example 6

A sheet laminate was prepared in the same manner as in Comparative Example 5, except that as a microbial support layer, a non-woven fabric made from polypropylene and polyester resin (BT-030E produced by Unisel Co., Ltd., basis weight: 30 g/m$^2$; porosity: 73.4%, PP/PET=30/70) was used.

Comparative Example 7

A sheet laminate was obtained by using as a gas-permeable non-porous layer, a polyethylene film having a basis weight of 15 g/m$^2$ and a thickness of 15 $\mu$m (AS ONE Corporation, Product No. 61-7289-21), and as an amicrobial support layer, a non-woven fabric (Eleves II T0203WDO produced by Unitika Ltd.) having a double structure in which the core was polyester and the sheath was polyethylene.

Comparative Example 8

A sheet laminate was obtained using a silicone sheet having a basis weight of 55 g/m$^2$ and a thickness of 50 $\mu$m (silicone rubber sheet, model 244-6012-01, produced by Hagitec Inc.) as a gas-permeable non-porous layer. A porous base material and a microbial support layer were not provided.

Comparative Example 9

A sheet laminate was prepared using a silicone sheet having a basis weight of 110 g/m$^2$ and a thickness of 100 $\mu$m (silicone rubber sheet, model 244-6012-02, produced by Hagitec Inc.) as a gas-permeable non-porous layer. A porous base material and a microbial support layer were not provided.

Biofilm Formation Evaluation

A sealed cubic evaluation vessel having an internal dimension of 7 cm and a sheet laminate positioned at one of its vertical side surfaces was used. For the surface of the evaluation vessel facing the sheet laminate, a transparent PVC material with a thickness of 1 mm was used. For the other surfaces, a PVC material with a thickness of 10 mm was used. On the air side of the sheet laminate, a polypropylene mesh (Crown net, 24 mesh, produced by Dio Chemicals, Ltd.) was laminated to prevent deformation of the sheet laminate due to water pressure. The evaluation vessel was filled with organic matter-containing water having the following composition, and 5 g of paddy soil, which was soil containing microorganisms responsible for decomposition of organic matter, was added. The evaluation vessel was placed in a constant-temperature chamber maintained at $30\pm2$°C, and allowed to stand under the condition of continuous stirring with a stirrer. For the stirrer, a CB-4 controller for a B-1 magnetic stirrer and a B-1 magnetic stirrer, produced by AS ONE Corporation were used, and the controller level was set to 4. The power supply frequency was 60 Hz. As the stirring bar, one stirring bar produced by AS ONE Corporation (made of PTFE resin) with a length of 30 mm and a diameter of 8 mm was used. The power supply frequency was 60 Hz. An operation of removing the evaluation vessel from the constant-temperature chamber every 3.5 days to discharge all the liquid in the evaluation vessel and replace the organic matter-containing water was continued for 28 days. A discharge port with an inner diameter of 2 cm was provided in the upper portion of the evaluation vessel, and the liquid was discharged by turning the evaluation vessel upside down in the vertical direction. Next, the evaluation vessel was filled with the organic matter-containing water (point in time Ta), the sheet laminate after 72 hours (point in time Tb) was taken out, and the thickness of the biofilm was measured at the center of the area that is in contact with the organic matter-containing water of the sheet laminate. For measurement, a miter rule 45° 90° standard model produced by Shinwa Rules Co., Ltd., was used. The thickness H (mm) of the biofilm was measured by reading the biofilm thickness value with fractions rounded up to increments of 0.5 mm. For example, if the miter rule 45° 90° read 1.1 mm, the biofilm thickness H was defined as 1.5 mm, and if the miter rule 45° 90° read 2.0 mm, the biofilm thickness H was defined as 2.0 mm.

Composition of Organic Matter-containing Water

Soluble starch: 0.8 g/L, peptone: 0.084 g/L, yeast extract: 0.4 g/L, urea: 0.052g/L, CaCl$_2$: 0.055 g/L, KH$_2$PO$_4$: 0.017 g/L, MgSO$_4$•7H$_2$O: 0.001g/L, KCl: 0.07 g/L, NaHCO$_3$: 0.029 g/L. As a solvent, tap water in the Kyoto R&D laboratories of Sekisui Chemical Co., Ltd., was used.

Organic Matter Removal Rate

R (g/m²·d) calculated based on the CODCr concentration A (g/L) in the point in time Ta, the CODCr concentration B (g/L) in the point in time Tb, and the water amount V (L) in the evaluation vessel by using the following relationship equation was defined as the organic matter removal rate.

```
R =(A-B)×V /(3×0.0049)
```

The CODCr concentration was measured using a photoLab 7600UV-VIS spectrophotometer produced by WTW and a reagent LR for measuring VARIO COD in accordance with protocols defined in these products. If the CODCr concentration exceeds the range that can be measured by the above measurement reagent, to bring the CODCr concentration within the above measurement range, a sample to be measured was diluted with deionized water, and by multiplying the measurement value by the dilution factor, the CODCr concentration measurement value was obtained.

Oxygen Permeability

A sealed cubic evaluation vessel having an internal dimension of 7 cm and a sheet laminate positioned at one of its vertical side surfaces was used in a test in which oxygen permeability was confirmed. For the air side of the sheet laminate, a polypropylene mesh (Crown net, 24 mesh, produced by Dio Chemicals, Ltd.) was laminated to prevent deformation of the sheet laminate due to water pressure. Then, a rotor for the stirrer (rotor (made from PTFE resin) produced by AS ONE Corporation, length: 60 mm; diameter: 8 mm), and deionized water were placed in the evaluation vessel. Sodium sulfite at a concentration of 100 mg/L, and cobalt chloride at a concentration of 1.5 mg/L or more were added to ion-exchanged water. While continuously measuring the oxygen concentration in the evaluation vessel, stirring was performed using a HE-20GB stirrer produced by Koike Precision Instruments by setting the rotation speed to level 7 in the high range. The power supply frequency was 60 Hz.

The oxygen supply performance was evaluated in an environment of 23°C to 27°C. From time-series data on the measured oxygen concentration, an approximate straight line was obtained based on the correlation between the common logarithm of the oxygen deficiency $Y=\log_{10}(Cs-C)$ and time t (h), and a slope Z of Y of the approximate straight line with respect to time t was obtained. Cs represents a saturated oxygen concentration of the liquid phase at a measurement temperature T, and C represents a measured oxygen concentration of the liquid phase at measurement time t. From the slope Z, the oxygen supply rate Q (g/(m²·day)) was calculated according to the following equation (8).

```
Equation (8)
Q = -2.303 × 24 × 0.00884 × V × Z × (1.028) ^ (20-T)/S
```

Leak Pressure

In a test for examining leak pressure, the leak pressure was measured mainly by a partially modified method of JIS K 6404-7:1999, A21: high water pressure, small sample method (dynamic pressure method). The leak pressure refers to the pressure gauge value at which water first appears through a test piece. The following are the differences from the high water pressure, small sample method (dynamic pressure method)

A support non-woven fabric (MARIX 82607WSO produced by Unitika Ltd.) was overlaid on the surface of a sheet laminate (test piece) opposite to the surface to which water pressure was applied. The water used for the test was ion-exchanged water containing 0.3 wt% of Allura Red to make it easier to confirm water that appeared through the test piece. The rate at which the water pressure was increased was 0.1 MPa per minute.

Table 5

| | Porous base material | Gas-permeable non-porous layer | | | Positional relationship of the porous base material and the gas-permeable non-porous layer | Microbial support layer | Basis weight of microbial support layer | Biofilm thickness | Sheet laminate | | | |
|---|---|---|---|---|---|---|---|---|---|---|---|---|
| | | Resin of gas-permeable non-porous layer | Basis weight of resin | Resin thickness | | | | | Oxygen permeability | Microbial adhesion index MA | Leak pressure | Organic matter removal rate |
| | | | $g/m^2$ | $\mu m$ | | | $g/m^2$ | mm | $g/m^2 \cdot d$ | - | MPa | $gCOD/m^2 \cdot d$ |
| Example 19 | Microporous membrane used in Cellpore NW07H | None | - | - | The base material being in the side of water | Non-woven fabric (Eleves II) | 20 | 2 | 33 | 0.36 | 0.18 | 28 |
| Example 20 | Microporous membrane used in Cellpore NW07H | Silicone | 20 | 18 | The base material being in the side of water | Non-woven fabric (Eleves II) | 20 | 1.5 | 28 | 0.23 | 0.4 | 29 |
| Example 21 | Microporous membrane used in Cellpore NW07H | Silicone | 100 | 90 | The base material being in the side of water | Non-woven fabric (Eleves II) | 20 | 1.5 | 27 | 0.2 | 0.4 | 27 |
| Example 22 | Microporous membrane used in Cellpore NW07H | Silicone | 40 | 36 | The base material being in the side of water | Non-woven fabric (used in Cellpore NW07H) | 10 | 2 | 38 | 0.26 | 0.4 | 31 |

| | Porous base material | Gas-permeable non-porous layer | | | Positional relationship of the porous base material and the gas-permeable non-porous layer | Microbial support layer | Basis weight of microbial support layer | Biofilm thickness | Sheet laminate | | | |
|---|---|---|---|---|---|---|---|---|---|---|---|---|
| | | Resin of gas-permeable non-porous layer | Basis weight of resin | Resin thickness | | | | | Oxygen permeability | Microbial adhesion index MA | Leak pressure | Organic matter removal rate |
| | | | g/m² | μm | | | g/m² | mm | g/m² ▪ d | - | MPa | gCOD/m² ▪ d |
| Example 23 | Microporous membrane used in Cellpore NW07H | Silicone | 80 | 72 | The base material being in the side of water | Non-woven fabric (used in Cellpore NW07H) | 10 | 1 | 34 | 0.2 | 0.4 | 29 |
| Example 24 | Microporous membrane used in Cellpore NW07H | Silicone | 40 | 36 | The base material being in the side of water | Non-woven fabric (Eleves II) | 70 | 1.5 | 31 | 1.05 | 0.4 | 32 |
| Example 25 | Microporous membrane used in Cellpore NW07H | Urethane | 10 | 7 | The base material being in the side of water | Non-woven fabric (used in Cellpore NW07H) | 10 | 1 | 25 | 0.08 | 0.25 | 31 |
| Example 26 | Microporous membrane: Microporous | Silicone | 40 | 36 | The base material being in the side of water | Non-woven fabric (Eleves II) | 20 | 1.5 | 31 | 0.3 | 0.4 | 30 |
| Example 27 | Microporous membrane: EXEPOL | Silicone | 40 | 36 | The base material being in the side of water | Non-woven fabric (Eleves II) | 20 | 2 | 30 | 0.27 | 0.4 | 31 |

| | Porous base material | Gas-permeable non-porous layer | | | Positional relationship of the porous base material and the gas-permeable non-porous layer | Microbial support layer | Basis weight of microbial support layer | Biofilm thickness | Sheet laminate | | | |
|---|---|---|---|---|---|---|---|---|---|---|---|---|
| | | Resin of gas-permeable non-porous layer | Basis weight of resin | Resin thickness | | | | | Oxygen permeability | Microbial adhesion index MA | Leak pressure | Organic matter removal rate |
| | | | g/m$^2$ | $\mu$m | | | g/m$^2$ | mm | g/m$^2 \bullet$ d | - | MPa | gCOD/m$^2 \bullet$ d |
| Example 28 | Non-woven fabric; VOLANS 7217P | Silicone | 80 | 72 | The base material being in the side of water | Base material also serving as a microbial support layer | 220 | 2 | 30 | 3.01 | 0.4 | 29 |
| Example 29 | None | Silicone | 66 | 60 | The non-woven fabric being in the side of water | Non-woven fabric (Eleves II) | 20 | 1.5 | 28 | 0.23 | 0.4 | 27 |
| Example 30 | None | Silicone | 110 | 100 | The non-woven fabric being in the side of water | Non-woven fabric BT-030E | 30 | 2.0 | 27 | 0.31 | 0.4 | 27 |
| Comparative Example 5 | None | LDPE film | 5 | 5 | The non-woven fabric being in the side of water | Non-woven fabric BT-060E | 60 | 0 | 8 | 0.02 | 0.4 | 9 |
| Comparative Example 6 | None | LDPE film | 5 | 5 | The non-woven fabric being in the side of water | Non-woven fabric BT-030E | 30 | 0 | 7 | 0.01 | 0.4 | 9 |

(continued)

| | Porous base material | Gas-permeable non-porous layer | | | Positional relationship of the porous base material and the gas-permeable non-porous layer | Microbial support layer | Basis weight of microbial support layer | Biofilm thickness | Sheet laminate | | | |
|---|---|---|---|---|---|---|---|---|---|---|---|---|
| | | Resin of gas-permeable non-porous layer | Basis weight of resin | Resin thickness | | | | | Oxygen permeability | Microbial adhesion index MA | Leak pressure | Organic matter removal rate |
| | | | g/m$^2$ | $\mu$m | | | g/m$^2$ | mm | g/m$^2 \cdot$ d | - | MPa | gCOD/m$^2 \cdot$ d |
| Comparative Example 7 | None | LDPE film | 15 | 15 | Non-woven fabric being on the side of water | Non-woven fabric | 15 | 0.5 | 8 | 0.01 | 0.4 | 16 |
| Comparative Example 8 | None | Silicone | 55 | 50 | Both sides being identical | None | None | 0 | 29 | 0 | 0.4 | 17 |
| Comparative Example 9 | None | Silicone | 110 | 100 | Both sides being identical | None | None | 0.5 | 28 | 0 | 0.4 | 29 |

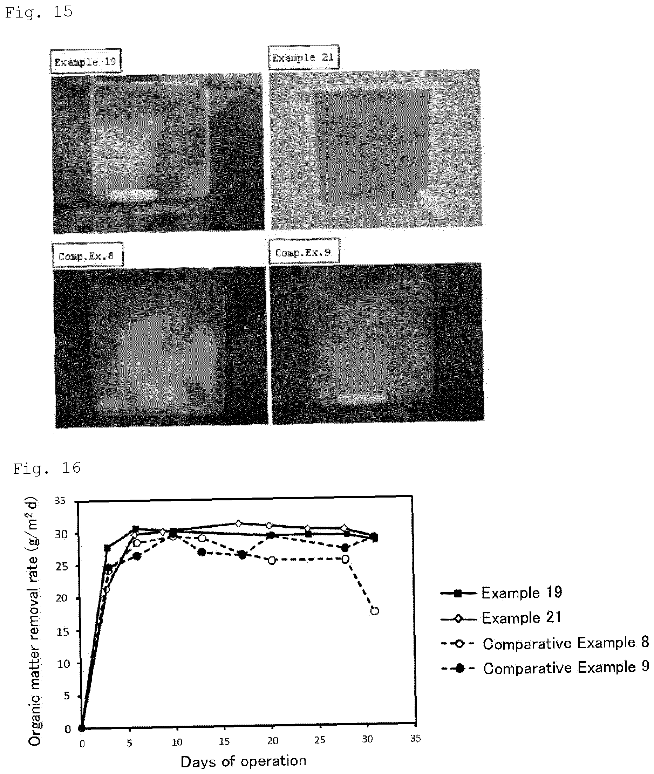

As shown in Fig. 15, biofilm formation was evaluated using the seat laminates of the Examples; consequently, no peeling of the biofilm was observed. However, the peeling of the biofilm was confirmed when the sheet laminates of the Comparative Examples were used.

Further, as shown in Fig. 16, when the organic removal treatment was performed for 31 days using each of the sheet laminates of the Examples, stable or excellent organic matter removal performance was confirmed as compared to when each of the sheet laminates of the Comparative Examples was used.

In addition, the average value AV of the organic matter removal rate between day 10 and day 31 was obtained to calculate the coefficient of variation CV. As a result, as shown in Table 6, the coefficients of variation in the Examples were 0.03 or less, which was smaller than the coefficients of variation in the Comparative Examples. The coefficient of variation CV was determined according to the following equation (9). In equation (9), n is the number of measurement points, and $X_i$ is the organic matter removal rate at each measurement point i. If the coefficient of variation exceeds 0.04, variation in organic matter removal performance is considered to be high.

Equation (9)

$$CV = \frac{1}{AV}\sqrt{\frac{1}{n}\sum_{i=1}^{n}(x_i - AV)^2}$$

Table 6

|  | Coefficient of variation |
| --- | --- |
| Example 19 | 0.019 |
| Example 20 | 0.011 |
| Example 21 | 0.025 |
| Example 22 | 0.019 |
| Example 23 | 0.020 |
| Example 24 | 0.015 |
| Example 25 | 0.014 |
| Example 26 | 0.011 |
| Example 27 | 0.013 |
| Example 28 | 0.018 |
| Example 29 | 0.017 |
| Example 30 | 0.015 |
| Comparative Example 5 | 0.042 |
| Comparative Example 6 | 0.040 |
| Comparative Example 7 | 0.070 |
| Comparative Example 8 | 0.156 |
| Comparative Example 9 | 0.046 |

Embodiment 5

Embodiment 5 of the present invention is detailed below.

Although not shown, in Embodiment 5, the gas supply body is provided with a gas delivery layer and a sheet laminate, and the gas delivery layer is placed in a bag formed by the sheet laminate. The gas delivery layer, for example, is shown in Figs. 5, 12, or 13.

As in the sheet laminate 21 shown in Fig. 4, in the sheet laminate of Embodiment 5, a microbial support layer 213, a base material 211, and a gas-permeable non-porous layer 212 are laminated in this order from the side that comes into contact with wastewater. Alternatively, as in the sheet Laminate 81 shown in Fig. 14, in the sheet laminate of Embodiment 5, a microbial support layer 213, a gas-permeable non-porous layer 212, and a base material 211 are laminated in this order from the side that comes into contact with wastewater.

In this embodiment, a sheet laminate in which the degree of leakage ("leak degree") is small for a long period of time is applied to the gas supply body in order to maintain purification treatment performance of the wastewater treatment apparatus in which the gas supply body is disposed for a long time. The leak degree of the sheet laminate is confirmed by a test of applying water pressure to the sheet laminate ("water pressure application test"). The water pressure application test is explained below.

Measuring Device Used in Water Pressure Application Test

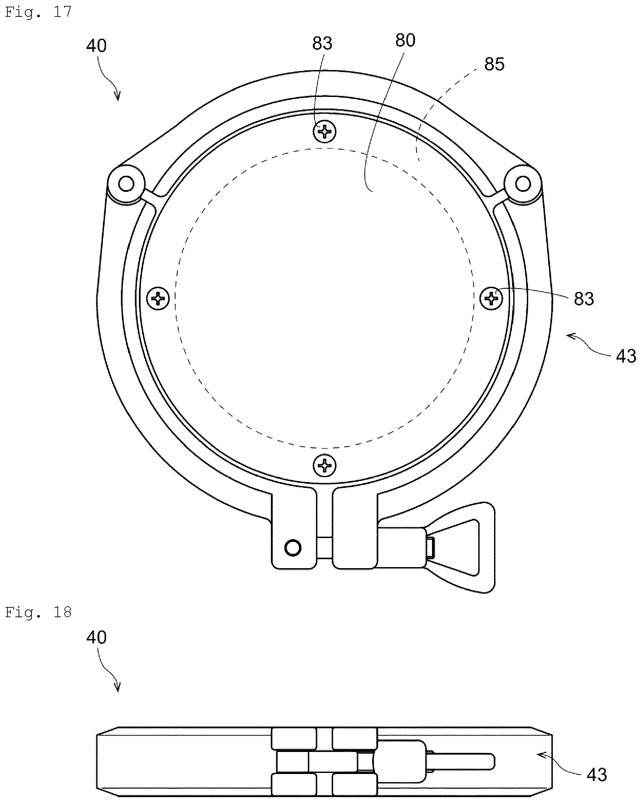

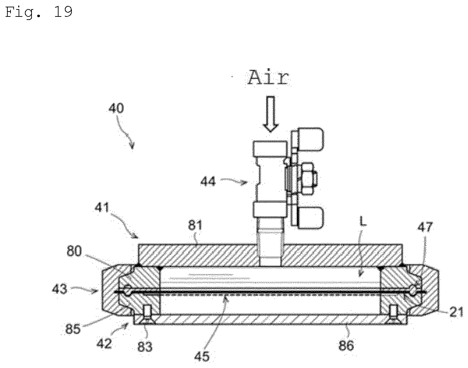

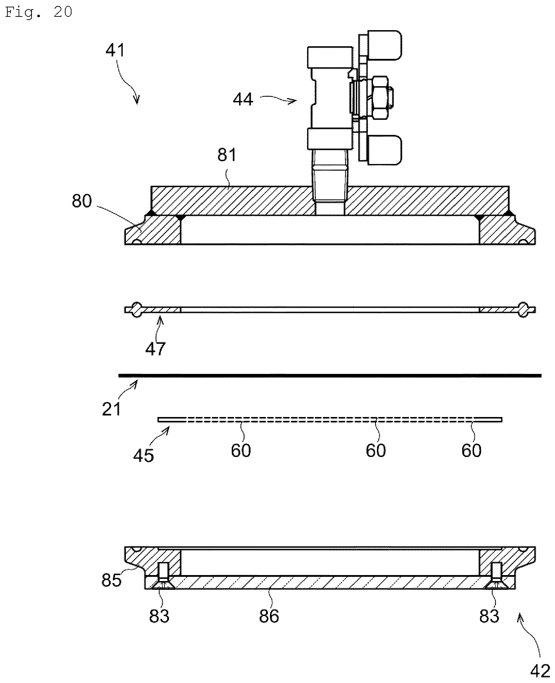

Figs. 17 to 20 show a measuring device 40 used in the water pressure application test. Fig. 17 is a plan view of a measuring device 40. Fig. 18 is a side view of the measuring device 40. Fig. 19 is a cross-sectional view showing an assembled state of the measuring device 40. Fig. 20 is a cross-sectional view showing a disassembled state of the measuring device 40.

The measuring device 40 can apply water pressure to the sheet laminate for a long period of time. The measuring device 40 includes a first jig 41, a second jig 42, a ferrule clamp 43, a regulator 44, a plate material 45, and a ferrule gasket 47. (In Fig. 20, the ferrule clamp 43 is not shown).

As shown in Fig. 20, the first jig 41 includes a first annular body 80 and a first blocking plate 81. The first annular body 80 and the first blocking plate 81 are made of stainless steel, and the first annular body 80 has an inner diameter of 113 mm. The first blocking plate 81 blocks an opening at one end of the first annular body 80, and the outer peripheral portion of the first blocking plate 81 is welded to one end surface of the first annular body 80. In the test, the interior space of the first annular body 80 is filled with liquid L.

As shown in Fig. 20, the second jig 42 includes a second annular body 85 and a second blocking plate 86. The second annular body 85 is made of stainless steel, and has an inner diameter of 113 mm. The second blocking plate 86 is a transparent acrylic plate. The second blocking plate 86 blocks an opening at one end of the second annular body 85, and the outer peripheral portion of the second blocking plate 86 is fastened to one end surface of the second annular body 85 with fasteners 83. In the test, the interior space of the second annular body 85 is hollow.

As shown in Fig. 19, the ferrule clamp 43 can fasten the first jig 41 and the second jig 42 in such a manner that the other end surface of the first annular body 80 faces the other end surface of the second annular body 85.

The regulator 44 is attached to the center of the first blocking plate 81. The regulator 44 is provided with a valve. By operation on the valve, air is supplied to the interior space of the first annular body 80, and the air pressure in the interior space of the first annular body 80 can be regulated.

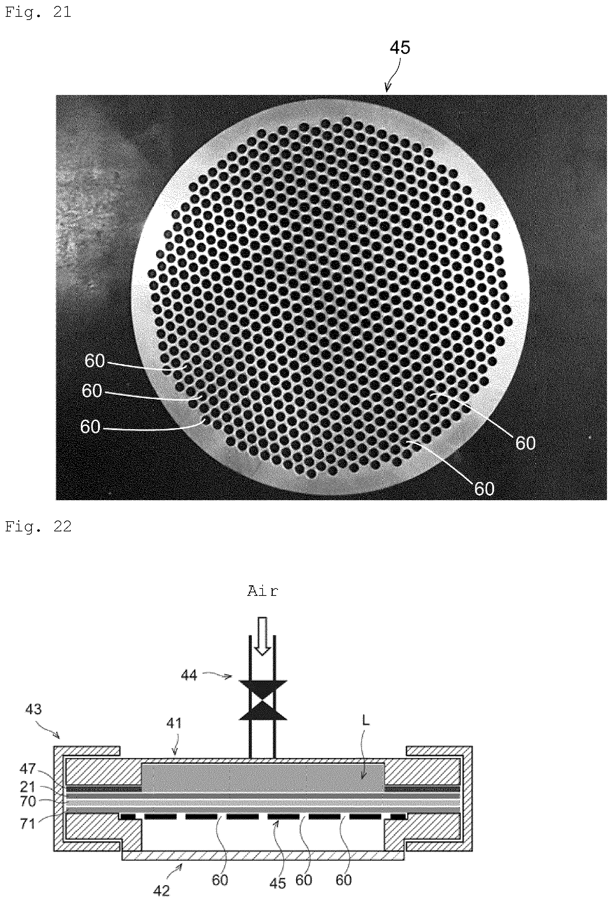

Fig. 21 is a photograph showing the plate material 45. The plate material 45 is a metal disk and has an outer diameter of 130 mm and a thickness of 1 mm. In the plate material 45, by a punching process (punching holes), a plurality of through holes 60 are formed in a grid pattern. More specifically, about 831 through holes 60 each having a diameter of 3 mm were formed with a pitch of 4 mm inside a circle with a diameter of 113 mm.

The ferrule gasket 47 is a rubber annular body and has an outer diameter of 155 mm and an inner diameter of 113 mm. As the ferrule gasket 47, a GS-C-EPDM-5.5S produced by Osaka Sanitary Co., Ltd., can be used.

The size of the measuring device 40 and materials of components for each part are one example and can be suitably changed for use.

Water Pressure Application Test

To measure the leak degree of the sheet laminate using the above measuring device 40, first, a fastening step is performed in which the outer peripheral portion of the sheet laminate or the outer peripheral portion of the plate material 45 is sandwiched between the other end surface of the first annular body 80 and the other end surface of the second annular body 85, and the first jig 41 and the second jig 42 are fastened with the clamp 43. (In the fastening step, the sheet laminate faces the plate material 45 so that the sheet laminate is located on the side of the first annular body 80 and the plate material 45 is located on the side of the second annular body 85). More specifically, the following operations 1 and 2 are sequentially performed, and thus, the first jig 41 and the second jig 42 are fastened to assemble the measuring device 40.

Operation 1

The ferrule gasket 47, the sheet laminate, and the plate material 45 are disposed between the first annular body 80 and the second annular body 85 in such a manner that the ferrule gasket 47, the sheet laminate, and the plate material 45 are placed in this order from the side of the first annular body 80 to the side of the second annular body 85.

Operation 2

The first jig 41 and the second jig 42 are fastened with the ferrule clamp 43, thus assembling the measuring device 40.

While adjusting the orientation of the measuring device 40 so that the first jig 41 is on top and the second jig 42 is on the lower side, a filling step of filling liquid L in the interior space of the first annular body 80 is performed. Liquid L is a deionized-water aqueous solution obtained by mixing ethanol and sodium chloride, and is colored by the addition of a coloring solution.

In the above fastening step, as shown in Fig. 22, the first jig 41 and the second jig 42 may be fastened with the clamp 43 with the non-woven fabric 70 and the resin film 71 sandwiched between the sheet laminate and the plate material 45. The non-woven fabric 70 is placed so that it is in contact with the sheet laminate, and is provided to support the sheet laminate. As the non-woven fabric 70, for example, Eltas produced by Asahi Kasei Co., Ltd., can be used. The resin film 71 is placed so that it is in contact with the plate material 45, and is provided to suppress creep. As the resin film 71, for example, Lumirror (registered trademark) produced by Toray Industries can be used. As a material of the resin film, a polyester-based film is preferable. Specifically, a polyethylene terephthalate (PET) film is preferable.

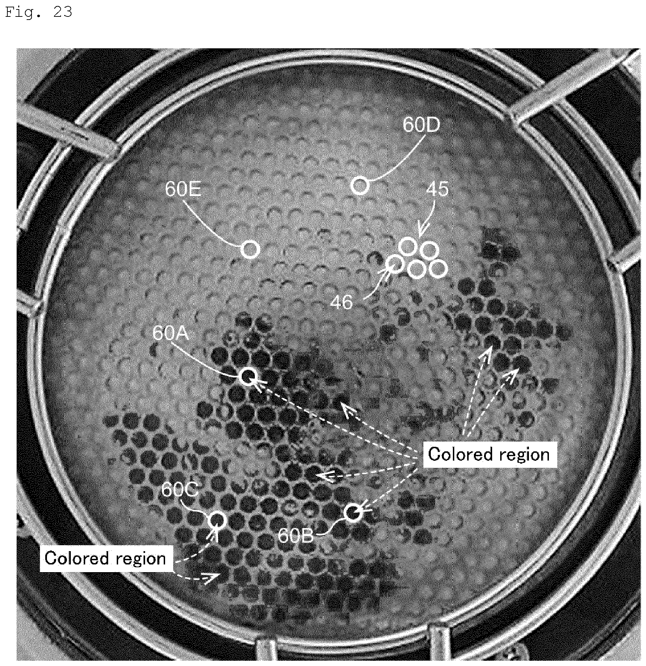

After the fastening step, by continuously supplying air into the interior space of the first annular body 80 from the regulator 44 under constant temperature and humidity conditions, i.e., humidity of $50\pm15\%$ and a room temperature of $25\pm3°C$, an application step of continuously applying water pressure by liquid L to the sheet laminate is performed. In the application step, by operating the valve of the regulator 44, the amount of air to be supplied to the interior space of the first annular body 80 is adjusted, and thus, water pressure at 0.02 MPa or more and 1 MPa or less is applied to the sheet laminate for 50 days. When liquid L passes through a portion of the sheet laminate by the application of water pressure, liquid L passes through through holes 60 located at the position facing the portion through which liquid L has passed. The coloring of liquid L can be confirmed from the side of the plate material 45 (see Fig. 23 described later.) Setting the water pressure to 1 MPa or less can prevent the sheet laminate from tearing. At the beginning of the application step, it is preferable that the initial water pressure is set to 0.02 MPa, and the rate for increasing the water pressure is 0.1 MPa/min.

After the application step, a measurement step is performed in which the number of through holes 60 through which liquid L passes (specifically, the number of through holes 60 that are positioned in front of the portion of the sheet layer through which liquid L passes) was measured as the leak degree (degree of leakage) of the sheet laminate, by visually confirming the measuring device 40 from the second jig 42 side. Fig. 23 shows the state of the plate material 45 when the measurement step is performed (in Fig. 23, the colored region of the sheet laminate is shown with a dashed line.) For example, since through holes 60A, 60B, and 60C shown in Fig. 23 are through holes 60 positioned in front of the colored portion of the sheet laminate, these through holes are defined as through holes 60 through which liquid L passes. In contrast, for through holes 60D and 60E shown in Fig. 23, since the portion of the sheet laminate positioned behind the through holes 60D and 60E is not colored, these through holes are defined as through holes 60 through which liquid L does not pass.

Leak Degree of Sheet Laminate

In this embodiment, a sheet laminate having a leak degree (the number of through holes 60 through which water passes) measured in the above measurement step of 50 or less is applied to the wastewater treatment apparatus (specifically, the sheet laminate having a leak degree of 50 or less is provided in the gas supply body, and the gas supply body is disposed inside the wastewater treatment tank.) In the sheet laminate having a leak degree of 50 or less, even when water pressure at 0.02 MPa or more and 1 MPa or less was continuously applied for a period as long as 50 days, water leakage was suppressed in almost the entire region (94% or more of the region; 94% is a numerical value obtained by using the following calculation: $(1-50/813) \times 100\%$). Accordingly, by applying the above sheet laminate to the wastewater treatment apparatus, the wastewater treatment apparatus can maintain purification performance for a long period of time. Further, according to the measuring device 40 and the measurement method described above, by supplying air to the interior space of the first annular body 80, water pressure by liquid L can be applied to the sheet laminate. Accordingly, since the supply of air for a long period of time allows the application of water pressure to the sheet laminate for a long period of time, long-term evaluation of the leakage in the sheet laminate is possible.

To form a sheet laminate having a leak degree of 50 or less, materials such as the base material 211, gas-permeable non-porous layer 212, and microbial support layer 213 shown in Embodiment 1 are preferably used.

Even when no base material 211, gas-permeable non-porous layer 212, or microbial support layer 213 is provided in the sheet laminate, if either the base material 211 or gas-permeable non-porous layer 212 is present, a sheet laminate in which the number of through holes 60 through which water passes is 50 or less in the water application test can be formed. Accordingly, the base material 211, the gas-permeable non-porous layer 212, and the microbial support layer 213 are not necessarily required, and can be omitted from the sheet laminate. (Specifically, the sheet laminate may include at least one of the following: the base material 211, gas-permeable non-porous layer 212, or microbial support layer 213.)

Short-term Withstanding Pressure in Sheet Laminate

In the sheet laminate, the short-term withstanding pressure measured in the short-term leak performance test is preferably 0.1 MPa or more, and more preferably 0.2 MPa or more.

Short-term Leak Performance Test

In the short-term leak performance test, the short-term withstanding pressure is measured mainly by a method in which method B (high water pressure method) used in the water resistance test (hydrostatic method) according to JIS L 1092: 2009, 7.1.2, was partially modified. The short-term withstanding pressure is the value on a pressure gauge when water first appears through a test piece. A difference from the water resistance test (hydrostatic method) is shown below.

A support non-woven fabric (MARIX 82607WSO produced by Unitika Ltd.) was overlaid on the surface of a sheet laminate (test piece) opposite to the surface to which water pressure was applied. The water used for the test was ion-exchanged water containing Allura Red as a coloring solution to make it easier to confirm water that appeared through the test piece. The rate at which the water pressure was increased was 0.1 MPa per minute.

Oxygen Supply Rate of Sheet Laminate

In the sheet laminate, the oxygen supply rate Q ($gO_2/m^2$/day) obtained in the oxygen supply performance test shown in Embodiment 1 is preferably 25 $g/m^2$/day or more, more preferably 26 $g/m^2$/day or more, and even more preferably 27 $g/m^2$/day or more.

Organic Matter Removal Percentage of Sheet Laminate

In the sheet laminate, the organic matter removal percentage R obtained from the purification treatment performance test shown in Embodiment 1 is preferably 80% or more, more preferably 81% or more, and even more preferably 82% or more. The organic matter removal percentage R includes organic matter removal percentage R1 determined from the CODCr concentration A (mg/L) obtained 28 days after the start of the operation and the CODCr concentration B (mg/L) obtained 31 days after the start of the operation, and organic matter removal percentage R2 determined from the CODCr concentration A (mg/L) obtained 56 days after the start of the operation and the CODCr concentration B (mg/L) obtained 59 days after the start of the operation. These organic matter removal percentages R1 and R2 are preferably 80% or more.

Examples

The present inventors conducted the water pressure application test, short-term leak performance test, oxygen supply performance test, and purification treatment performance test on various sheet laminates. The following Table 7 shows materials used for forming each sheet laminate, and the results of each test.

Table 7

| | Material | Leak degree | Short-term withstanding pressure (Mpa) | Oxygen supply rate $(gO_2/(m^2 \cdot d))$ | Organic removal percentage R (%) | |
|---|---|---|---|---|---|---|
| | | | | | Removal percentage R1 determined from the CODCr concentrations 28 days and 31 days after the start of the operation | Removal percentage R2 determined from the CODCr concentrations 56 days and 59 days after the start of the operation |
| Example 31 | Cellpore NWE08 | 15 | >0.4 | 30 | 90 | 90 |
| Example 32 | Semi-product of Cellpore NW07H (*1) | 45 | 0.17 | 30 | 90 | 90 |
| Example 33 | Sheet laminate in which silicone was applied to a semi-product of Cellpore NW07H to 40 $\mu$m, and Eltas (basis weight: 40 g/m²) was laminated on the applied surface. | 0 | >0.4 | 30 | 90 | 90 |
| Example 34 | Laminating Tyvek house wrap and silicone resin (40 $\mu$m) | 0 | >0.4 | 30 | 90 | 90 |
| Example 35 | Sheet laminate in which silicone (40 $\mu$m) was applied to a semi-product of Cellpore NW07H, and a perforated PET film (*2) was laminated on the applied surface. | 0 | >0.4 | 15 | 60 | 50 |
| Comparative Example 10 | Cellpore (after water immersion) | 200 | >0.4 | 8 | Unmeasurable | |
| Comparative Example 11 | Tyvek house wrap (*3) | 324 | 0.05 | 32 | 90 | 30 |
| Comparative Example 12 | Tyvek flushing sheet (*4) | 80 | 0.1 | 30 | 90 | 30 |

(continued)

| | Material | Leak degree | Short-term withstanding pressure (Mpa) | Oxygen supply rate (gO$_2$/(m$^2$ · d)) | Organic removal percentage R (%) | |
|---|---|---|---|---|---|---|
| | | | | | Removal percentage R1 determined from the CODCr concentrations 28 days and 31 days after the start of the operation | Removal percentage R2 determined from the CODCr concentrations 56 days and 59 days after the start of the operation |
| Comparative Example 13 | Non-woven fabric (Eltas) and application of water repellent spray | 750 | 0.02 | 30 | 90 | 30 |

*1 Semi-product of Cellpore NW07H: A sheet in which one side of a base material in Cellpore NW07H produced by Sekisui Film Co., Ltd., (the water side in the leak performance measurement) was laminated by thermal lamination of a PET/PE non-woven fabric was produced.

*2 Perforated PET film: A PET sheet with a thickness of 0.5 mm in which perforations having a diameter of 2 mm were made at 5-mm intervals.

*3 Tyvek house wrap: Produced by DuPont (moisture-permeable and waterproof sheet (soft sheet for an exterior wall substrate of a house).

*4 Tyvek flushing sheet produced by DuPont (soft moisture-permeable draining sheet).

Examples 31 to 35 shown in Table 7 demonstrate sheet laminates having a leak degree measured in the water pressure application test of 50 or less. Comparative Examples 10 to 13 shown in Table 7 demonstrate sheet laminates having a leak degree measured in the water pressure application test of over 50.

The sheet laminate of Example 31 consists of the base material 211. As the base material 211, a microporous membrane contained in Cellpore NWE08 produced by Sumika Sekisui Film Co., Ltd., was used.

The sheet laminate of Example 32 is obtained by laminating the base material 211 and the microbial support layer 213. As the base material 211, a microporous membrane contained in Cellpore NW07H produced by Sumika Sekisui Film Co., Ltd., was used, and as the microbial support layer 213, a polyolefin non-woven fabric contained in Cellpore NW07H was used. (Cellpore NW07H has a three-layer structure composed of a non-woven fabric, a polyolefin microporous membrane, and a non-woven fabric, of which the polyolefin microporous membrane was used as the base material 211, and one non-woven fabric was used as the microbial support layer 213.)

The sheet laminate of Example 33 includes the base material 211, the gas-permeable non-porous layer 212, and the microbial support layer 213. As the base material 211, a microporous membrane contained in Cellpore NW07H produced by Sumika Sekisui Film Co., Ltd., was used, and as the microbial support layer 213, a polyolefin non-woven fabric contained in Cellpore NW07H was used. (The laminate of the microporous membrane and the polyolefin non-woven fabric is defined as a semi-product of Cellpore NW07H.) A silicone resin was applied to the microporous membrane to 40 $\mu$m as the gas-permeable non-porous layer 212, and Eltas (40 g/m$^2$) produced by Asahi Kasei Co., Ltd., was laminated on the surface coated with the silicone resin. In the water pressure application test, as shown in Fig. 15, the non-woven fabric 70 and the PET film 71 each having an outer diameter of 155 mm are sandwiched between the sheet laminate and the plate material 45 so that the non-woven fabric 70 comes into contact with the sheet laminate of Example 33, and the PET film 71 comes into contact with the plate material 45. The non-woven fabric 70 is Eltas produced by Asahi Kasei Co., Ltd. The PET film 71 is Lumirror (T60-100 $\mu$m) produced by Toray Industries, Inc.

The sheet laminate of Example 34 includes the base material 211 and the gas-permeable non-porous layer 212. As the base material 211, Tyvek house wrap produced by DuPont (soft moisture-permeable and waterproof sheet (sheet for an exterior wall substrate of a house)) was used. Then, the gas-permeable non-porous layer 212 having a thickness of 40 $\mu$m was laminated on the base material 211 by applying a mixture of a methyl vinyl silicone resin, a crosslinking agent, a platinum-based catalyst, etc. to the base material 211 by using a bar coater, and allowing the mixture to stand in an atmosphere of 70°C for 1 hour.

In the sheet laminate of Example 35, the base material 211, the gas-permeable non-porous layer 212, and the microbial support layer 213 are laminated in this order. The base material 211 is a microporous membrane contained in Cellpore NW07H produced by Sumika Sekisui Film Co., Ltd. Then, the gas-permeable non-porous layer 212 having a thickness of 40 μm was laminated on the base material 211 by applying a mixture of a methyl vinyl silicone resin, a crosslinking agent, a platinum-based catalyst, etc. to the base material 211 using a bar coater, and allowing the mixture to stand in an atmosphere of 70°C for 1 hour. A PET sheet having a thickness of 0.5 mm was then laminated as the microbial support layer 213 on the gas-permeable non-porous layer 212. In the PET sheet, a plurality of perforations with a diameter of 2 mm are formed with a pitch of 5 mm.

As the sheet laminate of Comparative Example 10, a semi-product of Cellpore NW07H produced by Sumika Sekisui Film Co., Ltd., after water immersion was used.

The sheet laminate of Comparative Example 11 is a Tyvek house wrap produced by DuPont (moisture-permeable and waterproof sheet (soft sheet for an exterior wall substrate of a house)).

The sheet laminate of Comparative Example 12 is a Tyvek flushing sheet produced by DuPont (moisture-permeable draining sheet (soft sheet for an exterior wall substrate of a house)).

The sheet laminate of Comparative Example 13 is obtained by applying water repellent spray to a non-woven fabric. As the non-woven fabric, Eltas produced by Asahi Kasei Co., Ltd., was used.

Leak Degree Confirmed in Water Pressure Application Test

In the water pressure application test, water pressure at 0.02 MPa or more and 1 MPa or less by liquid L was applied to the sheet laminate for 50 days from the side opposite to the plate material 45, as shown in the above embodiment, and the number of through holes 60 through which liquid L passed was measured as the leak degree (degree of leakage) of the sheet laminate. As a result, as shown in Table 7, in Examples 31 to 33, the leak degree was 50 or less, and in Comparative Examples 10 to 13, the leak degree exceeded 50. In Examples 31, 33, and 35, water pressure at 0.02 MPa or more and 1 MPa or less was applied for 200 days. In Examples 31, 33, and 35, the leak degree was 40 or less over an entire period of 200 days.

Short-term Withstanding Pressure Confirmed in Short-term Leak Performance Test

Examples 31 to 35 all confirmed that the short-term withstanding pressure was within a preferable range (0.1 MPa or more). Especially in Examples 31, 33, 34, and 35, the short-term withstanding pressure was 0.4 MPa or more, and it was confirmed that these examples had a high level of short-term withstanding pressure characteristics. In Comparative Example 10, the short-term withstanding pressure was 0.4 MPa or more, as in Examples 31, 33, 34, and 35; however, the leak degree that indicates the degree of long-term leakage was 200. This confirmed that even if the sheet laminate does not cause leakage in the short term, it may cause leakage when water pressure is applied for a long period of time.

Oxygen Supply Rate Confirmed in Oxygen Supply Performance Test

In Examples 31 to 34, the oxygen supply rate was in a preferable range (25 g or more/m$^2$/day). The oxygen supply rate in Example 35 was as low as 15 g/m$^2$/day. This is presumably because in Example 35, the silicone-containing gas-permeable non-porous layer 212 and the microbial support layer 213 formed of a PET sheet are firmly attached to clog an oxygen-permeable path.

Organic Matter Removal Percentage R Confirmed in Purification Treatment Performance Test

In Comparative Examples 11 to 13, in which the leak degree exceeded 50, the organic matter removal percentage R1 determined from the CODCr concentrations A and B obtained 28 days and 31 days after the start of the operation was 90%; however, the organic matter removal percentage R2 determined from the CODCr concentrations A and B obtained 56 days and 59 days after the start of the operation were 30% or 0%, indicating a significant decrease in the removal percentage R. In contrast, in Examples 31 to 34, in which the leak degree was 50 or less, the removal percentages R1 and R2 were both 90% or more. In Example 35, the organic matter removal percentages R1 and R2 are respectively as low as 60% and 50%; however, the decrease in the removal percentage R was suppressed to 10% (i.e., 60%-50%). In view of the above, it was confirmed that the organic matter removal percentage R can be maintained at a certain value for a long period of time by using a sheet laminate capable of preventing leakage for a long period of time.

Embodiment 6

Embodiment 6 of the present invention is described below.

Gas Supply Body

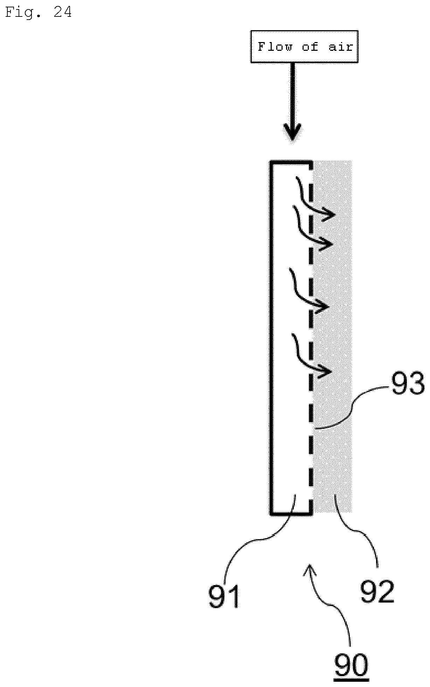

Fig. 24 is a schematic view showing a gas supply body 90 according to Embodiment 6. The gas supply body 90 according to Embodiment 6 is a gas supply body for water treatment that includes a gas delivery layer 91 and a sheet laminate 92. The sheet laminate 92 includes one or more gas-permeable non-porous layers, and the gas supply body 90 has a leakage parameter X of 1.9 or more when immersed to the effective sheet height H (m). The leakage parameter X is expressed by the following equation (10) .

$$\text{Equation 10}$$

$$X=E/(P\times A)$$

E: elasticity parameter (N/10 mm) of sheet laminate 92
P: water pressure (kPa) applied to sheet, which is expressed by relationship $P=10\times H$, where H (m) is effective sheet height
A: diameter (mm) of vent holes on surface of gas delivery layer 91

Leakage Parameter X

The leakage parameter X is 1.9 or more, and more preferably 5 or more. A leakage parameter of less than 1.9 results in an increase in leakage during long-term use. In general, there is no direct correlation between the elasticity parameter and the creep strength; however, as a result of extensive research, it was found that a gas supply body 90 for water treatment with less leakage over a long period of time can be obtained by preparing the gas supply body 90 so that it has a leakage parameter X that is not less than a predetermined value, which is calculated using the elasticity parameter E. Further, the elasticity parameter has the advantage that it can be measured more easily than the creep strength.

In general, creeping is likely to occur when a material is subjected to a larger stress. As the maximum water pressure P at the effective sheet height H increases, a larger tensile stress is generated in the sheet laminate 92 located on the vent holes on the surface of the gas delivery layer, making creeping likely to occur. As the diameter A of the vent holes on the surface of the gas delivery layer increases, a larger tensile stress is generated in the sheet laminate 92, making creeping likely to occur. In the gas supply body 90 for water treatment, the degree of occurrence of creeping varies depending on the balance of E, P, and A. Making the sheet laminate 92 strong enough not to cause creeping; i.e., increasing E so that the influences of P and A need not be taken into consideration may suppress leakage, but is overkill and costly. Moreover, in order to increase E, the technique of thickening the sheet laminate 92 is often used; however, if the sheet laminate 92 is too thick, the gas permeability is impaired, and the treatment performance is reduced.

Thus, setting the leakage parameter X to 1.9 or more in consideration of the proper balance of E, P, and A makes it possible to provide a gas supply body 90 for water treatment that has less leakage even after long-term use, is low-cost, and exhibits high treatment performance. The upper limit of the leakage parameter X is not particularly limited, and is preferably, for example, 2000 or less, and more preferably 600 or less, in terms of ensuring the treatment performance.

E in equation (12) above is the elasticity parameter of the sheet laminate 92. The elasticity parameter can be calculated from a diagram showing the relationship between the test force and strain of a material ("test force-strain diagram"). The test force-strain diagram is basically prepared in accordance with the test method of JIS K7161-1:2014 Plastics-Determination of tensile properties; a No. 1 dumbbell test piece was used, and the test speed was 100 mm/min. From the results of the test for tensile properties, the relationship between the test force (N/10 mm) and strain is shown in a diagram, and the elasticity parameter (N/10 mm) can be calculated from the slope of the elastic region of the test force-strain diagram according to ASTM D638-03. If no elastic region is seen, the elasticity parameter may be calculated by using the method for determining the secant modulus described in ASTM D638-03. The term "elasticity parameter" as used herein is different from the commonly used modulus of elasticity (elastic modulus), and the elasticity parameter is determined by the method defined above and is a value expressed in units of (N/10 mm) .

The elasticity parameter E is preferably 10 N/10 mm or more, and more preferably 50 N/10 mm or more. An elasticity parameter E of 10 N/10 mm or more facilitates the processing of the sheet laminate 92; in particular, when the sheet laminate 92 is formed into a bag, misalignment or the like is suppressed at the time of bonding and heat sealing, thus facilitating the processing. The elasticity parameter E is even more preferably 100 N/10 mm or more. When the elasticity parameter E is 100 N/10 mm or more, the gas delivery layer can be easily provided in the sheet laminate 92. The elasticity parameter E is also preferably 1000 N/10 mm or less, more preferably 500 N/10 mm or less, and even more preferably 350 N/10 mm or less. By setting the elasticity parameter E to 1000 N/10 mm or less, sufficient oxygen permeability can be obtained without the thickness of the sheet laminate 92 being problematic, resulting in sufficient treatment performance.

P is the maximum water pressure (unit: kPa) at the effective sheet height H (m) and is expressed by $P=10 \times H$. In the present specification, the effective sheet height H is defined as the dimension in the height direction of the gas supply body 90 or the internal dimension in the height direction of a laminate bag when the gas supply body 90 or the laminate bag is disposed in a wastewater treatment apparatus. Thus, from the viewpoint of cost and installation space, the effective sheet height H is preferably 0.3 m or more, and more preferably 0.5 m or more. In order to prevent compressive deformation of the gas delivery layer due to water pressure, the effective sheet height is preferably 20 m or less, and more preferably 5 m or less. In the present specification, the immersion depth, i.e., the water depth at which the lowermost portion of the gas supply body 90 is located when the gas supply body 90 is immersed in a liquid to be treated, is defined as 90% of the effective sheet height.

A is the diameter of vent holes present on the surface of the gas delivery layer 91. The vent hole diameter ("hole diameter") is measured using, for example, calipers, an optical microscope, or a digital camera. When the hole diameter is less than 5 mm, the hole diameter can be obtained by the three-point arc method by taking an image of a vent hole using an optical microscope and applying image analysis software to the obtained image of the vent hole. When a vent hole is not a substantially true circle, the portion forming the diameter of the largest circle inscribed in the vent hole is measured. In this case, the magnification is determined so that the entire vent hole to be observed is included in the field of view for taking an image and the hole diameter obtained above is 10% or more of the maximum length of the field of view. Further, when the obtained image is unclear and it is difficult to evaluate the hole diameter by the image analysis described above, a binarization process is appropriately performed, and then the same image analysis is applied to obtain the hole diameter.

When the hole diameter is 5 mm or more, the hole diameter is measured using calipers certified by a Japanese public institution. In this case, when a vent hole is a substantially true circle, any diameter portion may be measured; when a vent hole is not a substantially true circle, the portion forming the diameter of the largest circle inscribed in the vent hole is measured. Alternatively, if an image is taken with a digital camera instead of the optical microscope, the hole diameter can be obtained in a manner similar to the above. In this case, a standard scale having a known length is photographed under the same conditions as those under which an image of a vent hole is taken, and the length is corrected using the obtained image.

The above measurement is applied to a minimum of 10 or more vent holes whether the hole diameter is less than 5 mm or 5 mm or more, and the average value of the obtained hole diameters is defined as hole diameter A.

Sheet Laminate

The sheet laminate 92 (Fig. 24) includes a base material that is a microporous membrane, and a gas-permeable non-porous layer. The sheet laminate 92 is permeable to gas (air) and impermeable to water. A microbial support layer can be provided on the outer surface of the sheet laminate 92. In this case, the sheet laminate 92 has such a function that, for example, gas that has passed through the gas delivery layer 91 is transported to one major surface of the sheet laminate 92, across the gas-permeable non-porous layer by diffusion etc., and to the microbial support layer formed on the outer surface of the sheet laminate 92. The base material provided in the sheet laminate 92 is a membrane with many fine through holes formed by stretching or solvent extraction during membrane production, has various functions such as fluid passage control and adsorption and fixation of substances, and is also referred to as a "microporous film." The pore size is preferably 0.01 to 50 $\mu$m in terms of preventing defects in the gas-permeable non-porous layer, and more preferably 0.1 to 30 $\mu$m in terms of maintaining high strength and gas permeability.

The thickness of the gas-permeable non-porous layer provided in the sheet laminate 92 is preferably 10 $\mu$m or more, and more preferably 50 $\mu$m or more. A gas-permeable non-porous layer thickness of 10 $\mu$m or more has the advantage that the elasticity parameter can be easily increased. A gas-permeable non-porous layer thickness of 50 $\mu$m or more has the advantage that the gas-permeable non-porous layer is less likely to be damaged when the gas supply body 90 is processed or is disposed in a wastewater treatment apparatus. The thickness of the gas-permeable non-porous layer is also preferably 500 $\mu$m or less, and more preferably 200 $\mu$m or less. A gas-permeable non-porous layer thickness of 500 $\mu$m or less has the advantage that high oxygen permeability can be easily obtained.

The thickness of the gas-permeable non-porous layer can be measured in accordance with the measurement method disclosed in the "6.1 Thickness" section in "Test methods for nonwovens" of JIS 1913: 2010.

Gas Delivery Layer

The gas delivery layer 91 (Fig. 24) is a layer for ensuring gas flow paths and maintaining the shape of the gas supply body 90 so that the gas supply body 90 is not deformed by water pressure. The shape of the gas delivery layer is not particularly limited. For example, the gas delivery layer is preferably in the shape of a sponge, a honeycomb, or corrugated cardboard. These shapes can be formed by a known method.

The surface of the gas delivery layer 91 has vent holes 93 (Fig. 24) having hole diameter A (mm). The hole diameter can be measured by the pore size distribution measurement by the capillary condensation method (permporometry) described in Embodiment 1. The vent holes 93 may be formed through the gas delivery layer 91 or may be formed so that they do not penetrate through the gas delivery layer 91. The vent holes 93 allow oxygen to be supplied to microorganisms through the sheet laminate 92.

The hole diameter A of the vent holes 93 present in the gas delivery layer 91 is preferably 0.1 mm or more in terms of reliably forming through holes during formation of vent holes, and more preferably 0.5 mm or more in terms of ensuring oxygen supply performance to the sheet laminate 92 and good organic matter removal performance of the resulting gas supply body 90. The upper limit of the hole diameter A is not particularly limited, and is preferably, for example, 100 mm or less, and more preferably 30 mm or less.

The opening ratio of the vent holes 93 on the gas delivery layer 91 to the area of one surface of the gas delivery layer 91 is preferably within the range of 1% to 90%, and more preferably 1% to 80%. An opening ratio of 1% or more allows oxygen to be supplied to microorganisms in wastewater, ensuring wastewater treatment capacity. On the other hand, when the opening ratio is 90% or less, the sheet laminate 92 is reliably supported, and the deformation of the sheet laminate 92, which is pushed by water pressure, is suppressed; as a result, wastewater treatment performance can be suitably obtained without inhibiting the movement of gas in the gas delivery layer 91.

In the portion of the gas supply body 90 that comes into contact with wastewater, the opening ratio P (%) of the vent holes is determined by the following relationship equation (11) when the external area of the gas delivery layer 91 is S1 ($m^2$) and the total area of the vent holes is S2 ($m^2$).

$$\texttt{Equation 11}$$

$$\texttt{P=S2/S1×100}$$

The material forming the gas delivery layer 91 is not particularly limited, and is, for example, one or more members selected from the group consisting of paper, ceramic, aluminum, iron, stainless steel, aluminum, plastic (polyolefin resin, polystyrene resin, polyester resin, polyvinyl chloride resin, acrylic resin, urethane resin, epoxy resin, polyamide resin, methyl cellulose resin, ethyl cellulose resin, polyvinyl alcohol resin, vinyl acetate resin, phenolic resin, fluorine resin, and polyvinyl butyral resin), polycarbonate resin, polyamide resin, melamine resin, and unsaturated polyester resin.

The gas delivery layer can be produced using a resin described above as a material by a method selected from a wide range of known methods. The method for providing the vent holes is not particularly limited, and a wide range of known methods can be used. Specific examples include a method in which a roll with multiple needles arranged on its surface is rotated on a formed resin sheet, a method in which a plate with multiple needles or blades arranged on its surface is pressed, an NC automatic cutting method, and the like. In the method using the roll, the size of the vent holes can be changed by changing the shape of the needles arranged on the roll. Larger vent holes can be formed by increasing the angle of the apex of each needle.

The flexural modulus of the material is preferably 500 MPa or more, and more preferably 1000 MPa or more. By virtue of this feature, even if a high water pressure is applied when the gas supply body 90 is used, the vent holes are less likely to become large, thus suppressing the occurrence of leakage. The flexural modulus of the material is also preferably 4500 MPa or less, and more preferably 3000 MPa or less. The flexural modulus of the material is measured based on ASTM Test Method D790.

The flexural strength of the material is preferably 5 MPa or more, and more preferably 10 MPa or more. By virtue of this feature, even if a high water pressure is applied when the gas supply body 90 is used, the vent holes are less likely to become large, thus suppressing the occurrence of leakage. The flexural strength of the material is also preferably 150 MPa or less, and more preferably 100 MPa or less. The flexural strength of the material is also measured based on ASTM Test Method D790.

The 24-hour water absorption of the material is preferably 0.001 or more, and more preferably 0.005 or more. By virtue of this feature, the deterioration of the strength of the gas supply body 90 due to humidity can be prevented; as a result, the deformation of the gas supply body 90 is suppressed, and the vent holes are less likely to become large. The 24-hour water absorption of the material is also preferably 0.6 or less, and more preferably 0.2 or less. The 24-hour water absorption of the material is measured based on ASTM Test Method 570.

The thickness of the gas delivery layer is preferably 1 mm or more, and more preferably 3 mm or more, in terms of supplying sufficient oxygen into the gas delivery layer. The thickness of the gas delivery layer is also preferably 100 mm or less, and more preferably 40 mm or less, in terms of increasing the number of gas supply bodies 90 disposed per volume of the treatment apparatus and obtaining a high treatment speed per volume of the treatment apparatus.

The basis weight of the gas delivery layer is preferably 100 $g/m^2$ or more, and more preferably 400 $g/m^2$ or more, in terms of ensuring strength against water pressure. In consideration of the ease of processing the gas supply body 90, the basis weight of the gas delivery layer is preferably 5000 $g/m^2$ or less, and more preferably 3000 $g/m^2$ or less.

Microbial Support Layer

The gas supply body 90 of the present invention may have a microbial support layer on one or both sides of the gas-permeable water-impermeable layer.

The microbial support layer preferably has a structure as a support for supporting microorganisms. Examples of the structure of the support include non-woven fabrics produced by a air-laid process, a carding process, a stitch bonding process, a spunbonding process, a spunlacing process, an ultrasonic bonding process, a wet laid process, a melt-blowing process, and the like. Examples of the structure also include structures such as woven fabrics, knitted fabrics, and porous ceramics. These structures can be produced by using methods selected from a wide range of known methods.

As microorganisms used in the microbial support layer, a wide range of known microorganisms used in purification treatment of wastewater and the like can be used. The method for attaching microorganisms to the structure as the support is not particularly limited, and a wide range of known methods can be used. When wastewater contains microorganisms, the microorganisms are attached to the structure by immersing the gas supply body 90 in the wastewater. When it is necessary or effective to attach microorganisms before the start of operation, the microbial support layer may be provided by a suitable method, specifically, for example, by applying a microbial preparation or the like to the surface of the microbial support layer by using an appropriate solvent and binder, if necessary.

When the microbial support layer is provided only on one surface of the gas-permeable water-impermeable layer, it is preferred that the gas supply body 90 comprises the gas delivery layer, the gas-permeable water-impermeable layer, and the microbial support layer, in this order. It is also preferable to provide a mesh, a woven fabric, a non-woven fabric, a foam, or the like between the gas delivery layer and the gas-permeable water-impermeable layer.

In this case, it is also preferable to form the gas supply body 90 in the form of a bag with a gas inlet at an end and the gas delivery layer disposed inside. The gas inlet is a passage for allowing gas to flow from the outside to the inside of the gas supply body 90. Gas may be fed to the gas delivery layer 91 in the gas supply body 90 through the gas inlet by using power. Further, it is also preferable to use a gas-permeable non-porous layer as a layer covering the surface of the gas delivery layer 91, and to use, for example, a bag-shaped component formed by bonding together sheet materials that are permeable to gas and are impermeable to liquid, as the gas-permeable non-porous layer. This configuration allows the surface of the gas delivery layer 91 to be covered with a gas-permeable non-porous layer by only inserting the gas delivery layer 91 from the opening side of the bag-shaped component. As a result, gas can be supplied into a liquid with the gas supply body 90 immersed in the liquid by allowing gas to permeate from the gas delivery layer 91 side through the gas-permeable non-porous layer while preventing the liquid from permeating to the gas delivery layer 91 side.

It is also preferable that the gas-permeable non-porous layer comprises a first gas-permeable non-porous layer and a second gas-permeable non-porous layer. In this case, the gas supply body 90 preferably includes the first gas-permeable non-porous layer, the gas delivery layer, and the second gas-permeable non-porous layer, in this order. Further, a microbial support layer may be laminated on the surface of the first gas-permeable non-porous layer opposite to the gas delivery layer side or the surface of the second gas-permeable non-porous layer opposite to the gas delivery layer side, or both. It is also preferable to provide a mesh, a woven fabric, a non-woven fabric, a foam, or the like between the first or second gas-permeable non-porous layer and the gas delivery layer, or between both the gas-permeable non-porous layers and the gas delivery layer.

The method for laminating the gas-permeable non-porous layer, the gas delivery layer, and the microbial support layer is not particularly limited, and a wide range of known methods can be used. Specifically, a method using an adhesive agent, a heat-sealing method, or the like can be used.

The gas supply body of this embodiment as described above can be suitably used for treatment of wastewater such as sewage, human waste, and industrial wastewater, and for purification of lakes and marshes, river water, groundwater, and first flush of rainwater, and the like. In particular, the gas supply body can be suitably used for wastewater treatment, which consumes a lot of energy, because the gas supply body can effectively reduce energy consumption.

Embodiment 6 is described below in detail with reference to Examples; however, the present invention is not limited to these Examples.

Opening of Vent Holes in Gas Delivery Layer

A roll having multiple needles arranged on its surface was rotated on plastic corrugated cardboard to allow the plastic corrugated cardboard to pass through between the roll and a flat surface, thereby forming multiple vent holes on the surface of the plastic corrugated cardboard.

Measurement of Hole Diameter of Vent Holes

When the hole diameter was 5 mm or more, the vent hole diameter was measured using calipers. In this case, since the vent holes present in a predetermined area were substantially true circles, any diameter of each hole was measured. When the hole diameter was less than 5 mm, an image of a vent hole was taken at such a magnification that the vent hole to be observed was included in the field of view for taking the image, using a VHX-6000 microscope produced by Keyence Corporation as an optical microscope, and the diameter measurement in the normal measurement mode was applied to the obtained image of the vent hole to obtain the hole diameter. In this case, the magnification was determined so that the entire vent hole to be observed was included in the field of view for taking an image and the hole diameter obtained above was 10% or more of the maximum length of the field of view. The above measurement was applied to 10 vent holes per sample, and the average of the obtained hole diameters was used as the vent hole diameter.

Measurement of Water Pressure

The water pressure P (kPa) was calculated from the water depth at the lowermost portion of the sheet gas supply body, i.e., the effective sheet height H (m) using the following equation. The water depth at the lowermost portion was measured using Tajima Tool Lock-16 L16-55.

$$P = 10 \times H$$

Elasticity Measurement of Sheet Laminate

The elasticity parameter (elastic modulus) of each sheet laminate was calculated from a diagram showing the relationship between the test force and strain of a material ("test force-strain diagram"). The test force-strain diagram was basically prepared in accordance with the test method of JIS K7161-1: 2014 Plastics-Determination of tensile properties; a No. 1 dumbbell test piece was used, and the test speed was 100 mm/min. From the results of the test for tensile properties, the relationship between the test force (N/10 mm) and strain was shown in a diagram, and the elasticity parameter (N/10 mm) was calculated from the slope of the elastic region of the test force-strain diagram according to ASTM D638-03. Both the average value of three samples in the production direction at the time of producing each sheet laminate (MD), and the average value of the three samples in a direction perpendicular to MD (TD) were determined, and the smaller value was used as the elasticity parameter of the sheet laminate.

Example 36

As a sheet laminate, a 290-μm-thick pore membrane (Cellpore NWE08 produced by Sekisui Film Co., Ltd.; a polyester non-woven fabric laminated on one side of a polyethylene pore membrane) was prepared. The elasticity parameter of the sheet laminate was 260 N/10 mm. As the gas delivery layer 91, polypropylene corrugated cardboard produced by Yamakoh Co., Ltd., (thickness: 5 mm; basis weight: 800 g/m$^2$) was used. A roll having multiple needles arranged on its surface was rotated on the plastic corrugated cardboard to allow the plastic corrugated cardboard to pass through between the roll and a flat surface, thereby forming multiple vent holes on the surface of the plastic corrugated cardboard. The vent holes on the surface of the gas delivery layer had a hole diameter of 2 mm. The obtained gas supply body was heat-sealed with a SM-SHTA210-10W-AC handheld sealer produced by Fuji Impulse Co., Ltd. (heat-sealing temperature: 140°C; retention time: 1 second; cooling temperature: 70°C; heat-sealing width: 10 mm; it was heat-sealed so that the surface on which the polyester non-woven fabric was not laminated faced the inside), thereby forming a laminate bag. The internal dimensions of the laminate bag were 200 cm in height and 90 cm in width. The water pressure applied to the sheet laminate was 20 kPa. The leakage parameter was 6.5. A wastewater treatment apparatus was operated for 2 months under this condition to evaluate the leak performance. When 10% or more of the depth direction length of the laminate bag immersed in wastewater was inundated because of leakage, it was determined that there was a problem with leak performance, and the leak performance was evaluated as poor ("×"). When the inundation of the laminate bag due to leakage was less than 10% of the depth direction length of the laminate bag immersed in wastewater, it was determined that there was no problem with the leak performance, and the leak performance was evaluated as good ("o") (Table 8). The amount of the water accumulated in the sheet laminate bag was minimal; thus, there was no problem with the leak performance.

Example 37

The laminate bag of Example 37 was obtained in the same manner as in Example 36, except that the shape of the needles arranged on the roll was adjusted, the hole diameter of the vent holes on the surface of the gas delivery layer was 5 mm, and the internal dimensions of the laminate bag were 90 cm in height and 60 cm in width.

Example 38

As a sheet laminate, a 160-$\mu$m-thick pore membrane (Cellpore NW07H produced by Sekisui Film Co., Ltd.; a polyethylene non-woven fabric and a polyester non-woven fabric individually laminated on either side of a polypropylene pore membrane) was used. The elasticity parameter of the sheet laminate was 188 N/10 mm. The obtained gas supply body was heat-sealed with a SM-SHTA210-10W-AC handheld sealer produced by Fuji Impulse Co., Ltd. (heat-sealing temperature: 180°C; retention time: 1 second; cooling temperature: 90°C; heat-sealing width: 10 mm), thereby forming a laminate bag. The internal dimensions of the laminate bag were 50 cm in height and 60 cm in width. As a gas delivery layer with vent holes, polypropylene mesh, PP18-1000 (opening: 1 mm, thread diameter: 500 $\mu$m, 17 mesh) produced by SEFAR laminated on a vinyl chloride resin corrugated plate (rigid polyvinyl chloride corrugated plate, slate small corrugation, pitch: about 63 mm, trough depth: 18 mm) produced by C.I. Takiron Corporation was used. The laminate bag was thus obtained.

Example 39

The laminate bag of Example 39 was obtained in the same manner as in Example 38, except that Tricalnet (H03, mesh pitch: 13 x 13 mm) produced by C.I. Takiron Corporation was used in place of the polypropylene mesh produced by SEFAR, and the internal dimensions of the laminate bag were 100 cm in height and 60 cm in width.

Example 40

The laminate bag of Example 40 was obtained in the same manner as in Example 36, except that the shape of the needles arranged on the roll was adjusted, and the diameter of the vent holes on the surface of the gas delivery layer was 0.08 mm.

Example 41

The sheet laminate used was a laminate obtained by applying an addition reaction-curable silicone resin compound (KR-3700) produced by Shin-Etsu Chemical Co., Ltd., to the side of Cellpore NW07H produced by Sekisui Film Co., Ltd., that comes into contact with water to be treated, by using a bar coater, and allowing it to stand in an atmosphere at 70°C for 1 hour to thereby laminate a resin layer on the pore membrane. The basis weight of the silicone resin after curing was 40 g/m$^2$. The sheet laminate comprising the microbial support layer, the pore membrane, and the resin layer had a thickness of 190 $\mu$m and an elasticity parameter of 190 N/10 mm. A laminate bag was obtained in the same manner as in Example 36, except that the heat-sealing conditions were as follows: heat-sealing temperature: 180°C; retention time: 1 second; cooling temperature: 90°C; heat-sealing width: 10 mm.

Example 42

A laminate bag was obtained in the same manner as in Example 37, except for the heat-sealed portion of the sheet laminate, i.e., except that a polyester non-woven fabric (VOLANS 7217P produced by Toyobo Co., Ltd., thickness: 0.9 mm, basis weight: 215 g/m$^2$) was further laminated on the inner side of the laminate bag. The sheet laminate (laminate comprising the pore membrane and the polyester non-woven fabric) had an elasticity parameter of 972 N/10 mm.

Comparative Example 14

A laminate bag was obtained in the same manner as in Example 37, except that a vinyl chloride resin corrugated plate (rigid polyvinyl chloride corrugated plate, slate small corrugation, pitch: about 63 mm, trough depth: 18 mm) produced by C.I. Takiron Corporation was used alone as a gas delivery layer with vent holes. The hole diameter of the vent holes arranged on the surface of the gas delivery layer was 60 mm. The leakage parameter was 0.5. After a wastewater treatment apparatus was operated under this condition for 2 months, the water accumulated in the sheet laminate bag was 10% or more of the depth direction length of the laminate bag immersed in wastewater.

Comparative Example 15

A laminate bag was obtained in the same manner as in Example 38, except that a vinyl chloride resin corrugated plate (rigid polyvinyl chloride corrugated plate, slate small corrugation, pitch: about 63 mm, trough depth: 18 mm) produced by C.I. Takiron Corporation was used alone as a gas delivery layer with vent holes. The hole diameter of the vent holes arranged on the surface of the gas delivery layer was 60 mm.

Comparative Example 16

The laminate bag of Comparative Example 16 was obtained in the same manner as in Example 36, except that Tricalnet (H06, mesh pitch: 25 mm x 25 mm) produced by C.I. Takiron Corporation laminated on a vinyl chloride resin corrugated plate (rigid polyvinyl chloride corrugated plate, slate small corrugation, pitch: about 63 mm, trough depth: 18 mm) produced by C.I. Takiron Corporation was used as a gas delivery layer with vent holes.

Comparative Example 17

The laminate bag of Comparative Example 17 was obtained in the same manner as in Comparative Example 15, except that a polycarbonate resin corrugated plate (polycarbonate corrugated plate, slate large corrugation, pitch: about 130 mm, trough depth: 36 mm) produced by Nippon Polyester Co., Ltd., was used as a gas delivery layer with vent holes.

Table 8

| No. | Sheet laminate | Modulus of elasticity | Gas delivery layer Diameter | Gas delivery layer material | Gas delivery layer material | Gas delivery layer material | Water pressure | Leakage parameter X | Long-term leakage (leak performance) | Organic matter removal percentage |
|---|---|---|---|---|---|---|---|---|---|---|
| | | | | Flexural strength | Flexural modulus | 24-hour water absorption | | | | |
| | | N/10 mm | mm | MPa | MPa | % | kPa | | | % |
| Example 36 | Cellpore NWE08 | 260 | 2 | 50 | 1500 | 0.01 | 20 | 6.5 | ○ | 70 |
| Example 37 | Cellpore NWE08 | 260 | 5 | 50 | 1500 | 0.01 | 9 | 5.8 | ○ | 76 |
| Example 38 | Cellpore NW07H | 188 | 1 | 80 | 3000 | 0.2 | 5 | 37.6 | ○ | 79 |
| Example 39 | Cellpore NW07H | 188 | 10 | 12 | 1100 | <0.01 | 10 | 1.9 | ○ | 73 |
| Example 40 | Cellpore NWE08 | 260 | 0.08 | 50 | 1500 | 0.01 | 20 | 650 | ○ | 15 |
| Example 41 | Cellpore NW07H and resin | 190 | 2 | 50 | 1500 | 0.01 | 20 | 4.8 | ○ | 72 |
| Example 42 | Cellpore NWE08 and polyester non-woven fabric | 972 | 5 | 50 | 1500 | 0.01 | 9 | 21.6 | ○ | 73 |
| Comparative Example14 | Cellpore NWE08 | 260 | 60 | 80 | 3000 | 0.2 | 9 | 0.5 | × | - |
| Comparative Example 15 | Cellpore NW07H | 188 | 60 | 80 | 3000 | 0.2 | 5 | 0.6 | × | - |
| Comparative Example 16 | Cellpore NWE08 | 260 | 20 | 12 | 1100 | <0.01 | 20 | 0.7 | × | - |

(continued)

| No. | Sheet laminate | Modulus of elasticity | Gas delivery layer Diameter | Gas delivery layer material | Gas delivery layer material | Gas delivery layer material | Water pressure | Leakage parameter X | Long-termleakage (leak performance) | Organic matter removal percentage |
|---|---|---|---|---|---|---|---|---|---|---|
| | | | | Flexural strength | Flexural modulus | 24-hour water absorption | | | | |
| Comparative Example 17 | Cellpore NWE08 | 260 | 130 | 90 | 2300 | 0.15 | 9 | 0.22 | × | - |

Description of Reference Numerals

| | |
|---|---|
| 10, 80, 90, 110: | Gas supply body |
| 21, 81, 92: | Sheet laminate |
| 50: | Wastewater treatment apparatus |
| 52: | Supply body unit |
| 211: | Base material |
| 212: | Gas-permeable non-porous layer |
| 213: | Microbial support layer |
| 214: | Biofilm |
| W: | Wastewater |

**Claims**

1. A sheet laminate for use in a wastewater treatment apparatus for purifying wastewater using action of microorganisms in the wastewater, the sheet laminate comprising:

   a base material; and
   a gas-permeable non-porous layer,
   the base material being a microporous membrane.

2. The sheet laminate according to claim 1, further comprising a microbial support layer.

3. The sheet laminate according to claim 2,
   wherein

   the gas-permeable non-porous layer has adhesiveness,
   the microbial support layer, the gas-permeable non-porous layer, and the base material are laminated in this order from a side that comes into contact with wastewater, and
   the microbial support layer is formed on a surface of the gas-permeable non-porous layer having adhesiveness that comes into contact with wastewater.

4. The sheet laminate according to claim 2 or 3, wherein the sheet laminate has a microbial adhesion index MA of 0.08 or more, the microbial adhesion index MA being calculated from the following equation (1):

$$\text{Equation (1): } MA = W \times Q^{2.8} \times 10^{-6},$$

where W is the basis weight ($g/m^2$) of the microbial support layer, and Q is oxygen permeability ($g/(m^2 \cdot d)$).

5. The sheet laminate according to any one of claims 2 to 4, wherein the thickness of a biofilm is 1 mm or more and 5 mm or less when measured under the following biofilm evaluation conditions:
   Biofilm Evaluation Conditions

   (1) a sealed cubic evaluation vessel having an internal dimension of 7 cm and the sheet laminate positioned at one of its vertical side surfaces is filled with organic matter-containing water;
   (2) the organic matter-containing water has the following composition: soluble starch: 0.8 g/L, peptone: 0.084 g/L, yeast extract: 0.4 g/L, urea: 0.052 g/L, $CaCl_2$: 0.055 g/L, $KH_2PO_4$: 0.017 g/L, $MgSO_4 \cdot 7H_2O$: 0.001 g/L, KCl: 0.07 g/L, $NaHCO_3$: 0.029 g/L, solvent: tap water;
   (3) 5 g of paddy soil, which is soil containing microorganisms responsible for decomposition of organic matter, is added, the evaluation vessel is placed in a constant-temperature chamber maintained at $30\pm2°C$, and all the liquid in the evaluation vessel is discharged every 3.5 days under the condition of continuous stirring with a stirrer;
   (4) after an operation of replacing the organic matter-containing water is continued for 28 days, the evaluation vessel is filled with the organic matter-containing water (point in time Ta), and the sheet laminate after 3 days (point in time Tb) is taken out, wherein the mass of paddy soil is defined as the mass after an aqueous dispersion of paddy soil is centrifuged and the supernatant is discarded.

6.  The sheet laminate according to any one of claims 1 to 5, wherein the gas-permeable non-porous layer has a basis weight of 10 g/m$^2$ or more.

7.  The sheet laminate according to any one of claims 1 to 6, wherein the gas-permeable non-porous layer is formed from one or more members selected from the group consisting of urethane resins and silicone resins.

8.  The sheet laminate according to any one of claims 1 to 7,
    wherein

    the sheet laminate is for supplying oxygen into a liquid by allowing oxygen supplied to the inside to permeate to the outside with the laminate immersed in the liquid so that its outermost layer is in contact with the liquid, and the oxygen supply performance to the liquid calculated by a method shown in the following oxygen supply test is 25 g/m$^2$ or more:

    Oxygen Supply Test
    an oxygen concentration measurement test is performed by pouring ion-exchanged water containing the following (a) into a sealed cubic vessel having a side length of 7 cm, with one of its vertical side surfaces being composed of the sheet laminate, and then continuously measuring the oxygen concentration in the sealed vessel while stirring the ion-exchanged water by rotation of a stirring bar for a stirrer, and the oxygen supply performance is calculated based on time-series data on the oxygen concentration measured in the oxygen concentration measurement test;

    (a) sodium sulfite added at a concentration of 100 mg/L, and anhydrous cobalt(II) chloride added at a concentration of 4 mg/L or more.

9.  The sheet laminate according to any one of claims 1 to 8,
    wherein

    the sheet laminate is for supplying oxygen into a liquid by allowing oxygen supplied to the inside to permeate to the outside with the laminate immersed in the liquid so that its outermost layer is in contact with the liquid, and the short-term withstanding pressure in the sheet laminate is 0.2 MPa or more.

10. The sheet laminate according to any one of claims 1 to 9,
    wherein

    the sheet laminate is for supplying oxygen into wastewater, and
    the number of through holes in a plate material through which water passes is 50 or less under the following water permeation measurement conditions:

    Water Permeation Measurement Conditions
    a water pressure application test is performed by applying a water pressure of 0.02 MPa or more and 1 MPa or less to the sheet laminate for 50 days in a state in which the sheet laminate faces a plate material with 813 through holes each having a diameter of 3 mm formed in a grid pattern with a pitch of 4 mm, and the number of through holes through which water passes is measured.

11. A method for producing a bag for a gas supply body disposed in a wastewater treatment apparatus by using the sheet laminate according to any one of claims 1 to 10, the method comprising heat-sealing the base material or base materials of one or more of the sheet laminates to produce a bag, thereby obtaining the bag, the base material or base materials being formed from a thermoplastic resin.

12. A gas supply body for water treatment, comprising a gas delivery layer and the sheet laminate according to any one of claims 1 to 10, which comprises one or more gas-permeable non-porous layers.

13. The gas supply body according to claim 12, wherein the leakage parameter X expressed by the following equation (2) is 1.9 or more when the gas supply body is immersed to an effective sheet height H (m),

$$X=E/(P\times A) \qquad \text{Equation (2)}$$

E: elasticity parameter (N/10 mm) of gas-permeable water-impermeable layer,
P: water pressure (kPa) applied to sheet, which is expressed by relationship $P=10\times H$, where H (m) is effective sheet height,
A: diameter (mm) of vent holes on surface of gas delivery layer.

14. A supply body unit comprising one or more gas supply bodies according to claim 12 or 13.

15. A wastewater treatment apparatus comprising the supply body unit according to claim 14.

Fig. 1

Fig. 2

Fig. 3

Fig. 4

Fig. 5

Gas flow paths (first direction)

Fig. 6

Fig. 7

```
                    ┌─────────────┐
                    │    START    │
                    └──────┬──────┘
                           │
                           ▼
       ┌───────────────────────────────────────────────┐
  S11  │ Arrange a gas delivery layer (corrugated      │
       │ cardboard) at a predetermined position        │
       └───────────────────────┬───────────────────────┘
                               │
                               ▼
       ┌───────────────────────────────────────────────┐
  S12  │ Form gas passage holes on the face liner and  │
       │ back liner of the gas delivery layer with a   │
       │ needle material                               │
       └───────────────────────┬───────────────────────┘
                               │
                               ▼
       ┌───────────────────────────────────────────────┐
  S13  │          Form a bag using sheet laminates     │
       └───────────────────────┬───────────────────────┘
                               │
                               ▼
       ┌───────────────────────────────────────────────┐
  S14  │  Insert the gas delivery layer into the bag   │
       │                    inside                      │
       └───────────────────────┬───────────────────────┘
                               │
                               ▼
                       ┌─────────────┐
                       │     END     │
                       └─────────────┘
```

EP 3 778 498 A1

Fig. 8

(a)

(b)

Fig. 9

Fig. 10

Fig. 11

Fig. 12

311

313

313a

313

312a

Fig. 13

Gas flow paths (first direction)

Fig. 14

Fig. 15

Fig. 16

Fig. 17

40   83   80   85

43

Fig. 18

40

43

Fig. 19

Fig. 20

Fig. 21

Fig. 22

Fig. 23

Fig. 24

## INTERNATIONAL SEARCH REPORT

| | International application No. |
|---|---|
| | PCT/JP2019/013528 |

**A. CLASSIFICATION OF SUBJECT MATTER**

Int.Cl. C02F3/06(2006.01)i, B01D53/22(2006.01)i, B01D63/08(2006.01)i, B01D69/02(2006.01)i, B01D69/06(2006.01)i, B01D71/54(2006.01)i, B01D71/70(2006.01)i, B32B5/18(2006.01)i, C02F3/10(2006.01)i

According to International Patent Classification (IPC) or to both national classification and IPC

**B. FIELDS SEARCHED**

Minimum documentation searched (classification system followed by classification symbols)

Int.Cl. C02F3/06, B01D53/22, B01D63/08, B01D69/02, B01D69/06, B01D71/54, B01D71/70, B32B5/18, C02F3/10

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2005-511303 A (3M INNOVATIVE PROPERTIES COMPANY) 28 April 2005, claims 1, 15, paragraphs [0012], [0017], [0022]-[0024], [0053], [0069], [0070], example 6, fig. 1, 7-9<br>& US 2003/0104192 A1, claims 1, 16, paragraphs [0012], [0017], [0041]-[0045], [0076], [0095], [0096], example 6, fig. 1, 7-9 & WO 2003/051782 A1<br>& EP 1453762 A1 | 1-10, 12-15<br>11 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26.04.2019 | 14.05.2019 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

International application No.

PCT/JP2019/013528

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2007-537734 A (AUSTRALIAN NUCLEAR SCIENCE AND TECHNOLOGY ORGANIZATION) 27 December 2007, entire text<br>& US 2008/0044850 A1, entire text & WO 2005/111193 A1 & EP 1751269 A1 | 1-15 |
| P, X | JP 2019-37974 A (SEKISUI CHEMICAL CO., LTD.) 14 March 2019, entire text<br>(Family: none) | 1-15 |

Form PCT/ISA/210 (continuation of second sheet) (January 2015)

**REFERENCES CITED IN THE DESCRIPTION**

**Patent documents cited in the description**

- JP 3743771 B
- JP 4680504 B